# EUROPÄISCHE PATENTSCHRIFT

(11) **EP 2 507 128 B1**
(45) Veröffentlichungstag und Bekanntmachung des Hinweises auf die Patenterteilung: **08.01.2014**
(21) Anmeldenummer: 10784309.6
(22) Anmeldetag: 29.11.2010
(51) Int. Cl.: B64C 1/20, B64D 9/00

(54) **FRACHTRAUMBODEN FÜR EINEN FRACHTRAUM EINES FLUGZEUGS, FUNKTIONSELEMENT ZUM EINBAU IN EINEN FRACHTRAUMBODEN, SEITENFÜHRUNG, FIXIERVORRICHTUNG ZUM EINLEITEN EINER ZUGLAST, VORRICHTUNG ZUM ABWERFEN VON FRACHTSTÜCKEN**
CARGO HOLD FLOOR FOR A CARGO HOLD OF AN AIRCRAFT, FUNCTIONAL ELEMENT FOR INSTALLING IN A CARGO HOLD FLOOR, SIDE GUIDE, FIXING DEVICE FOR INTRODUCING A TENSILE LOAD, AND DEVICE FOR EJECTING CARGO ITEMS
PLANCHER DE SOUTE D'AVION, ELEMENT FONCTIONNEL A INTEGRER DANS UN PLANCHER DE SOUTE, ELEMENT DE GUIDAGE LATERAL, DISPOSITIF DE FIXATION PERMETTANT D'INDUIRE UN EFFORT DE TRACTION ET DISPOSITIF PERMETTANT DE LARGUER DES ELEMENTS DE CARGAISON

(30) Priorität: 30.11.2009 DE 102009056302
(43) Veröffentlichungstag der Anmeldung: 10.10.2012
(73) Patentinhaber: Telair International GmbH, 83714 Miesbach (DE)
(72) Erfinder: HUBER, Thomas, 83727Schliersee (DE); HOLZNER, Richard, 83071 Stephanskirchen (DE)
(74) Vertreter: Bohnenberger, Johannes
(86) Internationale Anmeldenummer: PCT/EP2010/068382
(87) Internationale Veröffentlichungsnummer: WO 2011/064356

(56) Entgegenhaltungen:
- EP-A2- 1 481 894
- GB-A- 2 043 584
- US-A- 3 262 588
- US-A- 4 000 870
- US-A- 5 090 639

## Beschreibung

Die Erfindung betrifft einen Frachtraumboden für einen Frachtraum eines Flugzeugs, ein Funktionselement zum Einbau in einen Frachtraumboden, eine Seitenführung zur Anbringung an einem Frachtraumboden, eine Fixiervorrichtung zum Einleiten einer Zuglast in einen Frachtraumboden sowie eine Vorrichtung zum Abwerfen von Frachtstücken.

Ein solcher Frachtraumboden wird in der EP1482894 A1 offenbart, welche als nächster Stand der Technik angesehen wird.

Sowohl für zivile als auch für militärische Anwendungen ist es häufig notwendig, Flugzeuge zum Transport von Personen, aber auch von Frachtstücken, insbesondere Containern oder Paletten, zu verwenden. Die Frachträume der Flugzeuge werden hierfür mit Sitzen oder mit anderen Funktionseinheiten, z.B. Seitenführungselementen, Querriegeln, Rolleneinheiten, Befestigungselementen usw., bestückt, um die Frachträume möglichst effizient zu nutzen. Da für den Betreiber von Flugzeugen jede Minute, in der ein Flugzeug nicht eingesetzt werden kann, eine finanzielle Mehrbelastung bedeutet, ist es notwendig, die Umbaumaßnahmen zu optimieren, um die hierfür notwendige Zeit zu minimieren. Des Weiteren sollte der Frachtraum, insbesondere bei einer Verwendung für den Transport von Frachtstücken, derart ausgestaltet sein, dass Be- und Entladevorgänge möglichst schnell abgewickelt werden können. Die verwendeten Funktionseinheiten sollten derart einfach bedienbar sein, dass es zu keiner Fehlbedienung kommen kann, da diese zu einem zumindest zeitweisen Ausfall des Flugzeuges führen kann. Des Weiteren muss festgestellt werden, dass der Frachtraum, sowie alle darin verwendeten Funktionseinheiten extremen Umweltsituationen (z.B. hohe, niedrige Temperaturen, starke Temperaturunterschiede, Staub, Sand, Nässe usw.) ausgesetzt sind. Bezüglich der Bedienerfreundlichkeit muss des Weiteren berücksichtigt werden, dass nicht an allen Flugplätzen qualifiziertes Bedienungspersonal zur Verfügung steht. Besonders bei einem militärischen Einsatz der Flugzeuge, beispielsweise beim Abwurf von Equipment in Krisengebieten, muss damit gerechnet werden, dass das Bedienpersonal unter starkem Stress steht, so dass eine besonders einfache und sichere Bedienbarkeit der Funktionseinheiten gewünscht ist.

Es sollte offensichtlich sein, dass, unabhängig von der Nutzung (militärisch oder zivil), an die Sicherheit der Funktionseinheiten hohe Anforderungen gestellt werden, da das Lösen eines Sitzes oder das Verrutschen der Frachtstücke während des Fluges inakzeptabel sind. Die verwendeten Funktionseinheiten müssen nicht nur sicher sein, sondern auch leicht. Schwere Funktionseinheiten führen zu einem erhöhten Treibstoffverbrauch, verringern die maximale Ladekapazität und Reichweite des Flugzeugs.

Wie allgemein in der Industrie üblich, ist es für den Hersteller von Funktionseinheiten sowie von Frachtraumböden wesentlich, den notwendigen Aufwand und die nötigen Kosten zu minimieren. Der Herstellungsprozess sollte sich möglichst effizient gestalten lassen, so dass hochwertige Produkte bei möglichst niedrigen Kosten hergestellt werden können. Wichtige Faktoren für die effiziente Herstellung sind ein geringer Materialverbrauch, schnelle und einfache Fertigungsmöglichkeiten und eine effiziente (erstmalige) Montage.

Aus der DE 196 27 846 A1, der DE 197 20 224 A1 und der EP 0 649 802 A1 sind Frachtraumböden für den Frachtraum von Flugzeugen bekannt, bei denen Paneele oder dergleichen flächige (Frachtraum-) Bodenelemente zum Befestigen von Funktionselementen vorgesehen sind. Diese werden auf einem flachen Boden des Flugzeugs oder auf Floorbeams bzw. Bodenträgern oder dergleichen Stützelementen zum Abstützen montiert, wobei die Stützelemente mit einem Körper oder einer Haut des Flugzeuges verbunden sind. Die Herstellung dieser Frachtraumböden ist sehr aufwendig und teuer. Des Weiteren stellt die Montage der Funktionseinheiten auf oder an den Frachtraumböden ein großes Problem dar, da für jede Funktionseinheit eine individuelle Befestigung vorgesehen werden muss. Das Umrüsten eines hergestellten Frachtraumbodens ist aufwendig und kostenintensiv.

Der Erfindung liegt daher die Aufgabe zu Grunde, einen Frachtraumboden für einen Frachtraum eines Flugzeuges bereitzustellen, der einfach herstellbar, vielseitig verwendbar und leicht zu bestücken ist.

Diese Aufgabe wird durch den Frachtraumboden nach Anspruch 1 gelöst.

Insbesondere wird die Aufgabe durch einen Frachtraumboden für einen Frachtraum eines Flugzeuges gelöst, der eine Vielzahl von Paneelen zur Bildung des Frachtraumbodens umfasst. Die Paneele haben Schienenabschnitte zur Bildung von sich über mehrere Profilpaneele erstreckende Schienen, die in einer Längsrichtung des Flugzeuges angeordnet sind, wobei die Schienenabschnitte Vollsitzschienenabschnitte und Teilsitzschienenabschnitte zur Befestigung von Frachtladekomponenten, insbesondere von Querriegeln oder Seitenführungselementen, umfassen.

Anmeldungsgemäß soll unter einer Sitzschiene eine Lochschiene mit daran angeordneten Löchern verstanden werden, die sich unter anderem zur Verankerung von Sitzen in einem Flugzeug eignet. Ein Vollsitzschienemabschnitt umfasst über die gesamte Länge des Abschnitts regelmäßig angeordnete Löcher zur Aufnahme von Sitzen oder anderen Funktionseinheiten. Bei einem Teilsitzschienenabschnitt ist die Schiene nicht über ihre gesamte Länge mit entsprechenden Löchern bestückt. Beispielsweise können über einen relativ großen Abschnitt nur wenige Löcher vorgesehen sein, die in regelmäßigen oder unregelmäßigen Abständen aufeinander folgen. Die Teilsitzschienenabschnitte können mitunter so ausgebildet sein, dass sie zur Bestückung mit Sitzen nicht wirklich geeignet sind. Vorzugsweise sind die Teilsitzschienenabschnitte zur Aufnahme von anderen Funktionseinheiten, z.B. Querriegel oder Längsriegel, geeignet.

Ein wesentlicher Gedanke der vorliegenden Erfindung besteht also darin, einen Frachtraumboden herzustellen, der über eine Vielzahl von sich in Längsrichtung des Flugzeuges erstreckende Schienen verfügt, die je nach Anwendungsfall mit Sitzen oder anderen Funktionseinheiten bestückt werden können. Hierbei handelt es sich nicht nur um bekannte Vollsitzschienenabschnitte, sondern auch um Teilsitzschienenabschnitte, die möglicherweise ausschließlich dazu verwendet werden können, Frachtladekomponenten, z.B. Seitenführungen, Querriegel, Rolleneinheiten, Befestigungselemente oder allgemeine Führungselemente, aufzunehmen. Somit dienen diese Schienen allgemein zur Befestigung von Funktionseinheiten. Auf das Vorsehen von zusätzlichen Bohrungen, um einzelne Funktionseinheiten an bestimmten Positionen zu befestigen, kann verzichtet werden. Die Herstellung eines vollfunktionsfähigen Frachtraums mit entsprechender Bestückung gestaltet sich sehr einfach. Der Frachtraum kann jederzeit umgerüstet werden.

Die Paneele können als Strangpresspaneele ausgebildet sein. Im Strangpressverfahren lassen sich die Paneele sehr einfach und effizient herstellen. Die Schienenabschnitte können hierbei ohne zusätzlichen Aufwand in den Paneelen vorgesehen werden. Somit lassen sich die Paneele sowie entsprechende Befestigungsvorrichtungen für Funktionseinheiten in einem Arbeitsschritt herstellen. Der Frachtraumboden kann in Querrichtung (Y-Richtung) des Flugzeuges maximal 10, insbesondere maximal 8, insbesondere maximal 6, insbesondere maximal 4, Paneele zur Bildung des Frachtraumbodens umfassen. Es ist vorteilhaft, wenn möglichst breite nebeneinander angeordnete Extrusionsprofile den Frachtraumboden ausbilden.

Der Frachtraumboden kann mindestens zwei Schienen mit einem derart geringen Abstand zueinander umfassen, dass sich in diesen mindestens eine Frachtladekomponente zur Aufnahme von in Querrichtung des Flugzeugs wirkenden Kräften befestigen lässt. Die Schienen lassen sich dann besonders sinnvoll als Befestigungspunkte für Frachtladekomponenten verwenden, wenn das entsprechende Element in mehreren Schienen verankerbar ist. Somit lassen sich besonders Kräfte, die in Querrichtung des Flugzeugs wirken, vorteilhaft einleiten. Eine Beschädigung der Schienen bei einem Auftreten von starken Kräften wird vermieden. Vorzugsweise können die Schienenpaare mit Abständen kleiner als 30 Zentimeter oder kleiner als 20 Zentimeter nebeneinander angeordnet werden. Es ist denkbar, nicht nur zwei sondern mehrere Schienen, z.B. 3 oder 4, mit geringem Abstand nebeneinander vorzusehen und in diesen eine Funktionseinheit schienenübergreifend zu verankern.

Der Frachtraumboden kann eine Vielzahl von Schienen umfassen, die paarweise derart voneinander beabstandet angeordnet sind, dass sich in diesen Frachtladekomponenten zur Fixierung von Frachtstücken mit normierten Breiten, insbesondere mit einer Breite von ca. 123,5 cm oder 143,8 cm oder 174,3 cm oder 317,5 cm befestigen lassen. Es ist üblich, normierte Container mit 88 Zoll und 96 Zoll Abmessungen zu verwenden. Vorzugsweise werden die Schienen derart angeordnet, dass diese genormten Container besonders einfach befestigt werden können.

Der Frachtraumboden kann zusätzliche Vollsitzschienenabschnitte und/oder Teilsitzschienenabschnitte zur Aufnahme von Frachtladekomponenten und zur Verwendung als Befestigungspunkte umfassen. Diese zusätzlichen Vollsitzschienenabschnitte und Teilsitzschienenabschnitte können in beliebiger Ausrichtung angeordnet sein und die Funktionalität - flexible Bestückung des Frachtraums - erhöhen. Es ist denkbar, Vollsitzschienen- und/oder Teilsitzschienenabschnitte vorzusehen, die sich nicht über die gesamte Länge oder Breite eines Paneels erstrecken, sondern eine deutlich geringere Länge haben. Beispielsweise können Vollsitzschienenabschnitte oder Teilsitzschienenabschnitte mit einer geringen Länge, insbesondere kleiner als 50 cm, insbesondere kleiner als 30 cm, insbesondere kleiner als 10 cm vorgesehen werden. Vorzugsweise werden diese Vollsitzschienenabschnitte oder Teilsitzschienenabschnitte zur Verankerung von Frachtladekomponenten verwendet.

Die Paneele können Ausnehmungen zur Aufnahme von Montageelementen, insbesondere mit zusätzlichen Sitzschienenabschnitten, umfassen. Vorzugsweise sind diese Ausnehmungen zumindest teilweise über Querträgern des Frachtraumbodens ausgebildet. Für verschiedene Frachtladekomponenten z.B. für Rolleneinheiten ist es vorteilhaft, großflächige Ausnehmungen vorzusehen, in denen diese vorzugsweise überfahrbar montiert werden können. Es ist vorteilhaft, wenn diese Montageelemente mit zusätzlichen Vollsitzschienen und/oder Teilsitzschienenabschnitten bestückt sind, um weitere Funktionseinheiten zu montieren. Theoretisch ist es möglich, die Ausnehmungen ausschließlich dafür zu verwenden, um vorteilhaft ausgerichtete Vollsitzschienen und/oder Teilsitzschienenabschnitte im Frachtraumboden bereitzustellen. Somit müssen verwendete Strangpressprofile nur sehr geringfügig nachbearbeitet werden, wobei eine Vielzahl von Verankerungsmöglichkeiten bereitgestellt wird.

Die Paneele können Ausnehmungen zur Aufnahme von versenkbaren und/oder verschwenkbaren Funktionselementen, insbesondere Rolleneinheiten, umfassen. Derartige Supportelemente werden nachfolgend noch näher beschrieben.

Die Ausnehmungen können zur Beförderung von Frachtstücken, insbesondere Containern und/oder Paletten, mittels der Supportelemente in einem Raster angeordnet sein.

Der Frachtraumboden kann im Wesentlichen symmetrisch zu einer, insbesondere mittig, in einer X-Y-Ebene des Flugzeugs verlaufenden Ebene ausgebildet sein. Es ist vorteilhaft, wenn die einzelnen Paneele nur geringfügig individualisiert sind, so dass der Fertigungsaufwand minimiert wird. Mehrere im Wesentlichen identische Paneele können nebeneinander zur Bildung des Frachtraumbodens angeordnet werden.

Der Frachtraumboden kann mindestens eine Konfiguration haben, die derart plan ist, dass dieser mit Fahrzeugen befahrbar ist.

Die Paneele können als Hohlprofile mit mehreren Kammern ausgebildet sein, wobei die Kammern zur Bildung eines sich über mehrere Paneele erstreckenden Zu- und/oder Ableitungssystem in den Paneelen angeordnet sind. Das Zuleitungssystem kann zum Anschluss an eine Warmluftquelle, insbesondere an eine Ausleitung einer Antriebsturbine des Flugzeugs, ausgebildet sein. Es ist vorteilhaft, wenn die einzelnen aneinandergereihten Paneele, die den Frachtraumboden ausbilden, ein Leitungssystem bereitstellen, das für Versorgungs- und Entsorgungsaufgaben genutzt werden kann. Beispielsweise kann über das Leitungssystem der Frachtraumboden beheizt werden. Alternativ können Kabel in den Kammern geführt werden.

Der Frachtraumboden kann mindestens eine Schiene zur Aufnahme einer Seitenführung am Rand des Frachtraumbodens umfassen. Üblicherweise sind die Seitenführungen fest mit dem Frachtraumboden verbunden. Die seitlichen Schienen am Frachtraumboden können dafür sorgen, dass Seitenführungen nachträglich am Frachtraumboden montiert werden können. Somit lässt sich der Frachtraumboden flexibel, gestalten.

Aus der DE 196 27 846 C2 ist es bekannt, Funktionselemente zum Einbau in ein Flugzeug bereitzustellen, die einen Wendekörper mit mindestens zwei Funktionsflächen, die voneinander verschiedene, an sich bekannte Funktionseinheiten, wie aktive oder passive Rolleneinheiten, Riegelelemente, Befestigungsschienen, Laufflächen oder dergleichen, aufweisen. Des Weiteren sind Wendekörperhalterungen bekannt, die derart ausgebildet und in eine Ausnehmung des Flugzeugdecks montiert sind, dass der Wendekörper in der Ausnehmung aufgenommen und wahlweise mit einer seiner beiden Funktionsflächen das Flugzeugdeck bildend oder mitgestaltend fixierbar ist.

Gemäß der DE 196 27 846 C2 wird diese Art von Funktionselementen ausschließlich dazu verwendet, um unterschiedliche Funktionseinheiten bereitzustellen. Die Funktionseinheiten werden derart gewählt und angeordnet, dass der Frachtraumboden, in dem diese eingesetzt werden, für einen bestimmten Zweck verwendet werden kann. Es ist äußerst schwierig, einen entsprechenden Frachtraumboden umzugestalten. So müssen für das Vorsehen von weiteren Frachtladekomponenten entweder die Wendekörper ausgetauscht oder zusätzliche Befestigungen vorgesehen werden. Allgemein stellt sich bei der Herstellung von Frachtraumböden das Problem, dass hier das Befestigen der Frachtladekomponenten aufwendig ist. Das Bereitstellen entsprechender Bohrungen oder das Verschweißen der Frachtladekomponenten mit dem Frachtraumboden benötigt viel Zeit. Für eine flexible Befestigung ist eine Vielzahl von Befestigungspunkten wünschenswert.

Es stellt sich daher ausgehend von der DE 196 27 846 C2 auch die Aufgabe, ein Funktionselement zum Einbau in einen Frachtraumboden mit einem Frachtraumdeck bereitzustellen, das eine flexiblere Gestaltung des Frachtraumbodens ermöglicht. Des Weiteren soll ein entsprechender Funktionselementesatz bereitgestellt werden.

Die Aufgabe wird durch einen weiteren Erfindungskomplex der Anmeldung gelöst. Insbesondere wird die Aufgabe gelöst durch ein Funktionselement zum Einbau in einen Frachtraumboden mit einem Frachtraumdeck, umfassend:
- einen Wendekörper mit verschiedenen Funktionseinheiten, z.B. aktiven oder passiven Rolleneinheiten, Riegelelementen, Befestigungsschienen, Laufflächen,
- mindestens eine Wendekörperhalterung, die in eine Ausnehmung des Frachtraumbodens montierbar ist, um den Wendekörper derart verschwenkbar zu lagern, dass der Wendekörper in verschiedenen Funktionspositionen festsetzbar ist, wobei der Wendekörper derart ausgebildet ist, dass in jeder Funktionsposition eine andere Funktionseinheit das Frachtraumdeck abschnittsweise bildet oder dieses mitgestaltet, dadurch gelöst, dass mindestens eine Wendekörperhalterung zur Verankerung mindestens einer Frachtladekomponente, z.B. eines Befestigungselements, eines Führungselements oder dergleichen, an dem Frachtraumboden ausgebildet ist.

Ein wesentlicher Aspekt der vorliegenden Erfindung besteht also darin, die mindestens eine Wendekörperhalterung zur Verankerung mindestens einer Frachtladekomponente zu verwenden. Somit können in Aussparungen des Frachtraumbodens der verschwenkbare Wendekörper vorgesehen werden, wobei zusätzliche Fixierpunkte für weitere Frachtladekomponenten bereitgestellt werden. Diese Bereitstellung von Fixierpunkten ist besonders bei der Verwendung von Strangpressprofilen zur Herstellung des Frachtraumbodens vorteilhaft.

Die Wendekörperhalterung kann mindestens einen Sitzschienenabschnitt, insbesondere einen Vollsitzschienenabschnitt und/oder einen Teilsitzschienenabschnitt zur Verankerung der mindestens einen Frachtladekomponente umfassen. Es ist vorteilhaft, wenn zwischen der Wendekörperhalterung und der Frachtladekomponente eine einfach lösbare Verbindung herstellbar ist, so dass sich die Frachtladekomponente einfach montieren und demontieren lässt. Es sind Frachtladekomponenten bekannt, die sich in entsprechenden, vorzugsweise normierten, Voll- und/oder Teilsitzschienenabschnitten leicht abnehmbar verankern lassen.

Der Wendekörper kann eine Rolleneinheit und eine Lauffläche als Funktionseinheiten umfassen. Somit kann der Frachtraumboden einerseits zur Beförderung von Frachtstücken verwendet werden, andererseits frei begehbar sein.

Die Rolleneinheit kann mindestens eine um eine Rollendrehachse rotierbare Rolle umfassen und derart angeordnet sein, dass die Rollendrehachse der Rolle gegenüber einer von der Lauffläche aufgespannten Ebene gekippt ist und insbesondere einen Schnittwinkel kleiner als 60° hat. Durch ein Neigen der Rolleneinheit gegenüber der Lauffläche lassen sich bei gleichbleibender Rollendicke Rolleneinheiten schaffen, die eine größere Breite haben. Hierbei bleibt die Verschwenkbarkeit des Wendekörpers unbeeinflusst.

Die Lauffläche kann ein in dieser versenkbares Befestigungselement, insbesondere mit einem Befestigungsring, umfassen (z.B. eine Fixiervorrichtung gemäß Anspruch 1 des Anspruchssatzes 5).

Der mindestens eine Wendekörper kann derart ausgebildet sein, dass die Wendekörperhalterung mit dem Frachtraumboden, insbesondere mit einer Frachtraumunterseite des Frachtraumbodens verbindbar ist. Vorzugsweise handelt es sich bei dieser Verbindung um eine Schraubverbindung. Somit lässt sich die Wendekörperhalterung optimal in den Frachtraumboden integrieren. Der Wendekörper kann einen Wendekörperriegel zur Fixierung des Wendekörpers gegenüber dem Frachtraumboden in den einzelnen Funktionspositionen umfassen. Der Wendekörperriegel ist vorzugsweise derart angeordnet und ausgestaltet, dass dieser in den Funktionspositionen von einer Frachtraumdeckoberseite zugänglich ist.

Die mindestens eine Wendekörperhalterung kann zum zumindest teilweisen Halten von zwei Wendekörpern ausgebildet sein. Somit ist es möglich, zwei Wendekörper an einer Wendekörperhalterung zumindest teilweise zu lagern.

Die eingangs genannte Aufgabe wird ebenfalls gelöst durch einen Funktionselementesatz mit einer Vielzahl von den beschriebenen Funktionselementen, wobei der Funktionselementesatz n+1 Wendekörperhalterungen zur Halterung von n Wendekörpern umfasst, wobei die Wendekörper und Wendekörperhalterungen abwechselnd in einer Reihe angeordnet sind, wobei zumindest die Wendekörperhalterungen, die sich zwischen zwei Wendekörpern befinden, derart ausgebildet sind, dass sie die zwei benachbarten Wendekörper halten, wobei jeweils ein Wendekörper von zwei Wendekörperhalterungen gehalten wird. Somit kann eine Vielzahl von Wendekörpern mit möglichst geringem Aufwand gehalten und im Frachtraumboden verankert werden.

Die Wendekörper können hierbei so ausgelegt sein, dass diese einzeln rotiert und verriegelt werden können. Jedoch kann es auch sinnvoll sein, die Wendekörper in Gruppen derart zusammenzufassen, dass diese als eine Einheit rotier- und/oder verriegelbar sind, so dass sich ganze Abschnitte, z.B. ein kompletter Stellplatz für eine Palette, schnell umrüsten lassen.

Aus der US 4,457,649 ist eine Seitenführung bekannt, die sich in zwei Sitzschienen verankern lässt. Diese Seitenführung benötigt sehr viel Platz und lässt sich nicht konfigurieren. Des Weiteren sind die einzelnen daran vorgesehenen Führungselemente nicht geeignet, Frachtstücke zuverlässig in eine Längsrichtung des Flugzeuges zu führen und diese zu fixieren.

Ausgehend von diesem Stand der Technik ist es auch Aufgabe der vorliegenden Erfindung, eine Seitenführung zur Anbringung an einem Frachtraumboden eines Flugzeugs bereitzustellen, wobei diese Seitenführung sicher und einfach verwendbar ist.

Diese Aufgabe wird durch einen weiteren Erfindungskomplex der Anmeldung gelöst.

Insbesondere wird die Aufgabe durch eine Seitenführung zur Anbringung an einem Frachtraumboden eines Flugzeuges zur Führung von Frachtstücken, insbesondere Containern und/oder Paletten, in Längsrichtung des Flugzeuges gelöst, wobei die Seitenführung umfasst:
- mindestens ein Fußelement zum Einleiten der wirkenden Kräfte in den Frachtraumboden, wobei das Fußelement Fixierelemente zum Befestigen der Seitenführung in mindestens einer Sitzschiene hat, und
- mindestens ein am Fußelement angeordnetes Führungselement mit mindestens einer Führungsfläche zum Führen der Ladung, wobei das Führungselement zumindest teilweise abnehmbar mit dem Fußelement verbunden ist.

Ein wesentlicher Gedanke der vorliegenden Erfindung besteht also darin, das Führungselement abnehmbar mit dem Fußelement zu verbinden, um so einen Frachtraumboden einfach mit einem entsprechenden Führungselement zu bestücken. Die Abnehmbarkeit des Führungselements kann dazu führen, dass der Frachtraumboden im abgenommenen Zustand begeh- und/oder befahrbar ist. Bei der erfindungsgemäßen Seitenführung kann es sich auch um eine Funktionseinheit handeln, die mittig oder an einer beliebigen Stelle auf dem Frachtdeck angeordnet ist, um die Frachtstücke in Längsrichtung zu führen (z.B. "center guide").
Die Seitenführung können mindestens zwei Fußelemente und das Führungselement mindestens eine Führungsschiene umfassen, die an den Fußelementen befestigt ist. Somit kann eine Seitenführung mit einer großflächigen Führungsschiene bereitgestellt werden, wobei sich die Führungsschiene einfach montieren und demontieren lässt. Im demontierten Zustand kann wie bereits erwähnt der Frachtraumboden mit der Seitenführung begeh- oder befahrbar sein. Somit lässt sich der Frachtraumboden im demontierten Zustand mit beliebigen Ladegegenständen, beispielsweise auch mit Fahrzeugen, beladen.

Mindestens ein Fixierelement kann einen Schnellspannverschluss zum Festsetzen des Fixierelements in der Sitzschiene umfassen. Somit lässt sich das Fußelement abnehmbar am Frachtraumboden montieren. Der Schnellspannverschluss sorgt für eine schnelle und einfache Montage.

Die Führungsschiene kann einen mit einem Randbereich mindestens eines Frachtstücks zusammenwirkenden Vorsprung zum Fixieren des Frachtstücks in eine Vertikalrichtung des Flugzeuges umfassen. Somit kann die Seitenführung nicht nur zum Führen der Frachtstücke sondern auch zu deren Befestigung verwendet werden.

Die Seitenführung kann mindestens ein Riegelelement mit einer Riegelnase umfassen, das derart angeordnet und ausgebildet ist, dass die Riegelnase aus einer Ruhestellung in eine Verriegelungsstellung zur Fixierung eines Frachtstücks im Führungselement bringbar ist. Das Riegelelement kann dazu verwendet werden, die Frachtstücke, die mittels der Seitenführung an ihre Position geführt werden, nach der Einnahme dieser Position auch in eine Längsrichtung des Flugzeuges zu fixieren. D.h. eine Bewegung der Ladung in Richtung des Hecks oder des Bugs des Flugzeugs wird unterbunden.

Das Riegelelement kann derart am Führungselement angeordnet und ausgebildet sein, dass die Riegelnase in einer Ebene senkrecht zu einer Horizontalführungsfläche des Führungselements zwischen der Ruhestellung und der Verriegelungsstellung verschwenkbar ist. Vorzugsweise wird die Führungsaufgabe der Seitenführung in Längsrichtung des Flugzeuges durch eine Vertikalführungsfläche wahrgenommen, die sich in vertikale Richtung entlang der Längsrichtung des Flugzeuges erstreckt. Bei einer vorteilhaften Anordnung des Riegelelements lässt sich die Riegelnase senkrecht zu einer Horizontalführungsfläche, die den Boden der Frachtstücke zumindest abschnittsweise aufnimmt, verschwenken. Vorzugsweise erfolgt eine Fixierung der Frachtstücke, indem die Riegelnase von unten in die Seitenführung eingreift. Häufig sind die Riegelelemente mit der darin enthaltenen Mechanik relativ groß, so dass diese ausreichend Platz benötigen. Der Frachtraum kann sehr vorteilhaft ausgestaltet werden, wenn die Riegelelemente, vorzugsweise leicht schräg, unterhalb und nicht seitlich zu den Führungsschienen gelagert sind, da der Frachtraum über die gesamte Breite genutzt werden kann.

Die Riegelnasen des Riegelelements können zumindest zweiteilig mit einem ersten und einem zweiten Riegelnasenelement ausgebildet sein, die jeweils mit einer Anschlagfläche mit einem Anschlagrand einer Eingriffsausnehmung der Frachtstücke in Eingriff bringbar sind, wobei die Riegelnasenelemente derart bewegbar gelagert sind, dass sich beide Anschlagflächen beim Bewegen von der Verriegelungsstellung in die Ruhestellung von den Anschlagrändern entfernen. Ein wesentlicher Punkt dieses Aspekts der Erfindung besteht darin, dass die Anschlagflächen, die mit einem Anschlagrand der Eingriffsausnehmung der Frachtstücke in Eingriff bringbar sind, beim Entfernen der Riegelnasenelemente aus den Eingriffsausnehmungen sich von den gegenüberliegenden Anschlagrändern entfernen. Der von den Riegelnasenelementen beanspruchte Platz verringert sich also beim Versenken und somit wird die Gefahr des Verklemmens der Riegelnase in der Eingriffsausnehmung deutlich verringert. Auch wenn das Frachtstück eine Kraft auf die Riegelnase ausübt, kann diese unter geringem Kraftaufwand eingefahren werden. Dies ist besonders vorteilhaft, wenn die Frachtstücke schnell und zuverlässig entladen werden müssen (z.B. Abwurf während des Flugs).

Die Riegelnasenelemente können derart gegenläufig miteinander verbunden sein, dass beim Bewegen eines Riegelnasenelements das andere Riegelnasenelement mitgenommen wird. Dadurch wird sichergestellt, dass beide Riegelnasenelemente einer Riegelnase sich stets gleichzeitig und mehr oder weniger synchron bewegen. Des Weiteren kann die Riegelnase mechanisch wesentlich einfacher ausgestaltet sein, da sich die Einzelnen Riegelnasenelemente gegenseitig stützen und nur eines der Riegemasenetemente zum Verändern der Position der Riegelnase betätigt werden muss.

Das Riegelelement kann eine Feststellvorrichtung zum Feststellen der Riegelnase in der Verriegelungsstellung und/oder der Ruhestellung umfassen. Durch diese Feststellvorrichtung wird die unbeabsichtigte Bewegung der Riegelnase aus einer Stellung in die jeweils andere verhindert. In einer Ausführungsform umfasst die Feststellvorrichtung mindestens ein Feststellfederelement zum Einrasten der Feststellvorrichtung in der Verriegelungsstellung und/oder Ruhestellung der Riegelnase. Dies hat unter anderem den Vorteil, dass die Riegelnase ohne weiteres Zutun in der Verriegelungsstellung und/oder Ruhestellung festgestellt werden kann. Vorzugsweise ist die Seitenführung zur Anbringung an der Seite des Frachtraumbodens ausgebildet.

Aus der EP 1 406 813 B1 ist eine Seitenführung bekannt, die in einen Frachtraum eingebaut ist, um Frachtstücke entlang der Längsrichtung des Flugzeugs zu führen. Die Seitenführung umfasst Rolleneinheiten, die die Führung der Frachtstücke erleichtern sollen. Ein entsprechend ausgestatteter Frachtraumboden lässt sich nur schwer derart umbauen, dass er für andere Verwendungszwecke eingesetzt werden kann. Insbesondere beim Befahren des Frachtraumbodens mit Fahrzeugen oder beim Begehen des Frachtraumbodens erweisen sich die Seitenführungen als äußerst störend. So kann ein entsprechend ausgestatteter Frachtraum weder zum Transport von Personen noch von Fahrzeugen genutzt werden.

Es ist daher auch Aufgabe der vorliegenden Erfindung, eine Seitenführung zur Anbringung an einem Frachtraumboden eines Flugzeugs bereitzustellen, die eine flexible Konfiguration des Frachtraumbodens ermöglicht. Des Weiteren soll ein entsprechendes Frachtraumbodenelement mit einer entsprechenden Seitenführung bereitgestellt werden.

Die Aufgabe wird durch einen weiteren Erfindungskomplex gelöst.

Insbesondere wird die Aufgabe durch eine Seitenführung zur Anbringung an einem Frachtraumboden eines Flugzeugs zur Führung von Frachtstücken in Längsrichtung des Flugzeuges gelöst, wobei die Seitenführung umfasst:
- mindestens ein Fußelement zum Einleiten der wirkenden Kräfte in den Frachtraumboden,
- mindestens ein am Fußelement angeordnetes Führungselement zum Führen der Frachtstücke,
- mindestens ein Riegelelement mit einer Riegelnase, das derart angeordnet und ausgebildet ist, dass die Riegelnase aus einer Ruhestellung in eine Verriegelungsstellung zur Fixierung eines Frachtstücks im Führungselement bringbar ist, wobei das Führungselement gelenkig an dem mindestens einen Fußelement angeordnet ist, um das Führungselement zwischen einer Führungsposition zum Führen der Frachtstücke und einer Aufbewahrungsposition zu verschwenken, wobei das Führungselement und das Fußelement in der Aufbewahrungsposition eine im Wesentlichen plane, begehbare und/oder befahrbare Fläche ausbilden.

Ein wesentlicher Gedanke der vorliegenden Erfindung besteht also darin, dass das Führungselement zwischen der Führungsposition und der Aufbewahrungsposition verschwenkbar ist, wobei das Führungselement und das Fußelement in der Aufbewahrungsposition eine im Wesentlichen plane, begehbare und/oder befahrbare Fläche ausbilden. Somit steht das Führungselement im eingeklappten und/oder versenkten Zustand nicht in den Frachtraum hinein. Ein weiterer Vorteil besteht darin, dass das einklappbare bzw. versenkbare Führungselement ein Riegelelement zur Fixierung der Frachtstücke in Längsrichtung aufweist. Bei der erfindungsgemäßen Seitenführung kann es sich auch um eine Funktionseinheit handeln, die mittig oder an einer beliebigen Stelle auf dem Frachtdeck angeordnet ist, um die Frachtstücke in Längsrichtung zu führen (z.B. "center guide").

Das Führungselement kann eine Vertikalführungsfläche und eine Horizontalführungsfläche umfassen, wobei das mindestens eine Riegelelement derart am Führungselement angeordnet und ausgebildet ist, dass die Riegelnase in der Verriegelungsstellung im Wesentlichen parallel zur Vertikalführungsfläche über die Horizontalführungsfläche und/oder senkrecht zur Horizontalführungsfläche hinausragt. Die Vertikalführungsfläche erstreckt sich vorzugsweise vertikal zum Frachtraumboden entlang der Längsachse des Flugzeugs und ist zum Führen der Frachtstücke in diese Längsrichtung ausgebildet. Die Horizontalführungsfläche kann rechtwinklig zur Vertikalführungsfläche ausgebildet sein. Vorzugsweise ist die Horizontalführungsfläche gegenüber dem Frachtdeck oder Frachtraumboden leicht geneigt und bildet eine Rampe zur Aufnahme des Bodens der Frachtstücke. Seitlich an die Seitenführung herangefahrene Frachtstücke werden sicher an die Vertikalführungsfläche herangeführt. Aufgrund der rampenförmigen Ausbildung können sich die Frachtstücke nicht verklemmen. Wenn man das Riegelelement mit seiner Mechanik leicht schräg zur Vertikalführungsfläche anordnet, kann die Seitenführung auch in vertikale Richtung relativ kompakt ausgestaltet werden. Das Riegelelement kann derart ausgestaltet und angeordnet sein, dass dieses von unten, d.h. von unterhalb der Horizontalführungsfläche, in das Führungselement eingreift.

Bei einer vorteilhaften Anordnung des Riegelelements lässt sich die Riegelnase in einer Ebene senkrecht zur Horizontalführungsfläche verschwenken. Vorzugsweise erfolgt eine Fixierung der Frachtstücke, indem die Riegelnase von unten in die Seitenführung eingreift. Häufig sind die Riegelelemente mit der darin enthaltenen Mechanik relativ groß, so dass diese ausreichend Platz benötigen. Der Frachtraum kann sehr vorteilhaft ausgestaltet werden, wenn die Riegelelemente unterhalb und nicht seitlich zu den Führungsschienen gelagert sind, da der Frachtraum über die gesamte Breite genutzt werden kann.

Das Führungselement kann einen Führungsvorsprung umfassen, der bei der Führung der Frachtstücke in eine dafür vorgesehene Nut der Frachtstücke eingreift oder einen Sockel der Frachtstücke umgreift, um Kräfte in Vertikalrichtung bezüglich des Frachtraumbodens aufzunehmen. Somit dient die Seitenführung nicht nur zum Führen der Frachtstücke sondern auch zur Befestigung dieser am Frachtraumboden. Der Führungsvorsprung kann verhindern, dass die Frachtstücke nach oben (Z-Richtung) aus der Seitenführung herausgehoben werden.

Das Führungselement kann eine Deckelfläche und mindestens ein Stützelement umfassen, wobei das Stützelement derart ausgebildet ist, dass in der Aufbewahrungsposition die Deckelfläche zum Bilden zumindest eines Abschnitts der begehbaren und/oder befahrbaren Fläche gegenüber dem Fußelement und/oder dem Frachtraumboden abstützt. In der Aufbewahrungsposition bildet also die Deckelfläche zumindest abschnittsweise die begehbare oder befahrbare Fläche aus. Hierbei wird die Deckelfläche durch das Stützelement abgestützt, das die auf die Deckelfläche wirkenden Kräfte in dem Frachtraumboden oder in das Flugzeug einleitet. Somit gestaltet sich die erfindungsgemäße Seitenführung sehr robust.

Das mindestens eine Stützelement und/oder ein für das Verschwenken des Führungselements vorgesehenes Drehgelenk können derart ausgebildet sein, dass das Führungselement gegenüber der Führungsposition zur Einnahme der Aufbewahrungsposition um weniger als 90 Grad verschwenkbar ist.

Die Deckelfläche kann mit der Vertikalführungsfläche in Wirkverbindung stehen, und zum Einleiten der auf die Vertikalführungsfläche wirkenden Kräfte in das Fußelement und/oder in den Frachtraumboden gegenüber der Vertikalführungsfläche geneigt sein. Die Deckelfläche bildet also eine Art Querverstrebung, die in der Führungsposition - die Vertikalführungsfläche steht im Wesentlichen senkrecht zum Frachtraumboden - die auf die Vertikalführungsfläche wirkenden Kräfte unter einem Winkel in das Fußelement und/oder den Frachtraumboden einleitet. Somit kann die Seitenführung wesentlich robuster ausgestaltet werden und in Querrichtung (Y-Richtung) größere Kräfte aufnehmen.

Die Riegelnase des Riegelelements kann zumindest zweiteilig mit einem ersten und einem zweiten Riegelnasenelement ausgebildet sein, die jeweils mit einer Anschlagfläche mit einem Anschlagrand einer Eingriffsausnehmung der Frachtstücke in Eingriff bringbar sind, wobei die Riegelnasenelemente derart bewegbar gelagert sind, dass sich beide Anschlagflächen beim Bewegen von der Verriegelungsstellung in die Ruhestellung von den Anschlagrändern entfernen. Ein wesentlicher Punkt dieses Aspekts der Erfindung besteht darin, dass die Anschlagflächen, die mit einem Anschlagrand der Eingriffsausnehmung der Frachtstücke in Eingriff bringbar sind, beim Entfernen der Riegelnasenelemente aus den Eingriffsausnehmungen sich von den gegenüberliegenden Anschlagrändern entfernen. Der von den Riegelnasenelementen beanspruchte Platz verringert sich also beim Versenken und somit wird die Gefahr des Verklemmens der Riegelnase in der Eingriffsausnehmung deutlich verringert. Auch wenn das Frachtstück eine Kraft auf die Riegelnase ausübt, kann diese unter geringem Kraftaufwand eingefahren werden. Dies ist besonders vorteilhaft, wenn die Frachtstücke schnell und zuverlässig entladen werden müssen (z.B. Abwurf während des Flugs).

Die Riegelnasenelemente können derart gegenläufig miteinander verbunden sein, dass beim Bewegen eines Riegelnasenelements das andere Riegelnasenelement mitgenommen wird. Dadurch wird sichergestellt, dass beide Riegelnasenelemente einer Riegelnase sich stets gleichzeitig und mehr oder weniger synchron bewegen. Des Weiteren kann die Riegelnase mechanisch wesentlich einfacher ausgestaltet sein, da sich die einzelnen Riegelnasenelemente gegenseitig stützen und nur eines der Riegelnasenelemente zum Verändern der Position der Riegelnase betätigt werden muss.

Das Riegelelement kann eine Feststellvorrichtung zum Feststellen der Riegelnase in der Verriegelungsstellung und/oder der Ruhestellung umfassen. Durch diese Feststellvorrichtung wird die unbeabsichtigte Bewegung der Riegelnase aus einer Stellung in die jeweils andere verhindert. In einer Ausführungsform umfasst die Feststellvorrichtung mindestens ein Feststellfederelement zum Einrasten der Feststellvorrichtung in der Verriegelungsstellung und/oder Ruhestellung der Riegelnase. Dies hat unter anderem den Vorteil, dass die Riegelnase ohne weiteres Zutun in der Verriegelungsstellung und/oder Ruhestellung festgestellt werden kann.

Die Seitenführung kann mindestens einen Bewegungshebel oder einen Anschluss für einen Bewegungshebel zum Bewegen der Riegelnase aus der Ruheposition in die Verriegelungsstellung umfassen. Somit ist es möglich, die Riegelnasen manuell zu betätigen.

Die Seitenführung kann einen elektrischen und/oder pneumatischen und/oder hydraulischen Antrieb zumindest zum Bewegen der Riegelnasen aus der Ruhestellung in die Verriegelungsstellung umfassen. Es ist also möglich, die Riegelnase über eine Steuereinrichtung zu verfahren. Bevorzugt ist ein elektrischer Antrieb.

Das Riegelelement kann am Führungselement mit diesem verschwenkbar angeordnet sein.

Die genannte Aufgabe wird ebenfalls durch ein Frachtraumbodenelement mit mindestens einer der bereits beschriebenen Seitenführungen gelöst, wobei das Fußelement als integraler Bestandteil des Frachtraumbodenelements ausgebildet ist. Teile der Seitenführung, insbesondere das Fußelement, können das Frachtraumbodenelement versteifen. Bei einer integralen Verbindung zwischen Frachtraumbodenelement und dem Fußelement können die wirkenden Kräfte unmittelbar in den Frachtraumboden eingeleitet werden. Die Montage der Seitenführung im Frachtraumboden gestaltet sich sehr einfach.

Es sind Fixiervorrichtungen zum Einleiten einer Zuglast in einen Frachtraumboden bekannt. Beispielsweise gibt es in einigen Frachtraumböden integrierte Ringe, an denen Haken oder Seile befestigt werden können, um Frachtstücke am Frachtraumboden zu befestigen. Entsprechende Ringe lassen sich für eine bestimmte Belegung des Frachtraumdecks so ausrichten, dass die Zuglast optimal in den Frachtraumboden eingeleitet wird. Häufig ändern sich jedoch die Belegung oder die Konfiguration des Frachtraumdecks, so dass die Zuglast nicht mehr aus der hierfür vorgesehenen Richtung auf die Fixiervorrichtung einwirkt. Hierdurch kann es zu einer Beschädigung der Fixiervorrichtung und zu einem Lösen der Frachtstücke kommen. Des Weiteren sollten entsprechende Fixiervorrichtungen stets überfahrbar sein, so dass die Frachtstücke über derartige Fixiervorrichtungen hinweg an ihre Zielpositionen gefahren werden können. Bei herkömmlichen Fixiervorrichtungen kommt es häufig zu einer Beschädigung des Frachtraumbodens oder der Fracht, da die Fixiervorrichtungen in das Frachtraumdeck hineinragen.

Ausgehend von diesem Stand der Technik ist es auch Aufgabe der vorliegenden Erfindung, eine Fixiervorrichtung zum Einleiten einer Zuglast in einen Frachtraumboden bereitzustellen, die effizient zur Fixierung von Frachtstücken eingesetzt werden kann und einfach bedienbar ist.

Diese Aufgabe wird durch einen weiteren Erfindungskomplex gelöst.

Insbesondere wird diese Aufgabe durch eine Fixiervorrichtung zum Einleiten einer Zuglast in einen Frachtraumboden gelöst, wobei die Fixiervorrichtung umfasst:
- ein Verankerungsteil zur Befestigung an dem Frachtraumboden,
- ein Fixierelement, insbesondere einen Haken oder eine Öse, zur Aufnahme der Zuglast,
- ein Kugelgelenk zur gelenkigen Verbindung der Verankerung mit dem Fixierelement, wobei das Kugelgelenk derart ausgebildet ist, dass das Fixierelement aus einer Ruheposition in eine Arbeitsposition bringbar ist.

Durch das Vorsehen des Kugelgelenks zwischen der Verankerung und dem Fixierelement lässt sich das Fixierelement stets so ausrichten, dass die Zuglast optimal in das Verankerungsteil und somit in den Frachtraumboden eingeleitet wird. Des Weiteren lässt sich ein entsprechend gelenkig gelagertes Fixierelement unabhängig von der Anfahrtsrichtung überfahren, so dass es im Zweifelsfall wegklappen kann. Das Fixierelement kann also in jede Richtung ausweichen, wodurch eine Beschädigung der Fixiervorrichtung vermieden wird.

Die Fixiervorrichtung kann derart ausgebildet sein, dass das Fixierelement in der Ruheposition überfahrbar ist. Vorzugsweise wird eine Aufnahme vorgesehen, die das Fixierelement in der Ruheposition aufnimmt, so dass dieses im Frachtraumdeck versenkt ist. Auf jeden Fall befindet sich das Fixierelement in der Ruheposition unterhalb einer Ladeebene, so dass es den Be- und Endladevorgang nicht stört.

Die Fixiervorrichtung kann ein Federelement umfassen, das derart angeordnet und ausgebildet ist, dass es das Fixierelement in die Ruheposition vorspannt. Somit bewegt das Federelement das Fixierelement automatisch in die Ruheposition, wenn keine Zuglasten an dem Fixierelement angreifen.

Die Verankerung kann ein mit dem Frachtraumboden verbindbares Axiallager mit Lagerring umfassen, der eine Außenmantelfläche hat, die sich im Wesentlichen rotationssymmetrisch um eine Rotationsachse erstreckt, wobei die Außenmantelfläche eine im Wesentlichen konvexe, konstante Krümmung hat und das Fixierelement einen Gegenlagerring umfasst, der zur Bildung des Kugelgelenks den Lagerring zumindest abschnittsweise umschließt und eine korrespondierend zum Lagerring ausgebildete konkave Innenmantelfläche hat. Das erfindungsgemäße Kugelelement lässt sich also vorteilhaft durch den Lagerring und den Gegenlagerring ausbilden.

Der Gegenlagerring kann zur zumindest teilweisen Bildung der Innenmantelfläche zwei, insbesondere kreisförmige, Schulterabschnitte mit einem Innendurchmesser haben, der kleiner ist als ein Außendurchmesser des Lagerrings, wobei die Schulterabschnitte zum Einbringen des Lagerrings abschnittsweise unterbrochen sind. Die Schulterabschnitte bilden also die Randbereiche der kreisförmigen Innenmantelfläche aus und sind unterbrochen, so dass sich der Lagerring bei der Montage der Fixiervorrichtung in den Gegenlagerring einlegen lässt.

Vorzugsweise umfasst mindestens einer der beiden Schulterabschnitte zwei Unterbrechungsabschnitte zum Einbringen des Lagerrings, die einander gegenüber liegend im Gegenlagerring vorgesehen sind und einen Unterbrechungs-Innendurchmesser haben, der größer als der oder gleich dem Außendurchmesser des Lagerrings ist. Somit lässt sich der Lagerring einfach in den Gegenlagerring einbringen.

Die Unterbrechungsabschnitte sind im Wesentlichen korrespondierend zu einem Profil des Lagerrings ausgebildet. Bei diesem Profil handelt es sich vorzugsweise um eine konkave Ausbuchtung, die es ermöglicht, den Lagerring, der gegenüber dem Gegenlagerring um 90 Grad verdreht ist, in diesen einzusetzen.

Die Fixiervorrichtung kann ein längliches Achsenelement zur Bildung des Axiallagers umfassen, das abnehmbar in den Lagerring einsteckbar ist. Dieses Achsenelement kann vorteilhaft dazu verwendet werden, den Lagerring mit dem Frachtraumboden zu verbinden. Vorzugsweise erfolgt diese Verbindung drehfest.

Der Lagerring kann ein Innenprofil aufweisen, das korrespondierend zum Achsenelement ausgebildet ist, um den Lagerring drehfest am Frachtraumboden zu befestigen. Durch eine drehfeste Befestigung des Lagerrings an dem Frachtraumboden ist es möglich, den bereits beschriebenen Mechanismus bereitzustellen, der das Fixierelement in die Ruheposition vorspannt.

Das Innenprofil kann ein Mehrkantprofil sein.

Die Fixiervorrichtung kann eine Dichtung zur Abdichtung des Kugelgelenks gegen Außeneinflüsse umfassen.

Aus der US 4,241,890 ist ein Flugzeug mit einem Ladesystem bekannt, das es ermöglicht, Frachtstücke während des Fluges abzuwerfen. Derartige Flugzeuge werden sowohl im zivilen als auch im militärischen Bereich eingesetzt. Zum Abwurf der Frachtstücke wird während des Flugs eine Heckklappe bzw. eine Frachtraumklappe geöffnet und die Frachtstücke über die Heckklappe abgeworfen.

Die Heckklappe kann einen Teil des Frachtraumbodens bilden und ist dann für den einfacheren Transport der Frachtstücke mit Rollenbahnen oder ähnlichen Elementen ausgestattet. Es gibt verschiedene Methoden, die Frachtstücke für den Abwurf zu beschleunigen. Einerseits werden Fallschirme aus dem Flugzeug geworfen, die die Ladung aus dem Laderaum ziehen, andererseits wird das Flugzeug derart geneigt, dass die Schwerkraft oder andere Beschleunigungskräfte die Frachtstücke in Richtung auf das Heck zu treiben. Für einen kontrollierten Abwurf der Frachtstücke ist es notwendig, dass diese bis zum endgültigen Verlassen des Flugzeugs so gut wie möglich geführt werden. Verklemmt sich eins der Frachtstücke während des Abwurfes, so kann dies zu katastrophalen Folgen führen.

Es ist daher auch Aufgabe der vorliegenden Erfindung, ein Funktionselement zur sicheren Führung von Frachtstücken während eines Abwurfvorgangs bereitzustellen.

Diese Aufgabe wird durch einen weiteren Erfindungskomplex gelöst.

Insbesondere wird die Aufgabe durch eine Seitenführung zur Anbringung an einem Frachtraumboden einer Heckklappe eines Flugzeugs gelöst, wobei die Seitenführung zum Führen von Frachtstücken, insbesondere Containern und/oder Paletten, in Längsrichtung des Flugzeugs ausgebildet ist und mindestens ein längliches Führungselement umfasst, wobei das Führungselement eine Vertikalführungsfläche und mindestens einen Führungsvorsprung hat, der bei der Führung der Frachtstücke in eine dafür vorgesehene Nut der Frachtstücke eingreift oder einen Sockel der Frachtstücke umgreift, um Kräfte in Vertikalrichtung bezüglich des Frachtraumbodens aufzunehmen, wobei das Führungselement für einen Abwurf der Frachtstücke einen Halte- und einen Abwurfabschnitt aufweist, wobei in dem Abwurfabschnitt die Frachtstücke nicht durch den mindestens einen Führungsvorsprung in vertikaler Richtung fixiert sind.

Ein wesentlicher Gedanke der vorliegenden Erfindung besteht also darin, an der Heckklappe oder im Heckbereich des Flugzeugs eine Seitenführung vorzusehen, die sich im Wesentlichen entlang der Längsrichtung des Flugzeuges erstreckt und eine entsprechende Vertikalführungsfläche bereitstellt, die die Frachtstücke entlang der Längsrichtung führt. Eine Rotation der Frachtstücke in der X-Z-Ebene des Flugzeuges wird aufgrund der Vertikalführungsflächen verhindert. Die Seitenführung hat in Längsrichtung betrachtet zwei Abschnitte, nämlich den Halteabschnitt und den Abwurfabschnitt. Im Halteabschnitt ist mindestens ein Führungsvorsprung vorgesehen, der die Frachtstücke derart hält und führt, dass diese nicht aus der Seitenführung herausgehoben werden können. Der Vertikalführungsvorsprung nimmt also Kräfte auf, die in vertikaler Richtung zum Frachtraumboden wirken. Somit kann es verhindert werden, dass die Frachtstücke zu einem zu frühen Zeitpunkt von einem Fallschirm hochgezogen werden und die Flugzeugstruktur kontaktieren. Hierdurch kann es zu einer Beschädigung des Flugzeugs sowie im schlimmsten Fall zu einem Verklemmen der Frachtstücke kommen. Im Abwurfabschnitt der Seitenführung ist kein Führungsvorsprung vorgesehen, der die Frachtstücke in vertikaler Richtung fixiert. Somit kann die Ladung in diesem Bereich kontrolliert aus der Seitenführung gehoben werden.

Der mindestens eine Führungsvorsprung kann sich im Wesentlichen über die gesamte Länge des Halteabschnitts erstrecken. Das heißt, der Führungsvorsprung ist im Wesentlichen durchgängig im Halteabschnitt entlang der Längsrichtung des Flugzeuges angeordnet. Somit kann in diesem Bereich eine effiziente Führung gewährleistet werden. Des Weiteren kann dieser Bereich möglicherweise als Stellplatz für Frachtstücke während des Fluges genutzt werden, um so den Frachtraum optimal auszunutzen.

Die Seitenführung kann mindestens ein Fußelement zum Einleiten der wirkenden Kräfte in den Frachtraumboden umfassen, wobei das Führungselement gelenkig an dem mindestens einen Fußelement angeordnet ist, um das Führungselement zwischen einer Führungsposition zum Führen der Frachtstücke und einer Aufbewahrungsposition zu verschwenken, wobei das Führungselement und das Fußelement in der Aufbewahrungsposition eine im Wesentlichen plane begehbare und/oder befahrbare Fläche ausbilden. Somit ist es möglich, die Seitenführung derart einzuklappen, dass eine befahr- oder begehbare Fläche ausgebildet wird. Soweit keine genormten Frachtstücke, z.B. Container oder Paletten, im Frachtraum verladen werden, kann es vorteilhaft sein, die erfindungsgemäße Seitenführung wegzuklappen, so dass diese beim Beladen oder Entladen nicht störend im Wege steht.

Das Führungselement kann eine Deckelfläche und mindestens ein Stützelement umfassen, wobei das Stützelement derart ausgebildet ist, dass das Stützelement in der Aufbewahrungsposition die Deckelfläche zum Bilden mindestens eines Abschnitts der begehbaren und/oder befahrbaren Fläche gegenüber dem Fußelement und/oder dem Frachtraumboden abstützt.

In der Aufbewahrungsposition bildet also die Deckelfläche zumindest abschnittsweise die begehbare oder befahrbare Fläche aus. Hierbei wird die Deckelfläche durch das Stützelement abgestützt, das die auf die Deckelfläche wirkenden Kräfte in dem Frachtraumboden oder in das Flugzeug einleitet. Somit gestaltet sich die erfindungsgemäße Seitenführung sehr robust.

Das mindestens eine Stützelement und/oder ein für das Verschwenken des Führungselements vorgesehene Drehgelenk können derart ausgebildet sein, dass das Führungselement gegenüber der Führungsposition zur Einnahme der Aufbewahrungsposition um weniger als 90 Grad verschwenkbar ist.

Die Deckelfläche kann mit der Vertikalführungsfläche in Wirkverbindung stehen, und zum Einleiten der auf die Vertikalführungsfläche wirkenden Kräfte in das Fußelement und/oder in den Frachtraumboden gegenüber der Vertikalführungsfläche geneigt sein. Die Deckelfläche bildet also eine Art Querverstrebung, die in der Führungsposition - die Vertikalführungsfläche steht im Wesentlichen senkrecht zum Frachtraumboden - die auf die Vertikalführungsfläche wirkenden Kräfte unter einem Winkel in das Fußelement und/oder den Frachtraumboden einleitet. Somit kann die Seitenführung wesentlich robuster ausgestaltet werden und in Querrichtung (Y-Richtung) größere Kräfte aufnehmen.

Die Riegelnase des Riegelelements kann zumindest zweiteilig mit einem ersten und einem zweiten Riegelnasenelement ausgebildet sein, die jeweils mit einer Anschlagfläche mit einem Anschlagrand einer Eingriffsausnehmung der Frachtstücke in Eingriff bringbar sind, wobei die Riegelnasenelemente derart bewegbar gelagert sind, dass sich beide Anschlagflächen beim Bewegen von der Verriegelungsstellung in die Ruhestellung von den Anschlagrändern entfernen. Ein wesentlicher Punkt dieses Aspekts der Erfindung besteht darin, dass die Anschlagflächen, die mit einem Anschlagrand der Eingriffsausnehmung der Frachtstücke in Eingriff bringbar sind, beim Entfernen der Riegelnasenelemente aus den Eingriffsausnehmungen sich von den gegenüberliegenden Anschlagrändern entfernen. Der von den Riegelnasenelementen beanspruchte Platz verringert sich also beim Versenken und somit wird die Gefahr des Verklemmens der Riegelnase in der Eingriffsausnehmung deutlich verringert. Auch wenn das Frachtstück eine Kraft auf die Riegelnase ausübt, kann diese unter geringem Kraftaufwand eingefahren werden. Dies ist besonders vorteilhaft, wenn die Frachtstücke schnell und zuverlässig entladen werden müssen (z.B. Abwurf während des Flugs).

Die Riegelnasenelemente können derart gegenläufig miteinander verbunden sein, dass beim Bewegen eines Riegelnasenelements das andere Riegelnasenelement mitgenommen wird. Dadurch wird sichergestellt, dass beide Riegelnasenelemente einer Riegelnase sich stets gleichzeitig und mehr oder weniger synchron bewegen. Des Weiteren kann die Riegelnase mechanisch wesentlich einfacher ausgestaltet sein, da sich die einzelnen Riegelnasenelemente gegenseitig stützen und nur eines der Riegelnasenelemente zum Verändern der Position der Riegelnase betätigt werden muss.

Das Riegelelement kann eine Feststellvorrichtung zum Feststellen der Riegelnase in der Verriegelungsstellung und/oder der Ruhestellung umfassen. Durch diese Feststellvorrichtung wird die unbeabsichtigte Bewegung der Riegelnase aus einer Stellung in die jeweils andere verhindert. In einer Ausführungsform umfasst die Feststellvorrichtung mindestens ein Feststellfederelement zum Einrasten der Feststellvorrichtung in der Verriegelungsstellung und/oder Ruhestellung der Riegelnase. Dies hat unter anderem den Vorteil, dass die Riegelnase ohne weiteres Zutun in der Verriegelungsstellung und/oder Ruhestellung festgestellt werden kann. Die Seitenführung kann mindestens einen Bewegungshebel oder einen Anschluss für einen Bewegungshebel zum Bewegen der Riegelnase aus der Ruheposition in die Verriegelungsstellung umfassen. Somit ist es möglich, die Riegelnasen manuell zu betätigen.

Die Seitenführung kann einen elektrischen und/oder pneumatischen Antrieb zumindest zum Bewegen der Riegelnasen aus der Ruhestellung in die Verriegelungsstellung umfassen. Es ist also möglich, die Riegelnase über eine Steuereinrichtung zu verfahren.

Das Riegelelement kann am Führungselement mit diesem verschwenkbar angeordnet sein.

Die genannte Aufgabe wird ebenfalls durch ein Frachtraumbodenelement mit mindestens einer der bereits beschriebenen Seitenführungen gelöst, wobei das Fußelement als integraler Bestandteil des Frachtraumbodenelements ausgebildet ist. Teile der Seitenführung, insbesondere das Fußelement, können das Frachtraumbodenelement versteifen. Bei einer integralen Verbindung zwischen Frachtraumbodenelement und dem Fußelement können die wirkenden Kräfte unmittelbar in den Frachtraumboden eingeleitet werden. Die Montage der Seitenführung im Frachtraumboden gestaltet sich sehr einfach.

Die genannte Aufgabe wird weiterhin durch eine Heckklappe mit mindestens einem Frachtraumbodenelement gelöst, das der obigen Beschreibung entspricht.

Aus der US 4,241,890 ist ein Flugzeug mit einem Ladesystem bekannt, das es ermöglicht, Frachtstücke während des Fluges abzuwerfen. Derartige Flugzeuge werden sowohl im zivilen als auch im militärischen Bereich eingesetzt. Zum Abwurf der Frachtstücke wird während des Flugs eine Heckklappe bzw. eine Frachtraumklappe geöffnet und die Frachtstücke über die Heckklappe abgeworfen.

Die Heckklappe kann einen Teil des Frachtraumbodens bilden und ist dann für den einfacheren Transport der Frachtstücke mit Rollenbahnen oder ähnlichen Elementen ausgestattet. Es gibt verschiedene Methoden, die Frachtstücke für den Abwurf zu beschleunigen. Einerseits werden Fallschirme aus dem Flugzeug geworfen, die die Ladung aus dem Laderaum ziehen, andererseits wird das Flugzeug derart geneigt, dass die Schwerkraft oder andere Beschleunigungskräfte die Frachtstücke in Richtung auf das Heck zu treiben.

Beim Abwerfen der Frachtstücke ist das Timing von entscheidender Bedeutung. Nur wenige Sekunden entscheiden darüber, ob die Frachtstücke punktgenau oder kilometer von der Zielregion entfernt abgesetzt werden. Des Weiteren spielt die Sicherheit beim Abwurf eine entscheidende Rolle. Während des Abwurfs der Frachtstücke befindet sich das Flugzeug in einer äußerst kritischen Situation, bei der sich zahlreiche relevante Parameter, z.B. die Ladeverhältnisse, in wenigen Sekunden ändern. Ein Verklemmen der Ladung, ein defektes Riegelelement, ein nichtauslösender, an der Ladung angebrachter Zugfallschirm usw. können katastrophale Folgen auslösen.

Des Weiteren sind die hier wirkenden Kräfte extrem hoch und können schnell zu einer Beschädigung des Flugzeugs, insbesondere des Ladesystems des Flugzeugs führen. Um all diesen Faktoren Rechnung tragen zu können, werden beim Abwurf von Frachtstücken extrem hohe Anforderungen an den Pilot sowie an das das Ladesystem bedienende Personal gestellt.

Es ist daher auch Aufgabe der vorliegenden Erfindung, eine Vorrichtung zum Abwerfen von Frachtstücken aus einem Frachtraum bereitzustellen, die einen einfachen, effizienten, sicheren und zielgenauen Abwurf ermöglicht.
Diese Aufgabe wird durch einen weiteren Erfindungskomplex gelöst.

Insbesondere wird die Aufgabe durch eine Vorrichtung zum Abwerfen von Frachtstücken aus einem Frachtraum eines Flugzeugs aus der Luft gelöst, wobei die Vorrichtung umfasst:
a. eine Steuerung mit einer Vielzahl von Sensoreingängen, Steuerungseingängen und Betätigungsausgängen,
b. Sensoren, welche einen Flugzustand des Flugzeugs, z. B. Geschwindigkeit, Steigungswinkel, Flugweg, Flugrichtung und/oder Beschleunigung der Steuerung übermitteln,
c. Riegelelemente, welche durch Entriegelungssignale der Steuerung von einer Verriegelungsstellung, in welcher die Frachtstücke im Frachtraum befestigt sind in eine Auslösestellung bringbar sind, in welcher die Frachtstücke aus dem Frachtraum heraus bewegbar sind.

Die Vorrichtung hat den Vorteil, dass die Steuerung beim Entriegeln der Riegelelemente mindestens einen Flugzeugzustand berücksichtigt, um ein optimales Abwurfergebnis zu erzielen. Eine Auslösestellung des Riegelelements kann eine Stellung sein, in der das Riegelelement derart eingefahren ist, dass es von den Frachtstücken überfahrbar ist. Andererseits kann sich ein Riegelelement auch im ausgefahrenen Zustand in einer Auslösestellung befinden, wobei eine vorgegebene Kraft, möglicherweise aus einer vorgegebenen Richtung, ausreicht, um das Riegelelement zu überfahren.

Die Vorrichtung kann eine Fallschirmauslösevorrichtung umfassen, die auf ein Abwurfsignal aus der Steuerung hin Fallschirmvorrichtungen derart auslöst, dass diese die Frachtstücke aus dem Frachtraum heraus ziehen. Somit kann die Steuerung den Abwurfvorgang aktiv steuern. Die Fallschirmvorrichtung ermöglicht ein Beschleunigen der Frachtstücke gegenüber dem Flugzeug, so dass diese in Richtung auf das Heck des Flugzeugs zu bewegt werden.

Die Vorrichtung kann eine manuell betätigbare Schalteinrichtung, insbesondere einen Totmannschalter, umfassen, der mit der Steuerung derart verbunden ist, dass nur bei Betätigung der Schalteinrichtung die Riegelelemente und/oder Fallschirmauslösevorrichtung betätigbar sind. Somit ist es möglich, einen Abwurf so lange zu unterbinden, bis eine manuelle Bestätigung seitens des Bedienpersonals oder des Flugzeugkapitäns erfolgt. Ein versehentlicher Abwurf kann verhindert werden.

Die Sensoren können einen Neigungswinkelsensor umfassen und die Steuerung kann derart ausgebildet sein, dass die Fallschirmauslösevorrichtung nur dann ausgelöst wird, wenn ein vorbestimmter Mindestneigungswinkel überschritten und/oder eine vorbestimmte Ausrichtung des Flugzeugs eingehalten wird. Es gibt Neigungswinkel des Flugzeugs, bei denen ein sicherer Abwurf der Frachtstücke nicht möglich ist. Die Steuerung kann mittels des Neigungswinkelsensors entsprechende Neigungen messen und das Einleiten eines Abwurfvorgangs oder das Abwerfen der Frachtstücke unterbinden.

Andererseits können die Sensoren auch benutzt werden, um die Ausrichtung des Flugzeugs in der Luft zu bestimmen. Anhand der Ausrichtung lässt sich die Zugrichtung eines ausgeworfenen Zugfallschirms bestimmen und so die Zielgenauigkeit beim Abwurf verbessern.

Die Sensoren können einen Öffnungssensor umfassen, welcher der Steuerung einen Öffnungszustand einer Frachtraumklappe bzw. Heckklappe übermittelt. Somit kann der Öffnungszustand der Heckklappe beim Abwurf mit berücksichtigt werden.

Die Sensoren können Riegelsensoren umfassen, welche mindestens einen Verriegelungszustand und/oder mindestens eine Position und/oder mindestens eine Federvorspannung eines Federelements und/oder mindestens eine Motorstromaufnahme und/oder mindestens eine Bremsentemperatur und/oder eine Platinentemperatur und/oder mindestens eine Phasenverschiebung der Eingangsspannung der Riegelelemente erfasst. Beim Abwurf der Ladung spielt der Zustand der einzelnen Riegelelemente, die zur Sicherung der Frachtstücke verwendet werden, eine entscheidende Rolle. Bevor ein Abwurf eingeleitet wird, müssen die Zustände der einzelnen Riegelelemente erfasst werden, um geeignete Maßnahmen zu ergreifen, so dass ein sicherer Abwurf gewährleistet ist. Des Weiteren soll eine Prüfung der einzelnen Riegelelemente erfolgen, so dass sichergestellt werden kann, dass sich jedes Riegelelement in einem betriebsbereiten Zustand befindet. Somit kann zu einem möglichst frühen Zeitpunkt festgestellt werden, ob ein sicherer Abwurf überhaupt möglich ist. Die oben genannten Parameter helfen, den Funktionszustand der Riegelelemente zu ermitteln.

Die Sensoren können mindestens eine Kraftmesseinrichtung umfassen, welche eine Kraft misst, mit der eine Fallschirmvorrichtung ein Frachtstück aus dem Frachtraum herauszieht, wobei Abtrennvorrichtungen derart von der Steuerung ansteuerbar sind, dass die Fallschirmvorrichtung dann abgetrennt wird, wenn die Kraft einen vorbestimmten Wert überschreitet oder die erfassten Sensorwerte einen Abbruch des Abwurfvorgangs erfordern. Somit ist es möglich, festzustellen, ob die Frachtstücke im Frachtraum verklemmt sind oder durch ein defektes Riegelelement zurückgehalten werden. Im Falle einer derartigen Situation lassen sich die Fallschirmvorrichtungen, die eine entsprechende Zugkraft auf die Frachtstücke ausüben, abtrennen, so dass das Flugzeug manövrierfähig bleibt.

Die Vorrichtung kann eine Vielzahl von in dem Flugzeug angeordnete Schalttafeln zum Anzeigen von Zuständen der Vorrichtung zum Abwerfen von Frachtstücken sowie zum Eingeben von Steuersignalen an die Steuerung umfassen. Somit ist eine dezentrale Steuerung und Überwachung der Vorrichtung zum Abwerfen von Frachtstücken möglich.

Die Sensoren können Sekundärsensoren zum Erfassen von Zuständen von Sekundärfunktionseinrichtungen, z.B. Fallschirmauswerfvorrichtungen, Fallschirmabtrennvorrichtungen, Fallschirmleinenrückholwinden usw. umfassen. Hier können die bezüglich des Riegelelements bereits beschriebenen Parameter gemessen werden.

Die Vorrichtung kann eine Testvorrichtung umfassen, welche dazu ausgebildet ist, mindestens ein Riegelelement vor einem möglichen Abwurf zu betätigen und Sensorsignale bezüglich des Riegelelements zu empfangen, um anhand eines Vergleichs der empfangenen Sensorsignale mit Sollwerten festzustellen, ob das mindestens eine Riegelelement funktionstüchtig ist. Die Steuerung ist also dazu ausgebildet, einzelne Riegelelemente vor dem eigentlichen Abwurf auf deren Funktionalität zu testen. Häufig sind mehrere Riegelelemente zur Sicherung eines Frachtstückes vorgesehen. Es ist mitunter möglich, einzelne dieser Riegelelemente einzufahren oder in eine Auslösestellung zu bringen, ohne dass die Gefahr besteht, dass sich die Frachtstücke bewegen würden. Somit können mechanische Elemente der Riegelelemente betätigt werden, um zu testen, ob das Riegelelement als solches funktionsfähig ist. Bei den Testdurchläufen kann eine Federvorspannung eines Federelements, eine Motorstromaufnahme, eine Bremsentemperatur, eine Platinentemperatur, eine Phasenverschiebung der Eingangsspannung usw. der Riegelelemente gemessen werden.

Die Vorrichtung kann eine Leseeinrichtung, insbesondere eine RFID-Tag-Leseeinrichtung zum Lesen einer an den Frachtstücken befestigten Kennzeichnung umfassen, um die Ladereihenfolge der Frachtstücke zu kontrollieren. Häufig existieren digitale Pläne, die einem bestimmten Frachtstück einen bestimmten Abwurfszeitpunkt oder eine bestimmte Abwurfsposition zuordnen. Es ist notwendig, die Frachtstücke entsprechend der geplanten Abwurfreihenfolge in den Frachtraum zu verladen.

Die Leseeinrichtung kann dabei helfen, die Ladereihenfolge zu überwachen und zu dokumentieren. Die Steuerung kann bei einer fehlerhaften Beladung darauf hinweisen. Alternativ kann die Steuerung durch die Leseeinrichtung die Ladekonfiguration erfassen und entsprechend der Ladekonfiguration eine Abwurfreihenfolge und/oder eine Flugroute festlegen oder vorschlagen.

Die Leseeinrichtung kann nahe einer Frachtraumklappe (z.B. Heckklappe) oder Frachtraumtür installiert sein, um eine Vielzahl von Kennzeichnungen beim Beladen des Frachtraums zu erfassen. Die Leseeinrichtung kann also so installiert sein, dass die einzelnen Frachtstücke beim Beladen automatisch an dieser vorbeigeführt werden, um deren Kennzeichnung zu erfassen.

Weitere vorteilhafte Ausführungsformen ergeben sich anhand der Unteransprüche.

Nachfolgend werden die einzelnen Erfindungskomplexe mittels mehrerer Ausführungsbeispiele beschrieben, die anhand von Abbildungen näher erläutert werden. Hierbei zeigen:
- Fig. 1: eine Seitenansicht eines Frachtraumbodens;
- Fig. 2: eine Draufsicht auf den Frachtraumboden aus Fig.1 ;
- Fig. 3: verschiedene Konfigurationsmöglichkeiten zur Anordnung von Frachtraumladekomponenten auf dem Frachtraumboden aus Fig. 1;
- Fig. 4: ein Funktionselement für einen Frachtraumboden mit einem Wendekörper in einer Funktionsposition, in der eine Rolleneinheit in ein Frachtraumdeck hineinragt;
- Fig. 5: das Funktionselement aus Fig. 4 in einer Funktionsposition, in der eine begehbare Lauffläche einen Teil des Frachtraumdecks ausbildet;
- Fig. 6: einen Längsschnitt durch das Funktionselement in der Funktionsposition gemäß Fig. 4;
- Fig. 7: einen Querschnitt durch das Funktionselement in der Funktionsposition gemäß Fig. 5;
- Fig. 8: einen Querschnitt durch das Funktionselement in der Funktionsposition gemäß Fig. 4;
- Fig. 9: einen weiteren Querschnitt durch das Funktionselement in der Funktionsposition gemäß Fig. 5;
- Fig. 10: eine Draufsicht auf ein weiteres Funktionselement zum Einbau in einen Frachtraumboden mit Wendekörper und Wendekörperhalterungen, wobei die Wendekörperhalterungen in Querrichtung ausgerichtete Befestigungselemente umfassen;
- Fig. 11: ein weiteres Funktionselement zum Einbau in einen Frachtraumboden mit Wendekörper und Wendekörperhalterungen, wobei die Wendekörperhalterungen in Längsrichtung ausgerichtete Befestigungselemente umfassen;
- Fig. 12: eine Seitenansicht einer Seitenführung zur Anbringung in einem Frachtraumboden, wobei ein Führungselement abnehmbar mit einem Fußelement verbunden ist;
- Fig. 13: eine Draufsicht auf die Seitenführung nach Fig. 12;
- Fig. 14: eine Seitenansicht einer weiteren im Frachtraumboden verankerten Seitenführung zur Anbringung an einem Frachtraumboden, wobei sich die Seitenführung in einer Führungsposition zur Fixierung eines Frachtstücks befindet;
- Fig. 15: eine Seitenansicht der Seitenführung nach Fig. 14, wobei sich die Seitenführung in einer Aufbewahrungsposition befindet;
- Fig. 16: eine Draufsicht auf die Seitenführung aus Fig. 14;
- Fig. 17: eine perspektivische Sicht auf die Seitenführung nach Fig. 14;
- Fig. 18: eine Fixiervorrichtung zum Einleiten einer Zuglast in einen Frachtraumboden, umfassend eine Verankerung und ein Fixierelement, die gelenkig miteinander verbunden sind;
- Fig. 19: eine erste Seitenansicht der Fixiervorrichtung nach Fig. 18;
- Fig. 20: einen ersten Schnitt durch die Fixiervorrichtung nach Fig. 18;
- Fig. 21: eine zweite Seitenansicht der Fixiervorrichtung nach Fig. 18;
- Fig. 22: einen zweiten Schnitt durch die Fixiervorrichtung nach Fig. 18;
- Fig. 23: einen dritten Schnitt durch die Fixiervorrichtung nach Fig. 18;
- Fig. 24: die Verankerung der Fixiervorrichtung nach Fig. 18 in einer Seitenansicht;
- Fig. 25: einen vierten Schnitt durch die Fixiervorrichtung nach Fig. 18;
- Fig. 26: eine schematische Darstellung einer elektronischen Vorrichtung zum Abwerfen von Frachtstücken;
- Fig. 27: einen Querschnitt durch einen beladenen Frachtraum eines Flugzeuges;
- Fig. 28: einen Längsschnitt durch den Frachtraum aus Fig. 27 vor einem Abwurf eines Frachtstücks;
- Fig. 29: den Längsschnitt durch den Frachtraum aus Fig. 28 beim Abwurf eines Frachtstückes;
- Fig. 30: eine Draufsicht auf den Frachtraum aus Fig. 27 beim Abwurf eines Frachtstücks;
- Fig. 31: eine Seitenansicht einer weiteren Seitenführung zur Anbringung in einem Frachtraumboden, wobei ein Führungselement abnehmbar mit einem Fußelement verbunden ist;
- Fig. 32: eine Draufsicht auf die Seitenführung aus Fig. 31;
- Fig. 33: eine Seitenansicht einer weiteren im Frachtraumboden verankerten Seitenführung, wobei sich die Seitenführung in einer Führungsposition zur Fixierung eines Frachtstücks befindet;
- Fig. 34: eine Seitenansicht der Seitenführung nach Fig. 33, wobei sich die Seitenführung in einer Aufbewahrungsposition befindet; und
- Fig. 35: eine perspektivische Seitenansicht eines Abschnitts des Frachtraumbodens mit integrierter Seitenführung nach Fig. 33.

In der nachfolgenden Beschreibung werden für gleiche und gleich wirkende Teile dieselben Bezugsziffern verwendet. Beim Flugzeugbau wird üblicherweise ein kartesisches Kartensystem zur Angabe von verschiedenen Richtungen bezüglich des Flugzeugs verwendet. Hierbei erstreckt sich die X-Achse entlang der Längsachse (Heck zu Bug) des Flugzeugs. Die Y-Achse verläuft im Wesentlichen parallel zu der Erstreckungsrichtung der Tragflächen des Flugzeugs. Die Z-Achse steht auf der X- und Y-Achse senkrecht (vertikale Richtung).

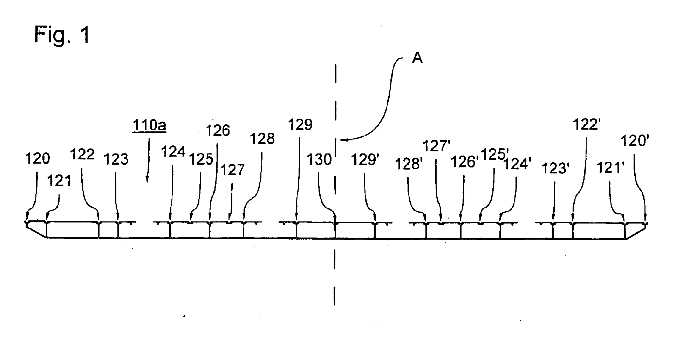

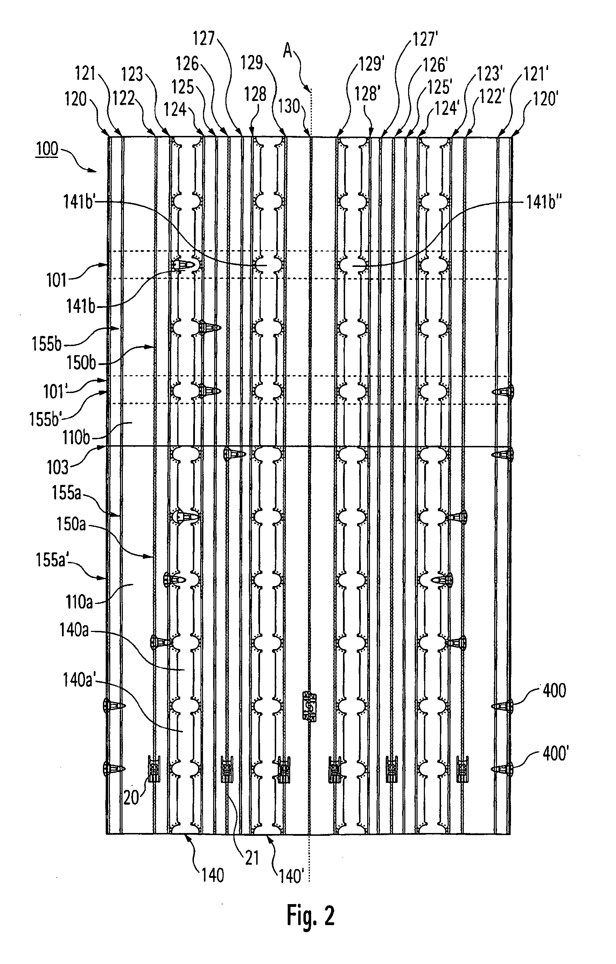

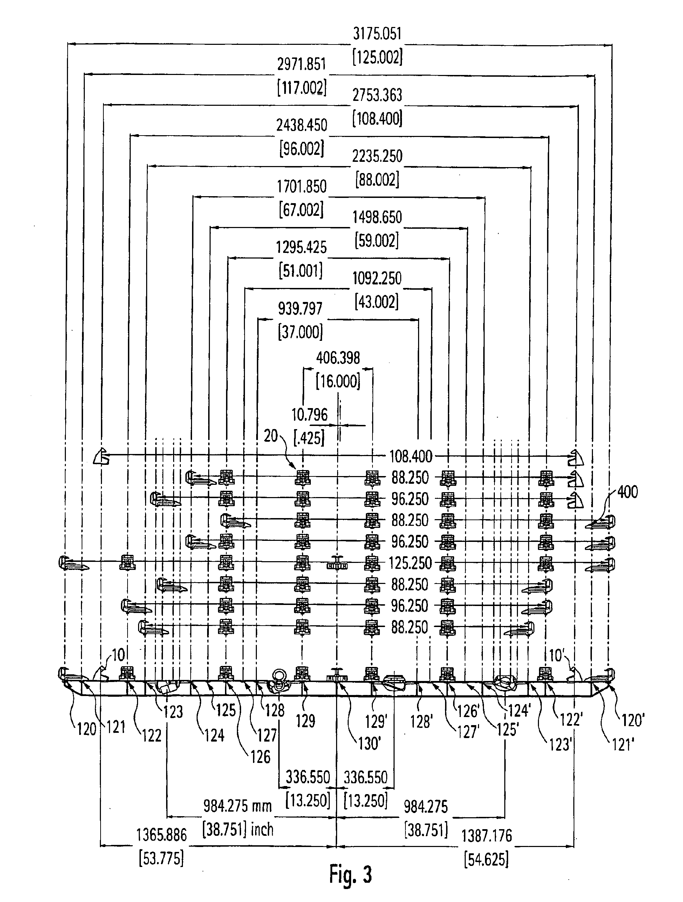

Die Fig. 1 zeigt einen Querschnitt (Y-Z-Ebene) durch einen Frachtraumboden 100 (vgl. Fig. 2), der sich üblicherweise in der X-Y-Ebene des Flugzeugs erstreckt. Ein erfindungsgemäßer Frachtraumboden 100 umfasst eine Vielzahl von Frachtraumbodenelementen 110a, 110b, die zur Bildung des Frachtraumdecks miteinander verschraubt sind. Der Frachtraumboden 100 aus Fig. 2 umfasst zwei Frachtraumbodenelemente 110a, 110b, die an einem Frachtraumbodenverbindungsabschnitt 103 miteinander verbunden sind. Die Fig. 1 zeigt eine Seitenansicht des Frachtraumbodenelements 110a, wobei dieses Frachtraumbodenelement 110a in Querrichtung (Y-Richtung) das gesamte Frachtraumdeck bildet. Es sind Frachtraumböden 100 denkbar, die in Querrichtung mehrere miteinander verschraubte Frachtraumbodenelemente 110a, 110b, z.B. 10 oder 8 oder 6 oder 4 oder 3 oder 2, aufweisen. Das Frachtraumbodenelement 110a der Fig. 1 ist eine Strangpresspaneele, die im Wesentlichen symmetrisch zu einer Symmetrieebene A (X-Z-Ebene) ausgebildet ist. Wie in den Fig. 1 und 2 gezeigt, umfasst der Frachtraumboden 100 eine Vielzahl von entlang der Längsrichtung des Flugzeugs verlaufenden Schienen 120 bis 130, 120' bis 129'. Diese Schienen 120 bis 130, 120' bis 129' werden durch die entlang der Längsrichtung des jeweiligen Frachtraumbodenelements 110a, 110b verlaufende Vollsitzschienenabschnitte 150a, 150b und Teilsitzschienenabschnitte 155a, 155b, 155a', 155b' ausgebildet. Die Schienen 120 bis 130, 120' bis 129' dienen der Verankerung von Funktionseinheiten, insbesondere von Frachtladekomponenten, wie beispielsweise Querriegeln 10, 10' oder Längsriegeln 20 (vgl. Fig. 3). Die Schienen 120 bis 130, 120' bis 129' können auch dazu ausgebildet sein, Seitenführungen 400, 400' aufzunehmen, die Frachtstücke 1, 1', 1" am Frachtraumboden 100 verankern und diese in Längsrichtung führen. Die Seitenführungen 400, 400' können dazu verwendet werden, Frachtstücke 1, 1', 1", z.B. Container, auszurichten und in vorgegebene Bereiche des Frachtraums zu transportieren.

In einem bevorzugten Ausführungsbeispiel des Frachtraumbodens 100 hat dieser an den Seiten jeweils zwei relativ nahe beieinander liegende Schienen 120, 121 und 121', 120', die besonders gut dazu geeignet sind, die Seitenführungen 400, 400' aufzunehmen. Durch das Bereitstellen der parallel verlaufenden Schienenpaare können Querkräfte besonders gut in den Frachtraumboden 100 eingeleitet werden. Es ist ausreichend, wenn für die Seitenführungen 400, 400' Teilsitzschienenabschnitte 155a, 155b, 155a', 155b' bereitgestellt werden, die entlang der Längsrichtung betrachtet nur einige wenige Löcher zum Einbringen der Funktionselemente in die Schienenführung bereitstellen. Andererseits sind die Vollsitzschienenabschnitte 150a, 150b besonders dafür geeignet, Längsriegel 20 aufzunehmen, da diese Löcher in regelmäßigen Abständen aufweisen, so dass sich die Längsriegel 20 entlang der Längsrichtung in jeder beliebigen Position festsetzen lassen.

Die Fig. 3 zeigt eine bevorzugte Konfiguration eines erfindungsgemäßen Frachtraumbodens 100. Hier sind Sitzschienenpaare in Abständen von ca. 317, 297, 223, 170, 150, 139, 109, 94, 41 Zentimetern angeordnet. Eine derartige Konfiguration ist besonders dafür geeignet, Frachtstücke 1, 1', 1" mit normierter Breite und Länge aufzunehmen. Übliche normierte Breiten von derartigen Frachtstücken 1, 1', 1" sind 88 Zoll oder ca. 224 Zentimeter bzw. 96 Zoll oder ca. 244 Zentimeter. Die Fig. 3 zeigt eine Vielzahl von Konfigurationen, wie sich die einzelnen Frachtladekomponenten auf dem Frachtraumboden 100 anordnen lassen.

Der Frachtraumboden 100 weist des Weiteren Ausnehmungsabschnitte 140, 140' auf, die sich entlang der Längsrichtung des Flugzeuges erstrecken. Diese Ausnehmungsabschnitte 140, 140' werden durch einzelne Längsausnehmungen 140a, 140a', 140a" und Ellipsenausnehmungen 141b, 141b', 141b" gebildet, die in den Frachtraumbodenelementen 110a, 110b vorgesehen sind. Die Längsausnehmungen 140a, 140a', 140a" und Ellipsenausnehmungen 141b, 141b', 141b" dienen zur Aufnahme von Funktionseinheiten, beispielsweise Frachtladekomponenten oder Laufflächen. Diese Funktionseinheiten lassen sich vorzugsweise von unten in die Frachtraumbodenelemente 110a, 110b einbringen und mit diesen verschrauben. Eine sich in Längsrichtung erstreckende Längsausnehmung 140a, 140a', 140a" schließt jeweils an eine sich quer erstreckende Ellipsenausnehmung 141b, 141b', 141b" an. Die Ausnehmungsabschnitte 140, 140' werden also in Längsrichtung des Frachtraumbodens 100 durch eine Kette von sich abwechselnden Längsausnehmungen 140a, 140a', 140a" und Ellipsenausnehmungen 141b, 141b', 141b" gebildet. Die Ellipsenausnehmungen 141b, 141b', 141b" mit ihrer elliptischen Form sind vorzugsweise oberhalb von Querträgern 101, 101' angeordnet, die den Frachtraumboden 100 tragen. Gewindebohrungen zum Anbringen der Funktionseinheiten umgeben die Ellipsenausnehmungen 141b, 141b', 141b".

Auch die Querträger 101, 101' sind mit den Frachtraumbodenelementen 110a, 110b verschraubt. Somit können die über die Funktionseinheit auf die Frachtraumbodenelemente 110a, 110b ausgeübten Kräfte in die Querträger 101, 101' und somit in die Flugzeugstruktur eingeleitet werden.

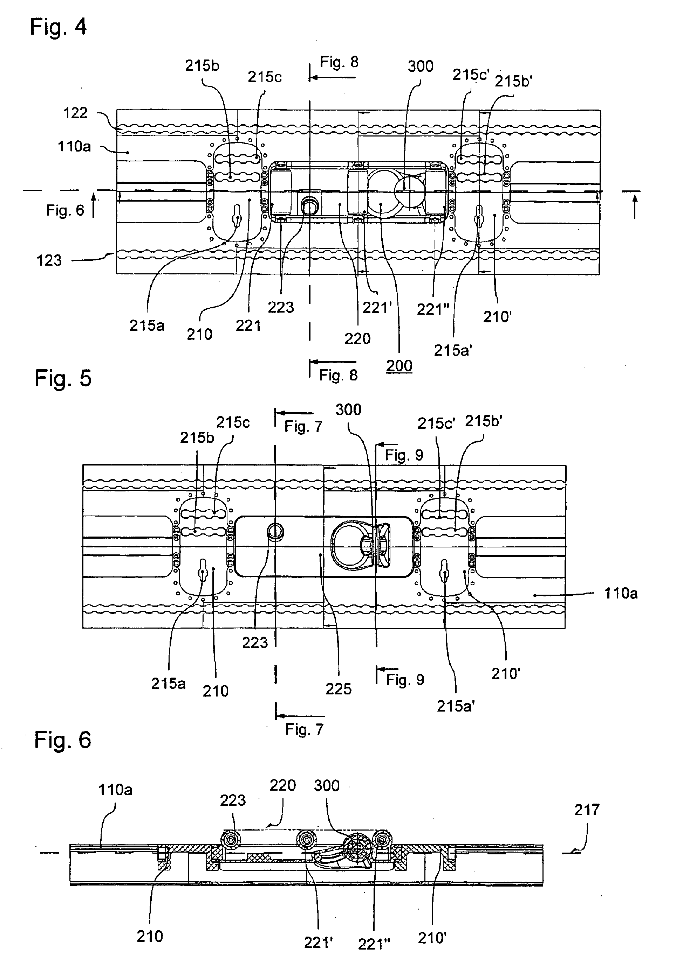

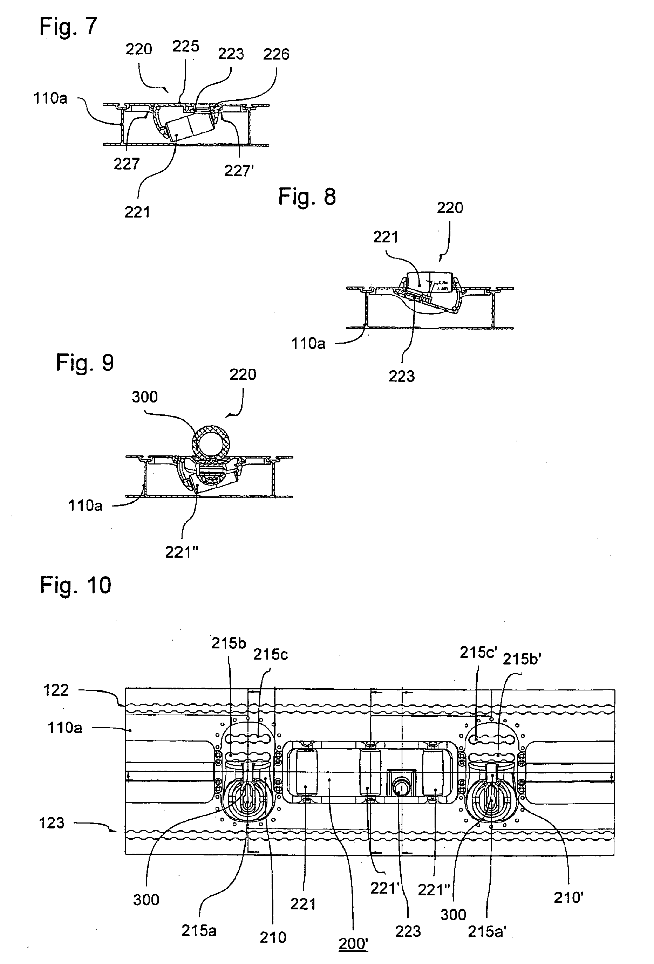

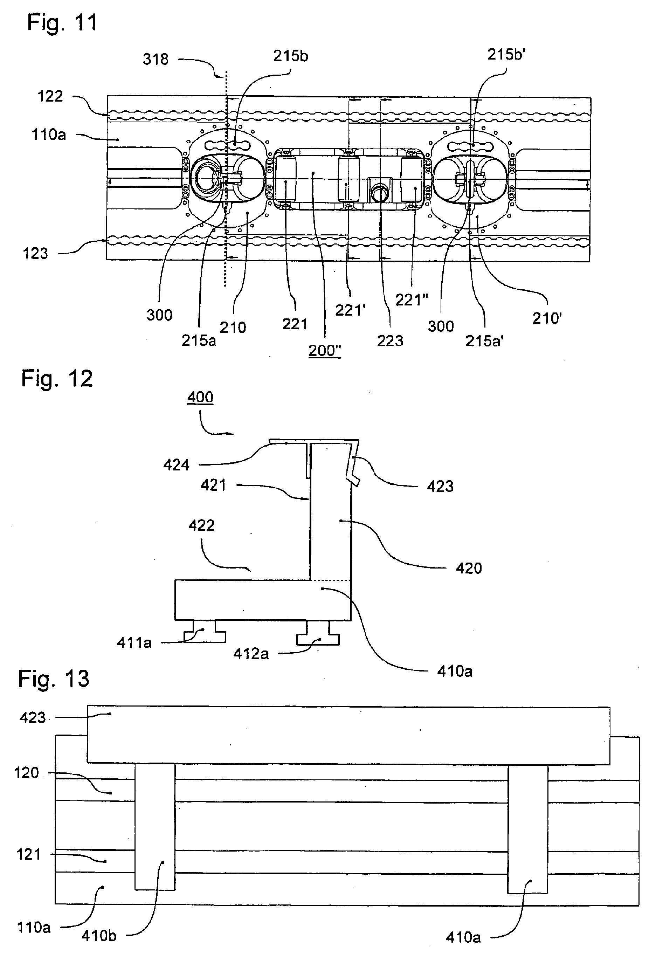

In den Ausnehmungsabschnitten 140, 140' sind vorzugsweise Multifunktionselemente 200, 200', 200" eingebaut. Die Ausgestaltung eines ersten Multifunktionselements 200 geht aus den Fig. 4 bis 9, die eines zweiten Multifunktionselements 200' aus der Fig. 10 und die eines dritten Multifunktionselements 200" aus der Fig. 11 hervor.

Ein erfindungsgemäßes Multifunktionselement 200, 200', 200" umfasst einen Wendekörper 220 und eine erste und zweite Wendekörperhalterung 210, 210'. Die erste und zweite Wendekörperhalterung 210, 210' sind in zwei nebeneinander angeordneten und durch eine Längsausnehmung 140a, 140a', 140a" verbundenen Ellipsenausnehmungen 141b, 141b', 141b" des Frachtraumbodens 100 verankert. Der Wendekörper 220 erstreckt sich entlang der Längsausnehmungen 140a, 140a', 140a" und lässt sich gegenüber den Wendekörperhalterungen 210, 210' und somit auch gegenüber dem Frachtraumboden 100 um eine Wendekörperdrehachse 217 drehen. Die Wendekörperdrehachse 217 erstreckt sich vorzugsweise im montierten Zustand im Wesentlichen entlang der Längsachse des Flugzeugs. Ein erfindungsgemäß ausgestaltetes Multifunktionselement 200, 200', 200" hat jeweils einen Wendekörper 220 mit mehreren Funktionseinheiten. Die Multifunktionselemente 200, 200', 200" gemäß den Fig. 4 bis 11 haben Wendekörper 220 mit jeweils zwei Funktionseinheiten, nämlich einer Rolleneinheit (vgl. Fig. 4) und einer Lauffläche 225 (vgl. Fig. 5). In der Fig. 4 ist eine erste Funktionsposition des Wendekörpers 220 des ersten Multifunktionselements 200 im Frachtraumbodenelement 110a gezeigt, bei der eine Rolleneinheit einen Teil des Frachtraumdecks bildet. Hierfür ragen drei Rollen 221, 221', 221" in das Frachtraumdeck hinein.

Fig. 5 zeigt eine zweite Funktionsposition, bei der die Lauffläche 225 oben liegt und einen Teil des Frachtraumdecks bildet. In die Lauffläche 225 ist eine Fixiervorrichtung 300 mit einer Öse 321 eingelassen.

Die Fig. 6 zeigt einen Längsschnitt durch das erste Multifunktionselement 200 in der ersten Funktionsposition. Dieser verdeutlicht, wie die Rollen 221, 221', 221" über das Frachtraumdeck, das hier durch das Frachtraumbodenelement 110a gebildet wird, hinausragt. Die Wendekörperdrehachse 217 läuft parallel zu diesem Schnitt.

Fig. 8 zeigt einen Querschnitt durch das Frachtraumbodenelement 110a mit dem Wendekörper 220 und der Rolle 221 aus Fig. 4. Der Wendekörper 220 befindet sich also wie auch in Fig.6 in der ersten Funktionsposition.

Fig. 7 und 9 zeigen ebenfalls Querschnitte durch das Frachtraumbodenelement 110a, wobei sich der Wendekörper 220 in der zweiten Funktionsposition befindet, in der die Lauffläche 225 einen Teil des Frachtraumdecks bildet. Die Fig. 7 veranschaulicht, dass die Lauffläche 225 mit dem Frachtraumbodenelement 110a in der zweiten Funktionsposition eine plane begehbare Fläche ausbildet.

Zur Fixierung des Wendekörpers 220 haben die Multifunktionselemente 200, 200', 200" einen Wendekörperriegel 226, der über ein Federelement derart vorgespannt ist, dass er in den Funktionspositionen in hierfür vorgesehene Wendekörperriegelaufnahmen 227, 227' am Frachtraumbodenelement 110a einschnappt. Somit ist der Wendekörper 220 in den einzelnen Funktionspositionen fixiert. Der Wendekörperriegel 226 ist derart am Wendekörper 220 angeordnet, dass er in der ersten Funktionsposition unmittelbar zugänglich ist. In der zweiten Funktionsposition lässt sich der Wendekörperriegel 226 über eine Öffnung 223 erreichen.

Erfindungsgemäß dienen die einzelnen Wendekörperhalterungen 210, 210' nicht nur zur Halterung des Wendekörpers 220, sondern auch als Befestigungspunkte für weitere Frachtladekomponenten. So hat das erste Multifunktionselement 200 zusätzliche Vollsitzschienenabschnitte 215b, 215c, 215b', 215c' und Teilsitzschienenabschnitte 215a, 215a', in denen die Frachtladekomponenten fixiert werden können. Beispielsweise kann in den zusätzlichen Vollsitzschienenabschnitten 215b und 215c ein Längsriegel 20 verankert werden. Die Vollsitzschienenabschnitte 215b, 215c, 215b', 215c' sind jeweils parallel zueinander auf einer Lauffläche der ersten Wendekörperhalterung 210 bzw. der zweiten Wendekörperhalterung 210' angeordnet und erstrecken sich - wenn die Wendekörperhalterungen in den Ellipsenausnehmungen 141b, 141b', 141b" montiert sind - in Längsrichtung (X-Richtung) des Flugzeugs. Die Teilsitzschienenabschnitte 215a, 215a' verlaufen auf der Lauffläche der ersten Wendekörperhalterung 210 bzw. der zweiten Wendekörperhalterung 210' quer zu den Vollsitzschienenabschnitten 215b, 215c, 215b', 215c'.

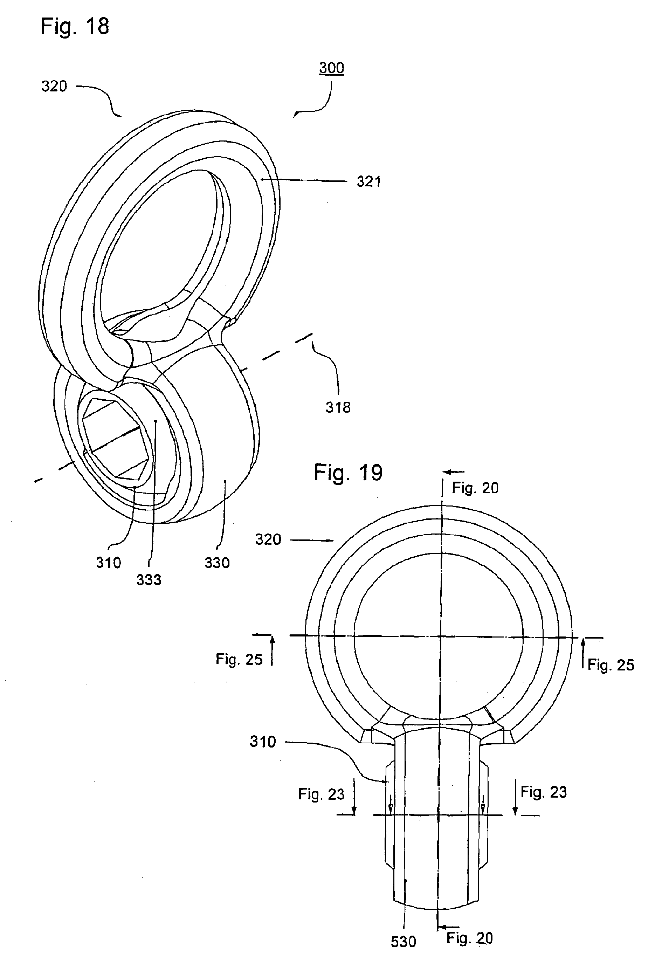

Das zweite Multifunktionselement 200' (Fig. 10) ist größtenteils identisch zu dem ersten Multifunktionselement 200 ausgebildet. In den Laufflächen der Wendekörperhalterungen 210, 210' befinden sich jeweils zwei Vollsitzschienenabschnitte 215b, 215c bzw. 215c', 215b' und ein Teilsitzschienenabschnitt 215a bzw. 215a'. Zusätzlich sind an den Wendekörperhalterungen 210, 210' des zweiten Multifunktionselements 200' jeweils eine Fixiervorrichtung 300 angeordnet, die in die Laufflächen der jeweiligen Wendekörperhalterung 210, 210' eingelassen ist. Zum Versenken der jeweiligen Fixiervorrichtung 300 sind Aussparungen in den Laufflächen vorgesehen. Die Fixiervorrichtungen 300 haben Ösen 321 (vgl. Fig. 18) zur Befestigung von Gurten oder Haken. In einem versenkten Zustand - also in einer Ruheposition - liegen die Ösen 321 in einer im Wesentlichen kreisförmigen Aussparung, die sich um den Teilsitzschienenabschnitt 215a bzw. 215a' des zweiten Multifunktionselements 200' in der jeweiligen Lauffläche erstreckt. Die Fixiervorrichtungen 300 lassen sich in eine Aktivposition bringen, in der Frachtstücke 1, 1', 1" an den Ösen 321 befestigt werden können.

Das dritte Multifunktionselement 200" hat Wendekörperhalterungen 210, 210' mit jeweils einem Vollsitzschienenabschnitt 215b bzw. 215b' und einem Teilsitzschienenabschnitt 215a, 215a'. Des Weiteren umfassen die Wendekörperhalterungen 210, 210' des dritten Multifunktionselements 200" wie auch die des zweiten Multifunktionselements 200' jeweils eine Fixiervorrichtung 300, die jedoch in der X-Y-Ebene um 90 Grad gegenüber den Fixiervorrichtungen 300 des zweiten Multifunktionselements 200' verdreht angeordnet ist. Die Fixiervorrichtungen 300 des dritten Multifunktionselements 200" lassen sich - wenn die Wendekörperhalterungen 210, 210' in den Ellipsenausnehmungen 141b, 141b', 141b" montiert sind - durch eine Bewegung entlang der X-Richtung in in den Laufflächen angeordnete, kreisförmige Aussparung versenken. Somit klappen die Fixiervorrichtungen 300 des dritten Multifunktionselements 200" in eine Ruheposition weg, wenn sie in Längsrichtung von einem Frachtstück 1, 1', 1" überfahren werden. Jede der Wendekörperhalterungen 210, 210' des dritten Multifunktionselements 200" hat hierfür jeweils zwei kreisförmige Aussparungen, die wechselseitig zur Basis oder Drehachse 318 (auch in Fig. 18) der jeweiligen Fixiervorrichtung 300 angeordnet sind.

Anhand der Fig. 18 bis 25 wird die Ausgestaltung der Fixiervorrichtungen 300 zum Einleiten von Zuglasten in einen Frachtraumboden 100 genauer beschrieben. Derartige Fixiervorrichtungen 300 können mittelbar (z.B. über die Wendekörperhalterungen 210, 210') oder unmittelbar an dem Frachtraumboden 100 angebracht werden. Es ist auch möglich, die Fixiervorrichtung 300 über einen Schnellverschluss in einer der Schienen 120 bis 130, 120' bis 122' anzubringen.

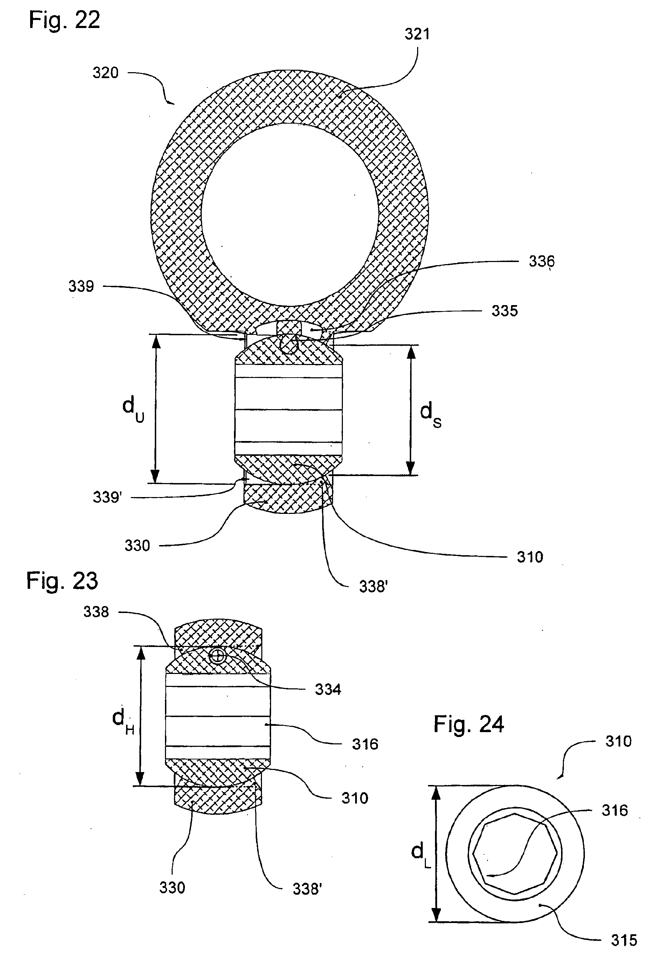

Wie in der Fig. 18 gezeigt, hat eine Ausführungsform der erfindungsgemäßen Fixiervorrichtung 300 einen Lagerring 310, ein Fixierelement 320 und einen integral mit dem Fixierelement 320 verbundenen Gegenlagerring 330. Die Zuglast kann in das Fixierelement 320 über eine Öse 321 eingeleitet werden. Die Öse 321 ist kreisförmig ausgebildet und gegenüber dem Gegenlagerring 330 um 90 Grad verdreht. Die durch den Gegenlagerring 330 aufgespannte Ebene steht also auf der durch die Öse 321 aufgespannten Ebene senkrecht (vgl. Fig. 19). Der Lagerring 310 wird zur Bildung eines Kugelgelenks von dem Gegenlagerring 330 umschlossen. Vorzugsweise weist der Lagerring 310, wie in Fig. 24 gezeigt, ein Innenprofil 316 auf, das sich auf eine Lagerachse (nicht gezeigt) aufstecken lässt, die drehfest mit einem Frachtraumbodenelement 110a, 110b, dem Wendekörper 220 (Fig. 5) oder den Wendekörperhalterungen 210, 210' (Fig. 10 oder 11) verbunden ist. Die Längsachse der symmetrischen Lagerachse fällt mit einer Drehachse 318 zusammen, um die das Fixierelement 320 verschwenkt werden kann. Das Fixierelement 320 lässt sich also aus der Ruhestellung (vgl. Fig. 10) in die Aktivposition (vgl. Fig. 9) bringen. Wie in der Fig. 22 und 23 gezeigt, hat der Lagerring 310 für die Durchführung der Rotationsbewegung eine konvexe, konstant gekrümmte Außenmantelfläche 313, die von einer korrespondierend ausgebildeten Innenmantelfläche 333 des Gegenlagerrings 330 umschlossen wird.

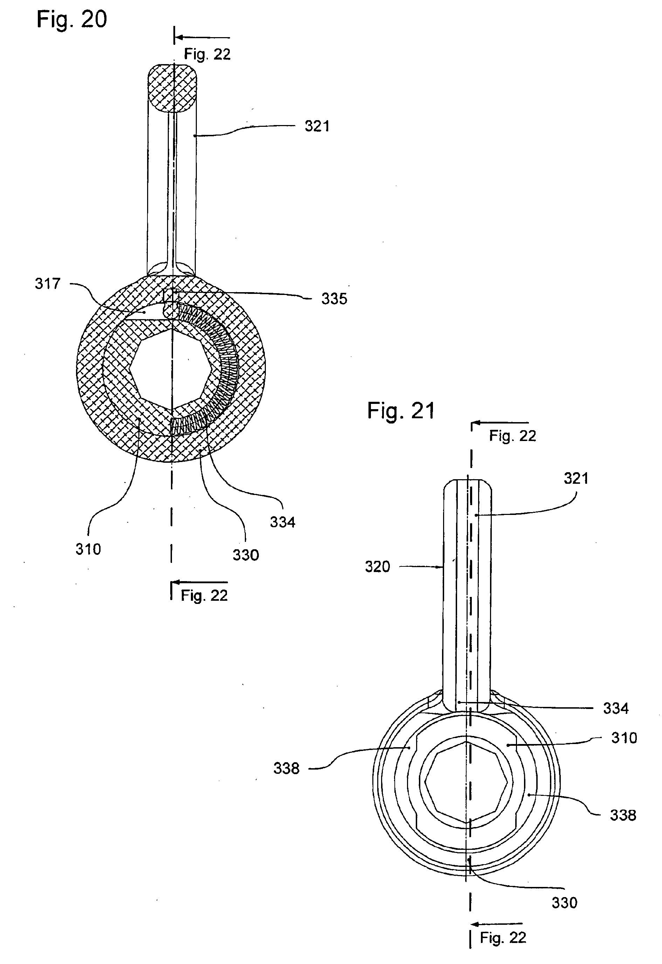

Die Fixiervorrichtung 300 hat ein Federelement bzw. eine Spiralfeder 334, die sich bei der Rotation aus der Ruhestellung in die Aktivposition spannt und, soweit keine Kraft mehr auf die Öse 321 wirkt, die Fixiervorrichtung 300 in die Ruhepositionen bewegt. Das heißt, soweit auf die Fixiervorrichtung 300 keine Zugkraft ausgeübt wird, schwenkt diese in die Ruheposition zurück. Das Fixierelement 320 ist also in die Ruheposition vorgespannt. Die Spiralfeder 334 ist, wie in Fig. 20 gezeigt, im Inneren des Lagerrings 310 angeordnet. Zur Aufnahme der Spiralfeder 334 ist eine Radialausnehmung 317 am Lagerring 310 vorgesehen, die sich über einen Winkelbereich von ca. 180 Grad radial um die Drehachse 318 erstreckt. Die Radialausnehmung 317 ist, wie in Fig. 23 gezeigt, von den Seiten des Lagerrings nicht zugänglich und korrespondierend zur Spiralfeder 334 ausgebildet. Die Spiralfeder 334 greift mit einem Ende direkt an den Lagerring 310 ein. Das andere Ende der Spiralfeder 334 kontaktiert einen Dornfortsatz 335, der kraftschlüssig am Gegenlagerring 330 in einer hierfür vorgesehenen Dornfortsatzaufnahme 336 verankert ist.

Um das Fixierelement 320 gegenüber dem Lagerring 310 verkippen zu können - um also weitere Freiheitsgrade bereitzustellen -, ist die Dornfortsatzaufnahme 336 derart großzügig bemessen, dass sich der Dornfortsatz 335 entlang der Drehachse 318 verschieben oder kippen lässt.

In der gezeigten, bevorzugten Ausführungsform lässt sich die Fixiervorrichtung 300 für den Einbau beispielsweise in den Frachtraumboden zerlegen. Zum einen kann die Lagerachse abgenommen werden. Zum anderen lässt sich der Lagerring 310 aus dem Gegenlagerring 330 herausnehmen. Wie in der Fig. 23 gezeigt, wird die Innenmantelfläche 333 zumindest teilweise durch die Schulterabschnitte 338, 338' ausgebildet. Diese Schulterabschnitte erstrecken sich im Wesentlichen radial um die Drehachse 318 und bilden die Randbereiche der Innenmantelfläche 333. Der erste Schulterabschnitt 338 ist abschnittsweise durch die Unterbrechungsabschnitte 339, 339' unterbrochen (vgl. Fig. 21). Die Unterbrechungsabschnitte 339, 339' liegen einander gegenüber und haben einen Unterbrechungs-Innendurchmesser d_{U}, der größer oder gleich einem Lagerring-Außendurchmesser d_{L} des Lagerrings 310 ist. Die Unterbrechungsabschnitte 339, 339' sind derart korrespondierend zu dem Lagerring 310 ausgebildet, dass sich der Lagerring 310 - wenn um 90 Grad gegenüber dem Gegenlagerring 330 gekippt - in den Gegenlagerring einführen oder aus diesen herausnehmen lässt. Dreht man den Lagerring 310 derart, dass dessen Symmetrieachse (entspricht der Drehachse 318) im Wesentlichen koaxial zur Symmetrieachse des Gegenlagerrings 330 liegt, so ist es nicht möglich, den Lagerring 310 aus dem Gegenlagerring 330 zu entnehmen, da die Schulterabschnitte 338, 338' mit einem Schulterabschnitt-Innendurchmesser d_{S} kleiner als der Lagerring-Außendurchmesser d_{L} den Lagerring 310 im Gegenlagerring 330 zurückhalten. In diesem Zustand kann die Fixiervorrichtung 300 also zum Aufnehmen von Zugkräften verwendet werden. Die eingebaute Lagerachse verhindert, dass der Lagerring 310, wie oben beschrieben, im eingebauten Zustand um 90 Grad verkippt wird. Dennoch ist eine gewisse Verkippung entlang der Drehachse 318 möglich, so dass die Öse 312 so ausgerichtet werden kann, dass eine wirkende Zugkraft optimal in die Lagerachse und dann in den Frachtraumboden 100 eingeleitet werden kann. Der Lagerring 310 und der Gegenlagerring 330 bilden also eine Art Drehgelenk zur gelenkigen Befestigung der Öse 312 an der Lagerachse.

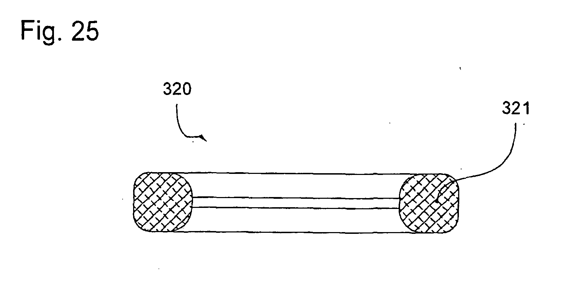

Fig. 25 zeigt einen Schnitt durch das Fixierelement 320.

Die Fig. 12 zeigt einen weiteren Erfindungskomplex, nämlich die Seitenführung 400 in einer Seitenansicht, wobei diese einen winkligen Körper ausbildet, der aus einem Fußelement 410a und einem Führungselement 420 besteht. Das Fußelement 410a hat ein vorderes Fixierelement 411a und ein hinteres Fixierelement 412a, die dazu ausgebildet sind, die Seitenführung 400 in Schienen 120 bis 130, 120' bis 129', insbesondere wie in der Fig. 13 gezeigt, in den Schienen 120, 121, zu verankern. Vorzugsweise umfasst das Führungselement 420 eine Führungsschiene 423, die auf mehreren Fußelementen 410a, 410b angeordnet ist. Im in den Fig. 12 und 13 gezeigten Ausführungsbeispiel ist die Führungsschiene 423 auf das Führungselement 420 aufgeklippt. Das Führungselement 420 bildet zusammen mit der Führungsschiene 423 eine Vertikalführungsfläche 421, die dazu geeignet ist, Frachtstücke 1, 1', 1" entlang der Längsrichtung des Flugzeuges zu führen. Das Fußelement 410a hat eine Horizontalführungsfläche 422, die rechtwinklig zur Vertikalführungsfläche 421 angeordnet ist. Diese Horizontalführungsfläche 422 ist dazu ausgebildet, die Frachtstücke 1, 1', 1" in Z-Richtung abzustützen. Sie kann auch mit Rollenelementen ausgestattet sein, um eine Bewegung der Frachtstücke 1, 1', 1" in X-Richtung zu erleichtern.

Vorzugsweise hat die Führungsschiene 423 einen Führungsschienenfortsatz 424, der sich im Wesentlichen parallel zur Horizontalführungsfläche 422 erstreckt und dazu ausgebildet ist, die Frachtstücke 1, 1', 1" zumindest teilweise zu umgreifen. Somit sind Abschnitte der Frachtstücke 1, 1', 1" zwischen der Horizontalführungsfläche 422 und dem Führungsschienenfortsatz 424 eingeklemmt, so dass die Frachtstücke 1, 1', 1" in vertikaler Richtung (Z-Richtung) abgesichert sind.

In einem weiteren Ausführungsbeispiel kann die Seitenführung 400 ein Führungselement 420 umfassen, das integral mit der Führungsschiene 423 verbunden ist. Dieses Führungselement 420 kann dann abnehmbar an dem Fußelement 410a oder dem Fußelement 410b befestigt sein. Beispielsweise können die Fußelemente 410a, 410b Gewinde aufweisen, in die entsprechend an dem Führungselement 420 angeordnete Fixierschrauben eingeschraubt werden können.

In einem weiteren Ausführungsbeispiel der Seitenführung 400 kann diese aus einem einzigen Führungselement 420 und einem einzigen Fußelement 410a bestehen. In dieser Ausführungsform kann auf eine Führungsschiene 423 verzichtet werden. In diesem Fall ist das Führungselement 420 ebenfalls abnehmbar mit dem Fußelement 410a verbunden. Zur Verbindung der einzelnen Elemente können beliebige Befestigungsmechanismen verwendet werden, beispielsweise kann das Führungselement 420 auf das Fußelement 410a aufgesteckt werden. In einem anderen Ausführungsbeispiel kann ein Schnappverschluss vorgesehen werden, um das Führungselement 420 und das Fußelement 410a zu verbinden.

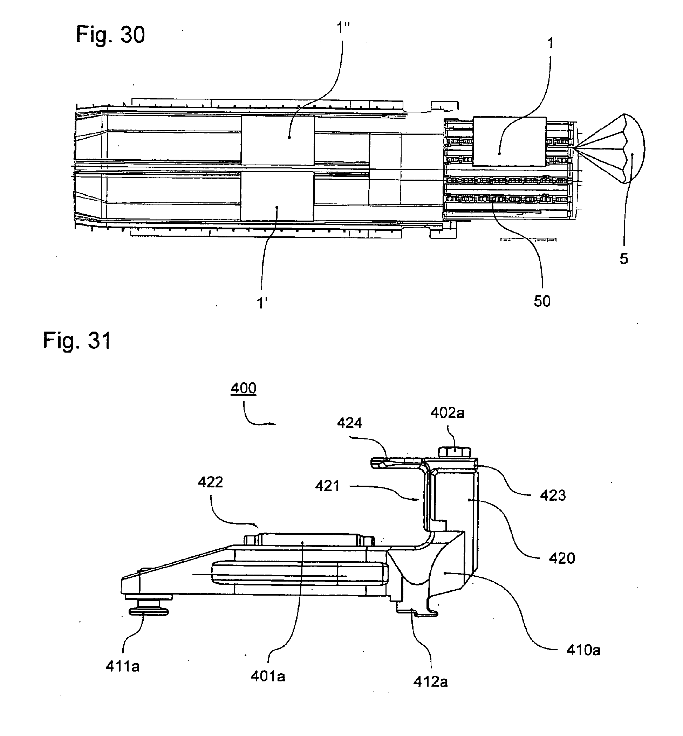

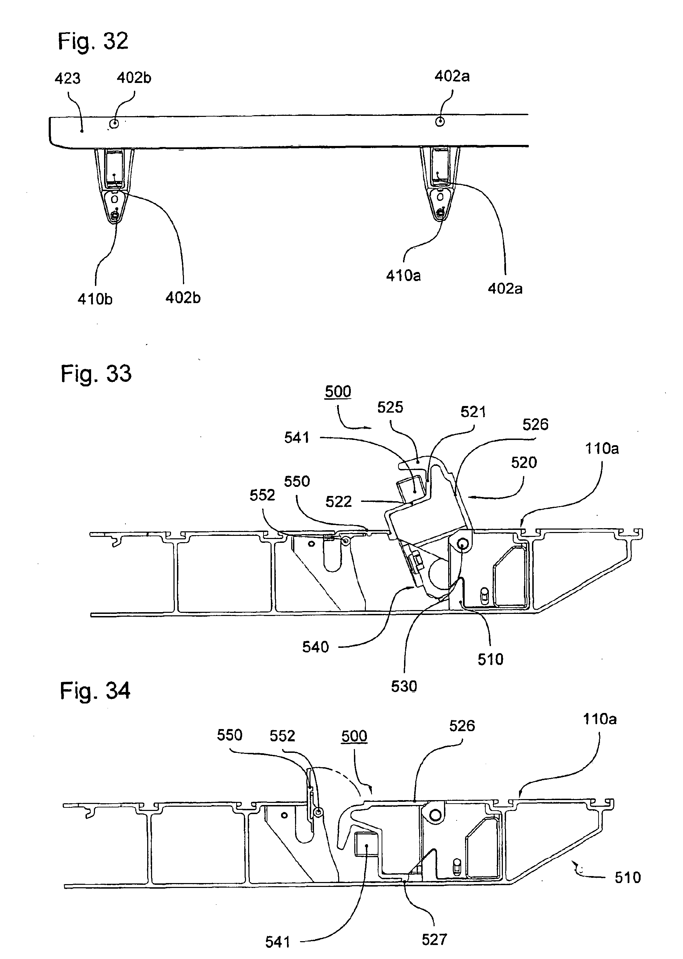

Eine weitere Seitenführung 400 wird in den Fig. 31 und 32 gezeigt. Das Fußelement 410 ist integral mit dem Führungselement 420 verbunden und hat ein vorderes Fixierelement 411a und ein hinteres Fixierelement 412a zur Verbindung mit einer Schiene 120 bis 130, 120' bis 129'. Eine horizontale Führungsfläche 422 weist eine Führungsrolle 401a auf, so dass Frachtstücke 1, 1', 1" mit geringer Reibung entlang der Längsrichtung des Flugzeugs transportiert werden können. Eine Führungsschiene 423 ist in das Führungselement 420 eingehakt und mit diesem über eine Befestigungsschraube 402a verschraubt. Die Führungsschiene 423 lässt sich also montieren und demontieren. Auch die Seitenführung 400 der Fig. 31 und 32 hat einen Führungsfortsatz 424. Vorzugsweise wird die Führungsschiene 423 an mindestens zwei Fußelementen 410a, 410b befestigt. Das zweite Fußelement 410b ist im Wesentlichen identisch zu dem ersten Fußelement 410a ausgebildet. Es hat ebenfalls eine Führungsrolle 401b und eine Befestigungsschraube 402b zur Befestigung der Führungsschiene.

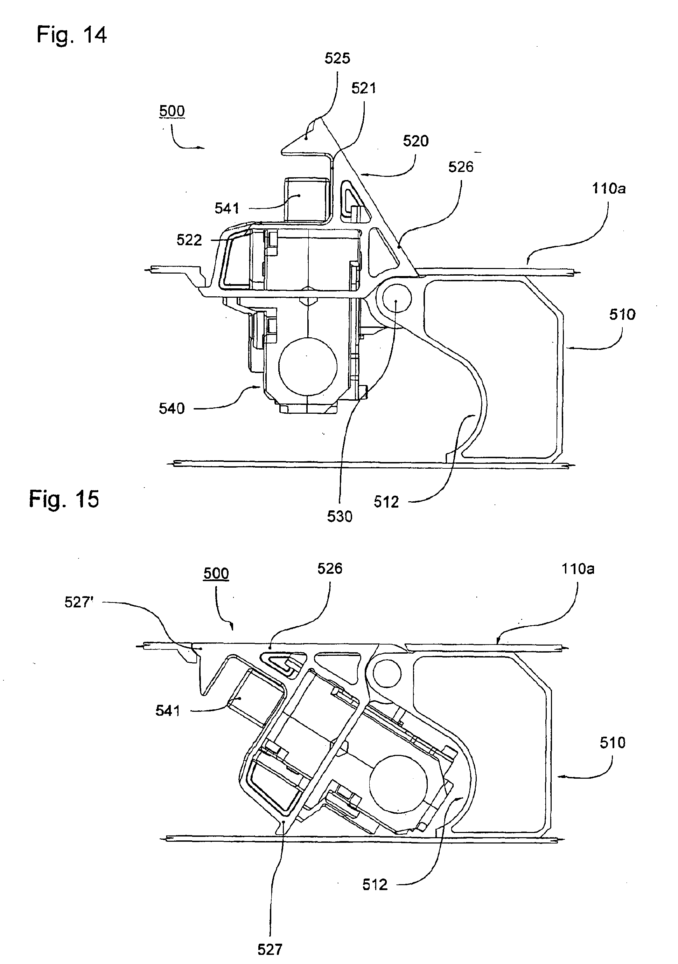

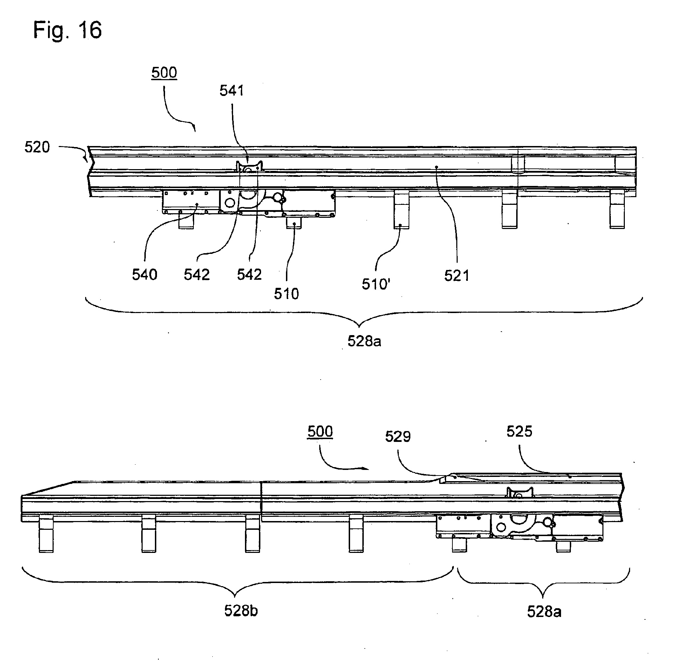

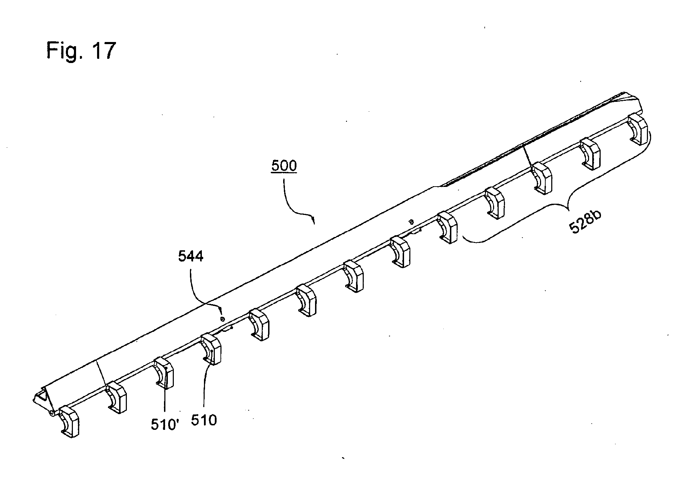

Eine weitere erfindungsgemäße Seitenführung 500 geht aus den Fig. 14 bis 17 hervor. Ein wesentlicher Aspekt dieser Seitenführung 500 ist deren Verschwenkbarkeit. Auch die Seitenführung 500 lässt sich grob in ein Fußelement 510, 510' und ein Führungselement 520 untergliedern. Wie in Fig. 14 gezeigt, ist das Führungselement 520 über ein Drehgelenk 530 gelenkig mit dem Fußelement 510 verbunden. Weitere Drehgelenke 530 sind vorzugsweise an weiteren Fußelementen 510, 510' vorgesehen. Insgesamt erstreckt sich das Führungselement 520, wie in den Fig. 16 und 17 gezeigt, über mehrere Fußelemente 510, 510'. Die Fußelemente 510, 510' sind dazu ausgebildet, mit einem Frachtraumbodenelement 110a, 110b, z.B. dem Frachtraumbodenelement 110a verbunden zu werden. In dem in Fig. 14 gezeigten Ausführungsbeispiel ist das Fußelement 510 ein integraler Bestandteil des Frachtraumbodenelements 110a. Das Führungselement 520 hat eine Vertikalführungsfläche 521, eine Horizontalführungsfläche 522 und einen Führungsvorsprung 525. Insgesamt bilden die Vertikalführungsfläche 521, die Horizontalführungsfläche 522 und der Führungsvorsprung 525 im Querschnitt ein U-Profil, das dazu ausgebildet ist, den Seitenrand eines Frachtstücks 1, 1', 1" zu umgreifen. Somit wird das Frachtstück 1, 1', 1" auf der Horizontalführungsfläche 522 gelagert, entlang der Vertikalführungsfläche 521 geführt und mittels des Führungsvorsprungs 525 derart abgesichert, dass das Frachtstück 1, 1', 1" nicht in vertikale Richtung aus dem Führungselement 520 herausspringen kann.

Das Führungselement 520 hat einen Rahmen zur Bereitstellung der Vertikalführungsfläche 521 und der Horizontalführungsfläche 522. Der Rahmen dient auch zum Einleiten der auf das Führungselement 520 wirkenden Kräfte in das Frachtraumbodenelement 110a und/oder die Fußelemente 510, 510' sowie zum teilweisen Bilden des Drehgelenks 530. Dieser Rahmen besteht im Wesentlichen aus zwei in einem spitzen Winkel zueinander geneigten Flächenelementen, die die weiteren Bestandteile des Führungselements 520 aufnehmen. Die Flächenelemente erstrecken sich - wenn die Seitenführung 500 im oder am Frachtraumboden 100 montiert ist - entlang der Längsrichtung des Flugzeugs und nehmen in dem in den Figuren gezeigten Ausführungsbeispiel zueinander einen Winkel von ca. 60 Grad ein. Das Drehgelenk 530 befindet sich im Wesentlichen im Schnittbereich dieser Flächenelemente. Die gegenüberliegende offene Seite bildet das U-Profil zur Aufnahme der Frachtstücke 1, 1', 1". Das obere Flächenelement bildet eine Deckelfläche 526.

Ein besonderer Vorteil der Seitenführung 500 besteht darin, dass sich diese aus einer Führungsposition (vgl. Fig. 14) mittels des Drehgelenks 530 in eine Aufbewahrungsposition (vgl. Fig. 15) verschwenken lässt. In der Aufbewahrungsposition hält die Deckelfläche 526 zusammen mit dem Frachtraumbodenelement 110a einen Teil des Frachtdecks. Das Frachtdeck ist also im Wesentlichen plan und lässt sich problemlos befahren oder begehen, da das Führungselement 520 nicht über das Frachtraumbodenelement 110a hinausragt. Um eine möglichst stabile Frachtdeckkonstruktion bereitzustellen, hat die Deckelfläche 526 am offenen Ende des Rahmens einen Stützabschnitt 527', der in der Aufbewahrungsposition auf einem korrespondierend ausgestalteten Abschnitt des Frachtraumbodenelements 110a aufliegt. Die Deckelfläche 526 ist also über das Drehgelenk 530 und den Stützabschnitt 527' am Frachtraumbodenelement 110a gelagert und deckt eine Öffnung im Frachtraumbodenelement 110a ab, in der in der Aufbewahrungsposition das Führungselement 520 lagert. Das untere Flächenelement des Rahmens des Führungselements 520 hat einen weiteren Stützabschnitt 527, der ebenfalls auf dem Frachtraumbodenelement 110a aufliegt. Hierfür ist der Abstand des weiteren Stützabschnitts 537 zur Deckelfläche 526 so bemessen, dass dieser der Tiefe der Öffnung zur Aufnahme des Führungselements 520 entspricht. Der Rahmen des Führungselements 520 ist also zur effektiven Abstützung der Deckelfläche 526 in der Aufbewahrungsposition ausgebildet (geeignete Wahl des Anstellwinkels der Flächenelemente, geeignete Dimensionierung des Rahmens).

Um Frachtstücke 1, 1', 1" in der Seitenführung 500, insbesondere in dem gebildeten U-Profil, gegen eine Längsbewegung abzusichern, ist am Rahmen ein Riegelelement 540 angeordnet. Dieses erstreckt sich im Wesentlichen parallel zur Vertikalführungsfläche 521 und ragt von unten (von der dem Frachtraumbodenelement 110a zugewandten Seite) in das Führungselement 520 hinein. Dieses Riegelelement 540 hat eine Riegelnase 541, die sich in der Führungsposition zwischen einer Verriegelungsstellung und einer Ruhestellung hin und herbewegen lässt. Die Bewegung der Riegelnase 541 erfolgt im Wesentlichen parallel zur Vertikalführungsfläche 521. In der Verriegelungsstellung ragt die Riegelnase 541 derart in das oben beschriebene U-Profil hinein, dass Frachtstücke 1, 1', 1" in X-Richtung abgesichert werden können. Beispielsweise kann die Riegelnase 541 in eine Eingriffsausnehmung eingreifen, die am Frachtstück 1, 1', 1" vorgesehen ist. Zur Betätigung der Riegelnase 541 ist eine relativ voluminöse Mechanik notwendig. Diese überragt den Rahmen des Führungselements 520 nach unten hin. Die Seitenführung 500 ist derart ausgebildet, dass der entsprechend voluminöse Aufbau in der Ruheposition seitlich wegklappt und in einen Riegelaufnahmebereich 512 aufgenommen wird. Durch das Anordnen des Riegelelements 540 im Wesentlichen unterhalb des Rahmens des Führungselements 520 lässt sich die Mechanik des Riegelelements 540 in der Aufbewahrungsposition relativ einfach verstauen. Es ist möglich, Frachtraumbodenelemente 110a, 110b bereitzustellen, die nur einen relativ geringen Aufbau haben und dennoch das gesamte Riegelelement 540 in der Aufbewahrungsposition aufnehmen können. Vorzugsweise ist der Rahmen, also das Führungselement 520, als Extrusionsprofil hergestellt.

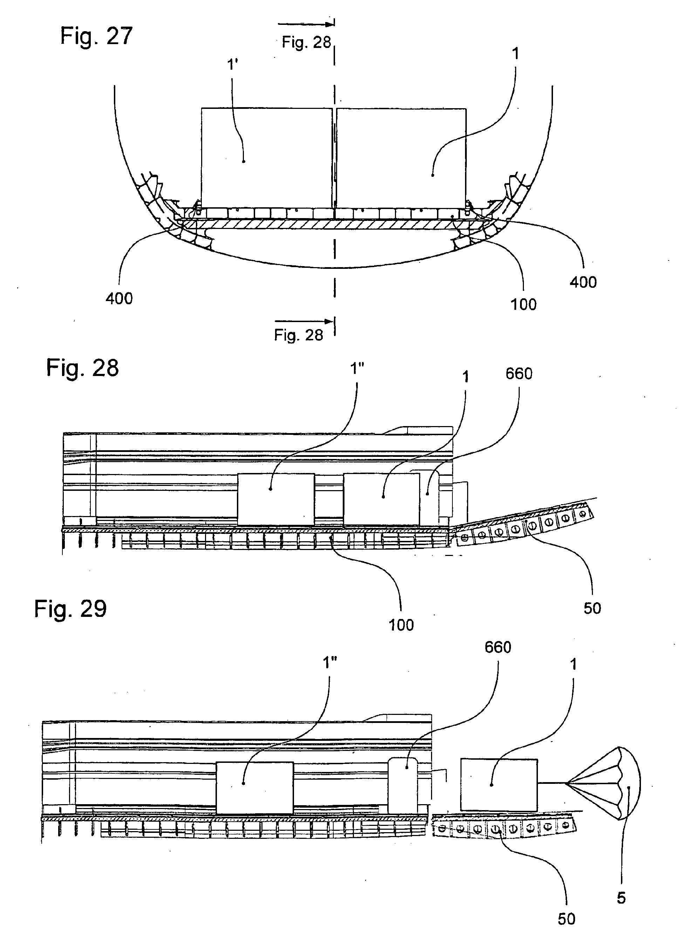

Die Fig. 17 zeigt die gesamte Seitenführung 500 in einer perspektivischen Seitenansicht mit einer Vielzahl von Fußelementen 510, 510'. Zur Verdeutlichung der Funktionalität und Ausgestaltung der Seitenführung 500 sind in den Fig. 16 und 17 das Frachtraumbodenelement 110a nicht abgebildet. Die Fig. 16 und 17 zeigen eine besondere Ausführungsform der erfindungsgemäßen Seitenführung 500. In Längsrichtung des Flugzeugs betrachtet, hat die Seitenführung 500 gemäß einem weiteren Erfindungskomplex zwei sich unterscheidende Abschnitte, nämlich einen Halteabschnitt 528a und einen Abwurfabschnitt 528b. Diese besondere Ausgestaltung der Seitenführung 500 ist besonders vorteilhaft, wenn sie an einer Heckklappe 50 (vgl. Fig. 28 und 29) eines Flugzeugs angeordnet ist. Diese besondere Ausgestaltung der Seitenführung 500 eignet sich zur Verwendung beim Abwerfen von Frachtstücken 1, 1', 1" aus dem Frachtraum eines Flugzeugs aus der Luft. Bei einem derartigen Abwurf wird wie beispielsweise in den Fig. 28, 29 und 30 gezeigt, die Heckklappe 50 des Flugzeugs herabgesenkt, ein Fallschirm 5 aus dem Flugzeug geworfen, der dann ein Frachtstück 1 über die Heckklappe aus dem Flugzeug zieht. Vorzugsweise bilden Frachtraumbodenelemente 110a, 110b auf der Heckklappe 50 einen durchgehenden Frachtraumboden 100, wenn die Heckklappe 50 herabgesenkt ist.

Gemäß einem Erfindungskomplex der vorliegenden Anmeldung hat die Heckklappe 50 die in den Fig. 16 und 17 gezeigte Seitenführung 500, die den Abwurf der Frachtstücke 1, 1', 1" während des Fluges erleichtert. Hierfür ist die Seitenführung 500 mit dem Halteabschnitt 528a und dem Abwurfabschnitt 528b derart an den Seiten der Heckklappe 50 angeordnet, dass der Abwurfabschnitt 528b heckseitig zu dem Halteabschnitt 528a liegt. Die gegenüber liegende Seite der Heckklappe 50 sollte eine korrespondierend ausgebildete Seitenführung 500 umfassen. Soweit der Frachtraum über mehrere Bahnen zur Befestigung und Führung von Frachtstücken 1, 1', 1" aufweist, müssen weitere korrespondierend ausgebildete Seitenführungen 500 (z.B. "center rails") auf der Heckklappe 50 vorgesehen sein. Das Ausführungsbeispiel gemäß den Fig. 27 bis 30 zeigt beispielsweise einen Frachtraum mit zwei parallel verlaufenden Frachtbahnen. Insgesamt sollten bei einer derartigen Ausführungsform vier korrespondierend ausgebildete Seitenführungen 500 auf der Heckklappe 50 angeordnet sein, um die einzelnen Frachtstücke 1, 1', 1" jeweils paarweise beim Abwurf zu führen. Wie bereits anhand der Fig. 14 und 15 verdeutlicht, hat die Seitenführung 500 im Halteabschnitt 528a einen Führungsvorsprung 525 der sich entlang der Längsrichtung des Flugzeugs erstreckt. Dieser Führungsvorsprung 525 ist im Abwurfabschnitt 528b unterbrochen, so dass die Frachtstücke 1, 1', 1" nach oben durch den Fallschirm 5 aus der Seitenführung 500 herausgehoben werden können. Vorzugsweise ist der Führungsvorsprung 525 an einem Endabschnitt 529 derart abgeflacht, dass das Spiel zwischen der Horizontalführungsfläche 522 und dem Führungsvorsprung 525 in einem Übergangsbereich zwischen dem Halteabschnitt 528a und dem Abwurfabschnitt 528b zunimmt. Somit können die Frachtstücke 1, 1', 1" auch bei einem frühzeitigen Abheben nicht zwischen der Horizontalführungsfläche 522 und dem Führungsvorsprung 525 verklemmt werden.

Die besondere Ausgestaltung der Seitenführung 500 für den Abwurf von Frachtstücken 1, 1', 1" während des Fluges hat den Vorteil, dass die Frachtstücke 1, 1', 1" über die gesamte Länge des Flugzeuges in eine Längsrichtung bis über die Heckklappe 50 geführt werden. Somit folgen die Frachtstücke 1, 1', 1" einer vorgegebenen Bahn. Erst im Abwurfabschnitt 528b ist es möglich, dass die Frachtstücke 1, 1', 1" in vertikaler Richtung aus der Seitenführung 500 herausgehoben werden. Somit kann ein sicherer Abwurf unabhängig von dem Neigungswinkel der Heckklappe 50 und der Flugbahn des Fallschirms 5 gewährleistet werden.

Im beschriebenen Ausführungsbeispiel ist die Seitenführung 500, wie bereits anhand den Fig. 14 und 15 erklärt, derart einklappbar, dass die Heckklappe 50 in einem versenkten Zustand der Seitenführung 500 - also in der Aufbewahrungsposition der Seitenführung 500 - begeh- oder befahrbar ist. Diese Versenkbarkeit ist besonders vorteilhaft, wenn der Frachtraum mit Fahrzeugen oder ungenormten Frachtstücken 1, 1', 1" beladen wird. Im beschriebenen Ausführungsbeispiel umfasst der Halteabschnitt 528a der Seitenführungen 500, die auf der Heckklappe angeordnet ist, mehrere Riegelelemente 540. Somit können die Frachtstücke 1, 1', 1" auch in einer abschüssigen Position der Heckklappe 50 zurückgehalten werden, bis sich der Fallschirm 5 entfaltet hat und/oder ein Abwurf gewünscht ist. In einer besonderen Ausgestaltung kann der Halteabschnitt 528a auch dazu verwendet werden, im geschlossenen Zustand der Heckklappe 50 Frachtstücke 1, 1', 1" zur Lagerung aufzunehmen. Der Frachtraum wird also optimal ausgenutzt.

Die Riegelelemente 540 lassen sich vorzugsweise mittels einer Antriebseinheit fernsteuern. Zur sicheren Betätigung der Riegelelemente 540 weisen diese jedoch zusätzlich einen Betätigungshebelanschluss 544 auf, so dass ein Betätigungshebel angeschlossen werden kann, der eine manuelle Verschwenkung der Riegelnase 541 aus der Verriegelungsstellung in die Ruhestellung gewährleistet.

Vorzugsweise umfasst die Riegelnase 541 mindestens zwei Riegelnasenelemente 542, 542', die jeweils mit Anschlagflächen einer Eingriffsausnehmung an den Frachtstücken 1, 1', 1" in Eingriff bringbar sind. Die Riegelnasenelemente 542, 542' sind dabei derart bewegbar gelagert, dass sich beide Anschlagflächen beim Bewegen von der Verriegelungsstellung in die Ruhestellung von den Anschlagrändern entfernen. Somit taucht die Riegelnase 541 nicht nur nach unten weg, sondern wird auch schmäler, so dass diese mit relativ geringem Kraftaufwand aus der Verriegelungsstellung in die Ruhestellung bringbar ist.

Vorab wurde der Erfindungskomplex bezüglich der Verschwenkbarkeit der Seitenführung 500 und der bezüglich der Zweiteilung (Halteabschnitt 528a und Abwurfabschnitt 528b) der Seitenführung 500 anhand eines Ausführungsbeispiels verdeutlicht. Für den hier tätigen Fachmann sollte es jedoch offensichtlich sein, dass sich die einzelnen Erfindungskomplexe auch getrennt voneinander verwirklichen lassen. Ebenso sind die Riegelelemente 540 eine optionale Ergänzung und für keinen der beiden Erfindungskomplexe zwingend notwendig.

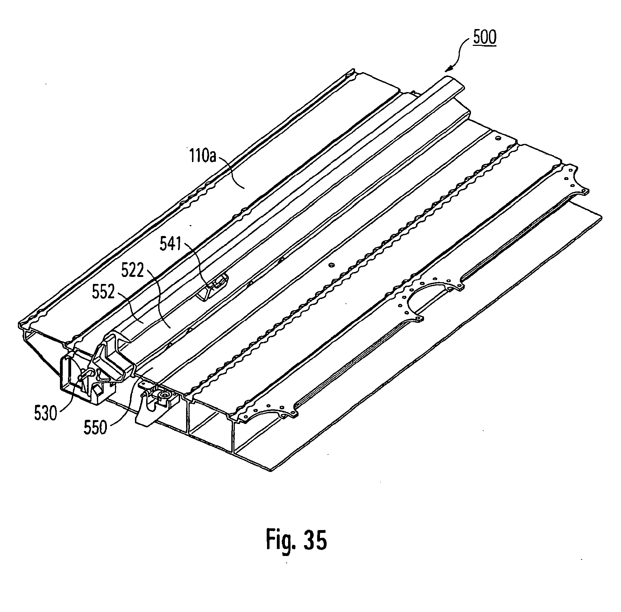

Eine weitere Seitenführung 500, die die genannte Zweiteilung nicht aufweist, geht aus den Fig. 33 bis 35 hervor. Die Seitenführung 500 ist in das Frachtraumbodenelement 110a integriert. Sie setzt sich ebenfalls aus einer Vielzahl von Fußelementen 510, 510' zusammen, die über ein Drehgelenk 530 mit dem Führungselement 520 verbunden sind. Somit lässt sich auch die Seitenführung 500 aus den Fig. 33 bis 35 aus einer Führungsposition (Fig. 33) in eine Aufbewahrungsposition (Fig. 34) verschwenken. Ein im Wesentlichen quaderförmiges Riegelelement 540 ist derart an dem Führungselement 520 angeordnet, dass dieses in der Aufbewahrungsposition parallel zum Frachtraumdeck innerhalb des Frachtraumbodenelements 110a zu liegen kommt. Ein Stützabschnitt 527 stützt das Führungselement 520 in dieser Position gegenüber dem Frachtraumbodenelement 110a ab. Der Rahmen des Führungselements 520 ist derart ausgebildet, dass eine Deckelfläche 526 im Endeffekt eine Verlängerung der Seitenfläche des quaderförmigen Riegelelements 540 ausgestaltet. Diese Deckelfläche 526 bildet in der Aufbewahrungsposition einen Teil des begehbaren Frachtraumdecks aus.

Ein wesentlicher Unterschied zu der Ausführungsform aus den Fig. 14 bis 17 besteht darin, dass das Riegelelement 540 in der Führungsposition nicht senkrecht sondern leicht schräg gegenüber dem Frachtraumdeck und somit auch gegenüber dem Frachtraumboden 100 angeordnet ist. Gegenüber der in dieser Position senkrecht zum Frachtdeck stehenden Führungsfläche 521 ist das Riegelelement 540 also leicht geneigt. Die Riegelnase 541 des Riegelelements 540 ragt also leicht schräg in den durch den Führungsvorsprung 525, die Vertikalführungsfläche 521 und die Horizontalführungsfläche 522 gebildeten Aufnahmebereich hinein. Insbesondere ist das Riegelelement 540 so ausgerichtet, dass sich die Riegelnase 541 in einer Ebene verschwenken lässt, die gegenüber der Vertikalführungsfläche spitzwinklig geneigt ist. Im in den Fig. 33, 34 gezeigten Ausführungsbeispiel beträgt der entsprechende Winkel ca. 21 Grad. Die Horizontalführungsfläche 522 setzt in diesem Ausführungsbeispiel unter Bildung eines stumpfen Winkels an der Vertikalführungsfläche 521 an. Somit bildet die Horizontalführungsfläche 522 in der Führungsposition eine Rampe aus, die in Richtung auf die Vertikalführungsfläche 521 zu ansteigt. Soweit Frachtstücke 1, 1', 1" an die Seitenführung 500 seitlich, also in Y-Richtung, herangefahren werden, hilft die gebildete Rampe Seitenbereiche der Frachtstücke 1, 1', 1" in den Aufnahmebereich zu führen. Die Riegelnase 541 lässt sich im Wesentlichen senkrecht zur geneigten Horizontalführungsfläche 522 verschwenken. Durch die Neigung des Riegelelements 540 lässt sich eine Konstruktion der Seitenführung 500 erzielen, die einen geringeren Platzbedarf hat. Die Höhe des Frachtraumbodenelements 110a lässt sich also verringern.

Die Neigung der Horizontalführungsfläche 522 hat des Weiteren den Vorteil, dass heranfahrende Frachtstücke 1, 1', 1" kontinuierlich abgebremst werden und eine geringere Punktlast am Führungselement 520 auftritt.

Zum Versenken der Seitenführung 500 aus der Führungsposition in die Aufbewahrungsposition ist es notwendig, eine über ein Abdeckklappengelenk 552 am Frachtraumbodenelement 110a angebrachte Abdeckklappe 515 zu öffnen. Danach lässt sich das Führungselement 520 einklappen. Die Abdeckklappe 550 wird wieder in die Ausgangsposition gebracht, so dass sie zusammen mit der Deckelfläche 526 einen ebenen begehbaren Untergrund bildet.

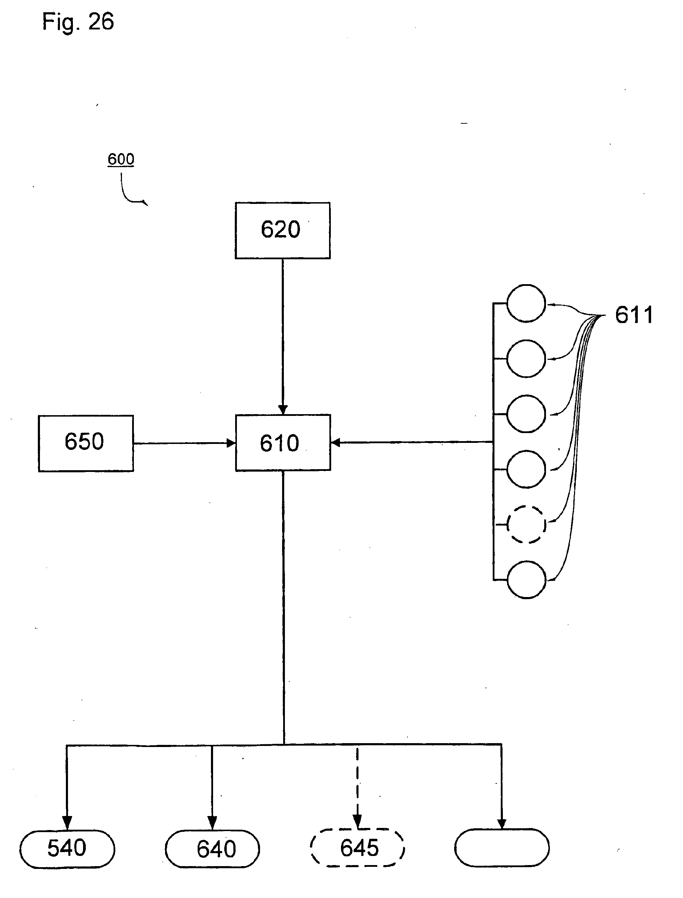

Gemäß einem weiteren Erfindungskomplex der vorliegenden Anmeldung umfasst das Flugzeug ein Abwurfkontrollsystem 600 (Fig. 26) zur Steuerung und Überwachung der Abwurfvorgänge. Das Abwurfkontrollsystem 600 hat eine Steuerung 610, die eine Vielzahl von Sensorsignalen 611 empfängt. Hierfür sind entsprechende Sensorsignaleingänge an der Steuerung 610 vorgesehen. Zusätzlich kann die Steuerung 610 eigene Sensoren aufweisen, um Sensorsignale 611 abzufragen. Diese Sensorsignale 611 können Aufschluss über einen Flugzustand des Flugzeugs geben. Beispielsweise können die Sensorsignale 611 eine Geschwindigkeit, einen Steigungswinkel, einen Flugweg, eine Flugrichtung und/oder eine Beschleunigung des Flugzeugs angeben. Des Weiteren können die Sensorsignale 611 Informationen bezüglich des Frachtladesystems bereitstellen. So können diese Aufschluss über einen Neigungswinkel der Heckklappe 50, einen Zustand der Riegelelemente 540 oder Ähnliches geben. Vorzugsweise gibt es Riegelsensoren im Frachtladesystem, welche mindestens einen Verriegelungszustand und/oder mindestens eine Position und/oder mindestens eine Federvorspannung eines Federelements und/oder mindestens eine Motorstromaufnahme und/oder mindestens eine Bremsentemperatur und/oder eine Platinentemperatur und/oder mindestens eine Phasenverschiebung der Eingangsspannung der Riegelelemente 540 angeben.

Die Steuerung 610 steht in kommunikativer Verbindung mit einem Flugdatencomputer 620, der einen Teil der oben genannten Informationen bereitstellt (z.B. Flugstrecke, Flugrichtung usw.).

Das Abwurfkontrollsystem 600 hat eine Vielzahl von Aktuatoren, die von der Steuerung 610 betätigt werden, um einen kontrollierten Abwurf der Frachtstücke 1, 1', 1" durchzuführen. So lassen sich die über den Frachtraum verteilten Riegelelemente 540 aus einer Verriegelungsstellung in eine Ruhestellung bringen. Vorzugsweise sind zumindest einige der Riegelelemente 540 des Frachtraums derart ausgebildet, dass sie drei Zustände einnehmen können, nämlich eine Verriegelungsstellung, eine Auslösestellung und eine Ruhestellung. Entsprechende Riegelelemente sind in der PCT-Anmeldung mit dem Anmeldeaktenzeichen PCT/EP2009/004486 sowie in der PCT-Anmeldung mit dem Anmeldeaktenzeichen PCT/EP2009/004485 beschrieben. Des Weiteren können an die Steuerung 610 eine Fallschirmauslösevorrichtung 640 und eine Fallschirmabkoppelungsvorrichtung 645 angeschlossen sein. Des Weiteren können aktive Rolleneinheiten oder beliebige andere Funktionseinheiten wie beispielsweise die Pneumatik der Heckklappe durch die Steuerung 610 gesteuert bzw. betätigt werden.

Vorzugsweise umfasst das Abwurfkontrollsystem 600 eine Handsteuereinrichtung 650, mit der einzelne Funktionen der Steuerung 610 aktiviert und deaktiviert werden können. Beispielsweise kann das Abwurfkontrollsystem 600 einen Totmannschalter haben, der mit der Steuerung 610 derart zusammenwirkt, dass nur bei Betätigung der Schalteinrichtung die Riegelelemente 540 und/oder die Fallschirmauslösevorrichtung 645 durch die Steuerung 610 betätigbar sind. Vorzugsweise umfasst das Abwurfkontrollsystem 600 eine Vielzahl von im Flugzeug angeordnete Schalttafeln zum Anzeigen von Zuständen des Abwurfkontrollsystems 600 sowie zum Eingeben von Steuersignalen an die Steuerung 610. Die Schalttafeln sind vorzugsweise so über den Frachtraum verteilt, dass das das Abwurfkontrollsystem 600 bedienende Personal stets Zugriff auf eine dieser Schalttafeln hat.

Bei einem Abwurfvorgang mit dem erfindungsgemäßen Abwurfkontrollsystem 600 kennt die Steuerung 610 die einzelnen Zielkoordinaten für die einzelnen Frachtstücke 1, 1', 1". Sobald sich das Flugzeug einer ersten Zielkoordinate für ein erstes Frachtstück 1, 1', 1" (vgl. Fig. 27) im Frachtraum nähert, senkt die Steuerung 610 die Heckklappe 50 in eine optimale Position ab. Die optimale Position der Heckklappe 50 ist üblicherweise eine Position, in der die Heckklappe 50 den Frachtraumboden 100 eben fortsetzt, da es dann zu keinem Verklemmen der Frachtstücke 1, 1', 1" beim Überfahren der Anschlussstelle kommen kann. Entsprechende Sensoren an oder in der Heckklappe 50 können helfen, diese optimale Position zu bestimmen. Die Steuerung 610 kann den Neigungswinkel des Flugzeugs berechnen, um zu überprüfen, ob ein sicherer Abwurf möglich ist. Häufig wird ein Neigungswinkel des Flugzeugs bevorzugt, bei dem die entsicherte Ladung aufgrund der Schwerkraft aus dem Frachtraum herausrollt.

Das automatische Absenken der Heckklappe 50 durch die Steuerung 610 ist optional. Es wäre auch denkbar, dass die Steuerung 610 ein entsprechendes Signal an das Bedienpersonal ausgibt, so dass dieses das Öffnen der Heckklappe 50 manuell durchführt oder ein automatisches Öffnen bestätigt. Vor dem Abwurf wird das abzuwerfende Frachtstück 1 durch mehrere, am Frachtraumboden 100 angeordnete Riegelelemente 540 gehalten. Die Riegelelemente 540 sind im beschriebenen Ausführungsbeispiel in einem Paar der Seitenführungen 500 vorgesehen. Die Riegelelemente 540 werden aufgrund eines Steuersignals in eine Auslösestellung gebracht, in der eine vordefinierte Kraft nötig ist, um die Riegelelemente 540 zu überfahren (vgl. Fig. 28). Danach veranlasst die Steuerung 610 die Fallschirmauslösevorrichtung 640, einen an dem Frachtstück 1 befestigten Fallschirm 5 auszuwerfen. Der Fallschirm 5 bringt eine ausreichende Kraft auf, um die Riegelelemente 540, die sich in der Auslösestellung befinden, zu überfahren. Das Frachtstück 1 wird mittels der bereits beschriebenen Seitenführungen 500 so lange geführt, bis es das Flugzeug verlassen hat. Danach kann die Steuerung 610 ein Schließen der Heckklappe 50 veranlassen.

Ein bevorzugter Abwurfvorgang umfasst also die folgenden Schritte:
1. Ein Frachtstück 1, 1', 1" wird durch das Anhängen eines Fallschirms 6 auf den Abwurf vorbereitet.
2. Die Riegelelemente 540 werden nach einem noch genauer zu beschreibenden Testverfahren auf ihre Funktionstüchtigkeit überprüft. Es kann eine Konfiguration der Federvorspannung für die Auslösestellung erfolgen. Somit kann die Kraft, die notwendig ist, um ein Riegelelement in der Auslösestellung zu überfahren, eingestellt werden.
3. Kurz vor dem Abwurf werden sämtliche Riegelelemente 540 bis auf zwei wechselseitig angeordnete Riegelelemente 540 in die Ruhestellung abgesenkt. Die verbleibenden Riegelelemente 540 werden in die Auslösestellung gebracht.
4. Die Steuerung 610 veranlasst zu gegebenem Zeitpunkt den Abwurf des Fallschirms 5.
5. Der Fallschirm 5 erzeugt eine Zugkraft, die abschließend zum Auslösen der verbleibenden Riegelelemente 540 führt. Das heißt, aufgrund der Zugkraft werden die verbleibenden Riegelelemente 540 aus der Auslösestellung in die Ruhestellung gedrückt. Weitere Frachtstücke 1, 1', 1" können an weiteren Zielkoordinaten nach einem ähnlichen Schema abgeworfen werden.

Soweit während des Abwurfs der Frachtstücke 1, 1', 1" ein Problem auftritt, kann die Steuerung 610 den Abwurf abbrechen. Beispielsweise kann ein bereits ausgeworfener Fallschirm mittels einer Fallschirmabkoppelungsvorrichtung 645 abgesprengt werden, so dass keine weitere Zugkraft auf die Frachtstücke 1, 1', 1" ausgeübt wird. Beispielsweise kann sich eines der Frachtstücke 1, 1', 1" nach dem Auswurf des Fallschirms 5 in den Seitenführungen 500 verklemmen. Die Steuerung 610 detektiert diese Situation, indem sie die von dem Fallschirm 5 ausgeübte Kraft auf das Frachtstück 1, 1', 1" misst. Übersteigt diese Kraft zu einem Zeitpunkt, zu dem sich das Frachtstück 1, 1', 1" noch im Frachtraum befindet, einen vorbestimmten Wert, so kann davon ausgegangen werden, dass sich das Frachtstück 1, 1', 1" verklemmt hat.

Das Abwurfkontrollsystem 600 kann des Weiteren eine Testvorrichtung umfassen, welche dazu ausgebildet ist, die einzelnen für einen erfolgreichen Abwurf erforderlichen Funktionseinheiten zu überprüfen. Die Testvorrichtung wird durch die Steuerung 610 implementiert. Beispielsweise kann die Testvorrichtung dazu ausgebildet sein, einzelne Riegelelemente 540 vor einem Abwurf zu betätigen, um festzustellen, ob diese vollständig funktionsfähig sind. Im beschriebenen Ausführungsbeispiel wird ein Frachtstück 1, 1', 1" in der Abwurfposition gegen eine Bewegung auf das Heck oder den Bug des Flugzeugs zu, durch zwei Riegelelemente 540 abgesichert.

In der vorgeschalteten Testphase können die einzelnen Riegelelemente 540 abwechselnd in eine Auslösestellung gebracht werden, wobei jeweils die anderen Riegelelemente 540 in der Verriegelungsstellung verbleiben. Stellt die Testvorrichtung fest, dass eines der Riegelelemente 540 defekt ist, so kann ein Abwurf frühzeitig abgebrochen oder entsprechende Gegenmaßnahmen ergriffen werden.

Vorzugsweise umfasst das Abwurfkontrollsystem 600 mehrere RFID-Tag-Leseeinrichtungen 660, die im Heckbereich ein RFID-Gate bilden (vgl. die Fig. 28 und 29). Diese RFID-Tag-Leseeinrichtungen 660 sind dazu ausgebildet, RFID-Tags an den Frachtstücken 1, 1', 1" beim Beladen des Flugzeugs über die Heckklappe 50 zu erfassen. Somit kennt die Steuerung 610 die Positionen der einzelnen Frachtstücke 1, 1', 1" im Laderaum. Diese Positionen können mit einer Abwurfreihenfolge der Frachtstücke 1, 1', 1" abgeglichen werden, so dass eine fehlerhafte Beladung vermieden wird. Alternativ kann die Abwurfreihenfolge derart angepasst werden, dass das richtige Frachtstück 1, 1', 1" am richtigen Zielpunkt oder an der richtigen Zielkoordinate abgeworfen wird.

Die Fig. 27 und 28 zeigen die Frachtstücke 1, 1', 1" im Laderaum. Die Fig. 29 und 30 zeigen den Laderaum während des Abwurfs des Frachtstücks 1.

Des Weiteren kann ein erfindungsgemäßes Funktionselement folgende Ausführungsformen haben:

### Ausführungsform 1.1

Funktionselement zum Einbau in einen Frachtraumboden (100) mit einem Frachtraumdeck, umfassend:
- einen Wendekörper (220) mit verschiedenen Funktionseinheiten, z.B. aktiven oder passiven Rolleneinheiten (221, 221', 221"), Riegelelementen (540), Befestigungsschienen, Laufflächen (225),
- mindestens eine Wendekörperhalterung (210, 210'), die in eine Ausnehmung (140a, 140a', 140a") des Frachtraumbodens (100) montierbar ist, um den Wendekörper (220) derart verschwenkbar zu lagern, dass der Wendekörper (220) in verschiedenen Funktionspositionen festsetzbar ist, wobei der Wendekörper (220) derart ausgebildet ist, dass in jeder Funktionsposition mindestens eine der Funktionseinheiten das Frachtraumdeck abschnittsweise bildet oder dieses mitgestaltet,
dadurch gekennzeichnet, dass
die mindestens eine Wendekörperhalterung (210, 210') zur Verankerung mindestens einer Frachtladekomponente, z. B. eines Befestigungselements, eines Führungselements oder dergleichen, an dem Frachtraumboden (100) ausgebildet ist.

### Ausführungsform 1.2

Funktionselement nach Ausführungsform 1.1,
dadurch gekennzeichnet, dass
die Wendekörperhalterung (210, 210') mindestens einen Sitzschienenabschnitt (215a, 215b, 215c, 215a', 215b', 215c') zur Verankerung der mindestens einen Frachtladekomponente umfasst.

### Ausführungsform 1.3

Funktionselement nach einer der Ausführungsformen 1.1 - 1.2,
dadurch gekennzeichnet, dass
der Wendekörper (220) eine Rolleneinheit (221, 221', 221") und eine Lauffläche (225) umfasst.

### Ausführungsform 1.4

Funktionselement nach einer der Ausführungsformen 1.1 - 1.3, insbesondere nach Ausführungsform 1.3,
**dadurch gekennzeichnet**, dass
die Rolleneinheit (221, 221', 221") mindestens eine um eine Rollendrehachse rotierbare Rolle umfasst und derart angeordnet ist, dass die Rollendrehachse der Rolle gegenüber einer von der Lauffläche (225) aufgespannten Ebene gekippt ist, insbesondere einen Schnittwinkel kleiner als 60 Grad hat.

### Ausführungsform 1.5

Funktionselement nach einer der Ausführungsformen 1.1 - 1.4, insbesondere nach Ausführungsform 1.3 oder 1.4,
**dadurch gekennzeichnet**, dass
die Lauffläche (225) ein in dieser versenkbares Befestigungselement, insbesondere mit einem Befestigungsring, umfasst.

### Ausführungsform 1.6

Funktionselement nach einer der Ausführungsformen 1.1 - 1.5,
**dadurch gekennzeichnet**, dass
die mindestens eine Wendekörperhalterung (210, 210') derart ausgebildet ist, dass die Wendekörperhalterung (210, 210') mit dem Frachtraumboden (100), insbesondere mit einer Frachtdeckunterseite des Frachtraumbodens (100) verbindbar, insbesondere verschraubbar, ist.

### Ausführungsform 1.7

Funktionselement nach einer der Ausführungsformen 1.1 - 1.6,
**dadurch gekennzeichnet**, dass
der Wendekörper (220) einen Wendekörperriegel (226) zur Fixierung des Wendekörpers (220) gegenüber dem Frachtraumboden (100) in den einzelnen Funktionsposition umfasst.

### Ausführungsform 1.8

Funktionselement nach einer der Ausführungsformen 1.1 - 1.7, insbesondere nach Ausführungsform 1.7,
**dadurch gekennzeichnet**, dass
der Wendekörperriegel (226) derart angeordnet ist, dass der Wendekörperriegel (226) in den Funktionspositionen von einer Frachtraumdeckoberseite zugänglich ist.

### Ausführungsform 1.9

Funktionselement nach einer der Ausführungsformen 1.1 - 1.8,
dadurch gekennzeichnet, dass
die mindestens eine Wendekörperhalterung (210, 210') zum zumindest teilweisen Halten von zwei Wendekörpern (220) ausgebildet ist.

### Ausführungsform 1.10

Funktionselementesatz, umfassend eine Vielzahl von Funktionselementen gemäß einer der Ausführungsformen 1.1 - 1.9,
**dadurch gekennzeichnet**, dass
der Funktionselementesatz n+1 Wendekörperhalterungen (210, 210') zur Halterung von n Wendekörpern (220) umfasst, wobei die Wendekörper (220) und Wendekörperhalterungen (210, 210') abwechselnd in einer Reihe angeordnet sind, wobei zumindest die Wendekörperhalterungen (210, 210'), die sich zwischen zwei Wendekörpern (220) befinden, derart ausgebildet sind, dass sie die zwei benachbarten Wendekörper (220) halten, wobei jeweils ein Wendekörper (220) von zwei Wendekörperhalterungen (210, 210') gehalten wird.

Des Weiteren kann eine erfindungsgemäße Seitenführung folgende Ausführungsformen haben:

### Ausführungsform 2.1

Seitenführung zur Anbringung an einem Frachtraumboden (100) eines Flugzeugs, um Frachtstücke, insbesondere Container und/oder Paletten, in Längsrichtung (X-Richtung) des Flugzeugs zu führen, umfassend:
- mindestens ein Fußelement (410a, 410b) zum Einleiten der wirkenden Kräfte in den Frachtraumboden (100), wobei das Fußelement (410a, 410b) Fixierelemente (411a, 412a) zum Befestigen der Seitenführung in mindestens einer Schiene (120-130, 120'-129') hat, und
- mindestens ein am Fußelement (410a, 410b) angeordnetes Führungselement (420) mit mindestens einer Führungsfläche (421, 422) zum Führen der Frachtstücke, **dadurch gekennzeichnet**, dass
das Führungselement (420) zumindest teilweise abnehmbar mit den Fußelementen (410a, 410b) verbunden ist.

### Ausführungsform 2.2

Seitenführung nach Ausführungsform 2.1,
**dadurch gekennzeichnet**, dass
die Seitenführung mindestens zwei Fußelemente (410a, 410b) und das Führungselement (420) mindestens eine Führungsschiene (423) umfasst, wobei die Führungsschiene (423) an den Fußelementen (410a, 410b) befestigt ist.

### Ausführungsform 2.3

Seitenführung nach einer der Ausführungsformen 2.1 - 2.2,
**dadurch gekennzeichnet**, dass
mindestens ein Fixierelement (411a, 411b) einen Schnellspannverschluss zum Festsetzen des Fixierelements (411a, 411b) in der Schiene (120-130, 120'-129') umfasst.

### Ausführungsform 2.4

Seitenführung nach einer der Ausführungsformen 2.1 - 2.3,
**dadurch gekennzeichnet**, dass
die Führungsschiene (423) einen mit einem Randbereich mindestens eines Frachtstücks zusammenwirkenden Vorsprung zum Fixieren des Frachtstücks in eine vertikale Richtung (Z-Richtung) des Flugzeugs umfasst.

### Ausführungsform 2.5

Seitenführung nach einer der Ausführungsformen 2.1 - 2.4,
**gekennzeichnet durch**
mindestens ein Riegelelement (540) mit einer Riegelnase (541), das derart angeordnet und ausgebildet ist, dass die Riegelnase (541) aus einer Ruhestellung in eine Verriegelungsstellung zur Fixierung eines Frachtstücks im Führungselement (520) bringbar ist.

### Ausführungsform 2.6

Seitenführung nach einer der Ausführungsformen 2.1 - 2.5,
**dadurch gekennzeichnet**, dass
das Riegelelement (540) derart am Führungselement (520) angeordnet und ausgebildet ist, dass die Riegelnase (541) parallel zu einer Vertikalführungsfläche (521) des Führungselements (520) zwischen Ruhestellung und Verriegelungsstellung verschwenkbar ist.

### Ausführungsform 2.7

Seitenführung nach einer der Ausführungsformen 2.1 - 2.6, insbesondere nach Ausführungsform 2.6,
**dadurch gekennzeichnet**, dass
die Riegelnase (541) zumindest zweiteilig mit einem ersten und einem zweiten Riegelnasenelement (542, 542') ausgebildet ist, die jeweils mit einer Anschlagfläche mit einem Anschlagrand einer Eingriffsausnehmung der Frachtstücke in Eingriff bringbar sind, wobei die Riegelnasenelemente (542, 542') derart bewegbar gelagert sind, dass sich beide Anschlagflächen beim Bewegen von der Verriegelungsstellung in die Ruhestellung von den Anschlagrändern entfernen.

### Ausführungsform 2.8

Seitenführung nach einer der Ausführungsformen 2.1 - 2.7, insbesondere nach Ausführungsform 2.7,
**dadurch gekennzeichnet**, dass
die Riegelnasenelemente (542, 542') derart gegenläufig miteinander verbunden sind, dass beim Bewegen des einen Riegelnasenelements (542, 542') das andere Riegelnasenelement (542, 542') mitgenommen wird.

### Ausführungsform 2.9

Seitenführung nach einer der Ausführungsformen 2.1 - 2.8, insbesondere nach Ausführungsform 2.7 oder 2.8,
**gekennzeichnet durch**
mindestens eine Feststellvorrichtung zum Feststellen der Riegelnasenelemente in der Verriegelungsstellung und/oder der Ruhestellung.

### Ausführungsform 2.10

Seitenführung nach einer der Ausführungsformen 2.1 - 2.9,
insbesondere nach Ausführungsform 2.9,
**dadurch gekennzeichnet**, dass
die Feststellvorrichtung mindestens ein Feststellfederelement zum Einrasten der Feststellvorrichtung bei der Verriegelungsstellung und/oder Ruhestellung der Riegelnasenelemente (542, 542') umfasst.

### Ausführungsform 2.11

Seitenführung nach einer der Ausführungsformen 2.1 - 2.10,
**gekennzeichnet durch**
mindestens einen Bewegungshebel oder einen Anschluss (544) für einen Bewegungshebel zum Bewegen der Riegelnase (541) aus der Ruhestellung in die Verriegelungsstellung.

### Ausführungsform 2.12

Seitenführung nach einer der Ausführungsformen 2.1 - 2.11,
**dadurch gekennzeichnet**, dass
die Seitenführung zur Anbringung an einer Seite des Frachtraumbodens (100) ausgebildet ist.

Des Weiteren kann eine erfindungsgemäße Seitenführung folgende Ausführungsformen haben:

### Ausführungsform 3.1

Seitenführung zur Anbringung an einem Frachtraumboden (100) eines Flugzeugs, um Frachtstücke, insbesondere Container und/oder Paletten, in Längsrichtung (X-Richtung) des Flugzeugs zu führen, umfassend:
- mindestens ein Fußelement (510) zum Einleiten der wirkenden Kräfte in den Frachtraumboden (100),
- mindestens ein am Fußelement (510) angeordnetes Führungselement (520) zum Führen der Frachtstücke,
- mindestens ein Riegelelement (540) mit einer Riegelnase (541), das derart angeordnet und ausgebildet ist, dass die Riegelnase (541) aus einer Ruhestellung in eine Verriegelungsstellung zur Fixierung eines Frachtstücks im Führungselement (520) bringbar ist, wobei das Führungselement (520) gelenkig an dem mindestens einen Fußelement (510) angeordnet ist, um das Führungselement (520) zwischen einer Führungsposition zum Führen der Frachtstücke und einer Aufbewahrungsposition zu verschwenken, wobei das Führungselement (520) und das Fußelement (510) in der Aufbewahrungsposition eine im Wesentlichen plane, begehbare und/oder befahrbare Fläche ausbilden.

### Ausführungsform 3.2

Seitenführung nach Ausführungsform 3.1,
**dadurch gekennzeichnet**, dass
das Führungselement (520) eine Vertikalführungsfläche (521) und eine Horizontalführungsfläche (522) umfasst, wobei das mindestens eine Riegelelement (540) derart am Führungselement (520) angeordnet und ausgebildet ist, dass die Riegelnase (541) in der Verriegelungsstellung über die Horizontalführungsfläche (522) hinausragt.

### Ausführungsform 3.3

Seitenführung nach einer der Ausführungsformen 3.1 - 3.2,
**dadurch gekennzeichnet**, dass
das Riegelelement (540) derart am Führungselement (520) angeordnet und ausgebildet ist, dass die Riegelnase (541) in einer Ebene im Wesentlichen senkrecht zur Horizontalführungsfläche (522) zwischen Ruhestellung und Verriegelungsstellung verschwenkbar ist.

### Ausführungsform 3.4

Seitenführung nach einer der Ausführungsformen 3.1 - 3.3, insbesondere nach Ausführungsform 3.2 oder 3.3,
**dadurch gekennzeichnet**, dass
die Seitenführung derart ausgebildet ist, dass die Horizontalführungsfläche (522) in der Führungsposition gegenüber dem Frachtraumboden (100) zur Bildung einer Führungsrampe für die Frachtstücke geneigt ist.

### Ausführungsform 3.5

Seitenführung nach einer der Ausführungsformen 3.1 - 3.4, insbesondere nach Ausführungsform 3.4,
**dadurch gekennzeichnet**, dass
die Horizontalführungsfläche (522) in der Führungsposition spitzwinklig, insbesondere um ca. 20 Grad, gegenüber dem Frachtraumboden (100) geneigt ist.

### Ausführungsform 3.6

Seitenführung nach einer der Ausführungsformen 3.1 - 3.5 ,
**dadurch gekennzeichnet**, dass
das Führungselement (520) einen Führungsvorsprung (525) umfasst, der bei der Führung der Frachtstücke in eine dafür vorgesehene Nut der Frachtstücke eingreift oder einen Sockel der Frachtstücke umgreift, um Kräfte in vertikale Richtung (Z-Richtung) bezüglich des Frachtraumbodens (100) aufzunehmen.

### Ausführungsform 3.7

Seitenführung nach einer der Ausführungsformen 3.1 - 3.6,
**dadurch gekennzeichnet**, dass
das Führungselement (520) eine Deckelfläche (526) und mindestens ein Stützelement (527, 527') umfasst, wobei das Stützelement (527, 527') derart ausgebildet ist, dass das Stützelement (527, 527') in der Aufbewahrungsposition die Deckelfläche (526) zum Bilden zumindest eines Abschnitts der begehbaren und/oder befahrbaren Fläche gegenüber dem Fußelement (510) und/oder dem Frachtraumboden abstützt.

### Ausführungsform 3.8

Seitenführung nach einer der Ausführungsformen 3.1 - 3.7, insbesondere nach Ausführungsform 3.7,
**dadurch gekennzeichnet**, dass
das mindestens eine Stützelement (527, 527') und/oder ein für das Verschwenken des Führungselements (520) vorgesehenes Drehgelenk derart ausgebildet ist, dass das Führungselement (520) gegenüber der Führungsposition zur Einnahme der Aufbewahrungsposition um weniger als 90 Grad verschwenkbar ist.

### Ausführungsform 3.9

Seitenführung nach einer der Ausführungsformen 3.1 - 3.8, insbesondere nach Ausführungsform 3.7 oder 3.8,
**dadurch gekennzeichnet**, dass
die Deckelfläche (526) mit der Vertikalführungsfläche (521) in Wirkverbindung steht und zum Einleiten der auf die Vertikalführungsfläche (521) wirkenden Kräfte in das Fußelement (510) und/oder in den Frachtraumboden (100) gegenüber der Vertikalführungsfläche (521) geneigt ist.

### Ausführungsformen 3.10

Seitenführung nach einer der Ausführungsformen 3.1 - 3.9,
**dadurch gekennzeichnet**, dass
die Riegelnase (541) zumindest zweiteilig mit einem ersten und einem zweiten Riegelnasenelement (542, 542') ausgebildet ist, die jeweils mit einer Anschlagfläche mit einem Anschlagrand einer Eingriffsausnehmung der Frachtstücke in Eingriff bringbar sind, wobei die Riegelnasenelemente (542, 542') derart bewegbar gelagert sind, dass sich beide Anschlagflächen beim Bewegen von der Verriegelungsstellung in die Ruhestellung von den Anschlagrändern entfernen.

### Ausführungsform 3.11

Seitenführung nach einer der Ausführungsformen 3.1 - 3.10, insbesondere nach Ausführungsform 3.10,
**dadurch gekennzeichnet**, dass
die Riegelnasenelemente (542, 542') derart gegenläufig miteinander verbunden sind, dass beim Bewegen des einen Riegelnasenelements (542, 542') das andere Riegelnasenelement (542, 542') mitgenommen wird.

### Ausführungsform 3.12

Seitenführung nach einer der Ausführungsformen 3.1 - 3.11, insbesondere nach Ausführungsform 3.10 oder 3.11,
**gekennzeichnet durch**
mindestens eine Feststellvorrichtung zum Feststellen der Riegelnasenelemente (542, 542') in der Verriegelungsstellung und/oder der Ruhestellung.

### Ausführungsform 3.13

Seitenführung nach einer der Ausführungsformen 3.1 - 3.12,
insbesondere nach Ausführungsform 3.12,
**dadurch gekennzeichnet**, dass
die Feststellvorrichtung mindestens ein Feststellfederelement zum Einrasten der Feststellvorrichtung bei der Verriegelungsstellung und/oder Ruhestellung der Riegelnasenelemente (542, 542') umfasst.

### Ausführungsform 3.14

Seitenführung nach einer der Ausführungsformen 3.1 - 3.13,
**gekennzeichnet durch**
mindestens einen Bewegungshebel oder einen Anschluss (544) für einen Bewegungshebel zum Bewegen der Riegelnase (541) aus der Ruhestellung in die Verriegelungsstellung.

### Ausführungsform 3.15

Seitenführung nach einer der Ausführungsformen 3.1 - 3.14,
**gekennzeichnet durch**
einen elektrischen und/oder pneumatischen und/oder hydraulischen Antrieb zumindest zum Bewegen der Riegelnase (541) aus der Ruhestellung in die Verriegelungsstellung.

### Ausführungsform 3.16

Seitenführung nach einer der Ausführungsformen 3.1 - 3.15,
**dadurch gekennzeichnet**, dass
das Riegelelement (540) am Führungselement (520) mit diesem verschwenkbar angeordnet ist.

### Ausführungsform 3.17

Seitenführung nach einer der Ausführungsformen 3.1 - 3.16,
**dadurch gekennzeichnet**, dass
die Seitenführung zur Anbringung an einer Seite des Frachtraumbodens (100) ausgebildet ist.

### Ausführungsform 3.18

Frachtbodenelement mit mindestens einer Seitenführung gemäß einer der Ausführungsformen 3.1 - 3.17,
**dadurch gekennzeichnet,** dass
das Fußelement (510) als integraler Bestandteil des Frachtbodenelements (110a, 110b) ausgebildet ist.

Des Weiteren kann eine erfindungsgemäße Fixiervorrichtung folgende Ausführungsformen haben:

### Ausführungsform 4.1

Fixiervorrichtung zum Einleiten einer Zuglast in einen Frachtraumboden (100), insbesondere in einen Frachtraumboden (100) eines Flugzeugs, umfassend:
- eine Verankerung zur Befestigung an dem Frachtraumboden (100),
- ein Fixierelement (320), insbesondere einen Haken oder eine Öse (321), zur Aufnahme der Zuglast,
- ein Kugelgelenk zur gelenkigen Verbindung der Verankerung mit dem Fixierelement (320), wobei das Kugelgelenk derart ausgebildet ist, dass das Fixierelement (320) aus einer Ruheposition in eine Arbeitsposition bringbar ist.

### Ausführungsform 4.2

Fixiervorrichtung nach Ausführungsform 4.1,
**dadurch gekennzeichnet**, dass
die Fixiervorrichtung derart ausgebildet ist, insbesondere mit einer Aufnahme versehen ist, dass das Fixierelement (320) in der Ruheposition überfahrbar ist.

### Ausführungsform 4.3

Fixiervorrichtung nach einer der Ausführungsformen 4.1 - 4.2,
**gekennzeichnet durch**
ein Federelement (334), das derart angeordnet und ausgebildet ist, dass es das Fixierelement (320) in die Ruheposition vorspannt.

### Ausführungsform 4.4

Fixiervorrichtung nach einer der Ausführungsformen 4.1 - 4.3,
**dadurch gekennzeichnet**, dass
die Verankerung ein mit dem Frachtraumboden (100) verbindbares Axiallager mit Lagerring (310) umfasst, der eine Außenmantelfläche (313) hat, die sich im Wesentlichen rotationssymmetrisch um eine Rotationsachse erstreckt, wobei die Außenmantelfläche (313) eine im Wesentliche konvexe, konstante Krümmung hat, und
das Fixierelement (320) einen Gegenlagerring (330) umfasst, der zur Bildung des Kugelgelenks den Lagerring (310) zumindest abschnittsweise umschließt und eine korrespondierend zum Lagerring (310), insbesondere zur Außenmantelfläche (313), ausgebildete konkave Innenmantelfläche (333) hat.

### Ausführungsform 4.5

Fixiervorrichtung nach einer der Ausführungsformen 4.1 - 4.4, insbesondere nach Ausführungsform 4.4,
**dadurch gekennzeichnet**, dass
der Gegenlagerring (330) zur zumindest teilweisen Bildung der Innenmantelfläche (333) zwei Schulterabschnitte (338, 338') mit einem Innendurchmesser (d_{S}) hat, der kleiner ist als ein Außendurchmesser (d_{L}) des Lagerrings (310), wobei die Schulterabschnitte (338, 338') zum Einbringen des Lagerrings (310) abschnittsweise unterbrochen sind.

### Ausführungsform 4.6

Fixiervorrichtung nach einer der Ausführungsformen 4.1 - 4.5, insbesondere nach Ausführungsform 4.5,
**dadurch gekennzeichnet,** dass
mindestens einer der beiden Schulterabschnitte (338, 338') zwei Unterbrechungsabschnitte (339, 339') zum Einbringen des Lagerrings (310) umfasst, die einander gegenüberliegend im Gegenlagerring (330) vorgesehen sind und einen Unterbrechungsinnendurchmesser (d_{U}) haben, der größer als der oder gleich dem Außendurchmesser (d_{L}) des Lagerrings (310) ist.

### Ausführungsform 4.7

Fixiervorrichtung nach einer der Ausführungsformen 4.1 - 4.6, insbesondere nach Ausführungsform 4.6,
**dadurch gekennzeichnet**, dass
die Unterbrechungsabschnitte (339, 339') im Wesentlichen korrespondierend zu einem Profil des Lagerrings ausgebildet sind.

### Ausführungsform 4.8

Fixiervorrichtung nach einer der Ausführungsformen 4.1 - 4.7, insbesondere nach einer der Ausführungsformen 4.4 - 4.7,
**gekennzeichnet durch**
ein längliches Achsenelement zur Bildung des Axiallagers, das abnehmbar in den Lagerring (310) eingesteckt ist.

### Ausführungsform 4.9

Fixiervorrichtung nach einer der Ausführungsformen 4.1 - 4.8, insbesondere nach Ausführungsform 4.8,
**dadurch gekennzeichnet**, dass
der Lagerring (310) ein Innenprofil (316) aufweist, das korrespondierend zum Achsenelement ausgebildet ist, um den Lagerring (310) drehfest am Frachtraumboden (100) zu befestigen.

### Ausführungsform 4.10

Fixiervorrichtung nach einer der Ausführungsformen 4.1 - 4.9, insbesondere nach Ausführungsform 4.9,
**dadurch gekennzeichnet,** dass
das Innenprofil (316) ein Mehrkantprofil umfasst.

### Ausführungsform 4.11

Fixiervorrichtung nach einer der Ausführungsformen 4.1 - 4.10,
**gekennzeichnet durch**
eine Dichtung, insbesondere eine Staubdichtung, zur Abdichtung des Kugelgelenks gegen Außeneinflüsse.

Des Weiteren kann eine erfindungsgemäße Seitenführung folgende Ausführungsformen haben:

### Ausführungsform 5.1

Seitenführung zur Anbringung an einem Frachtraumboden (100) einer Heckklappe und/oder am Heck eines Flugzeugs, um Frachtstücke, insbesondere Container und/oder Paletten, in Längsrichtung (X-Richtung) des Flugzeugs zu führen, umfassend:
mindestens ein längliches Führungselement (520) mit einer Vertikalführungsfläche (521) und mindestens einem Führungsvorsprung (525), der bei der Führung der Frachtstücke in eine dafür vorgesehene Nut der Frachtstücke eingreift oder einen Sockel der Frachtstücke umgreift, um Kräfte in vertikale Richtung (Z-Richtung) bezüglich des Frachtraumbodens (100) aufzunehmen, wobei das Führungselement (520) für einen Abwurf der Frachtstücke einen Halte- (528a) und einen Abwurfabschnitt (528b) aufweist, wobei in dem Abwurfabschnitt (528b) die Frachtstücke nicht durch den mindestens einen Führungsvorsprung (525) in vertikaler Richtung (Z-Richtung) fixiert sind.

### Ausführungsform 5.2

Seitenführung nach Ausführungsform 5.1,
**dadurch gekennzeichnet,** dass
sich der mindestens eine Führungsvorsprung (525) im Wesentlichen über die gesamte Länge des Halteabschnitts (528a) erstreckt.

### Ausführungsform 5.3

Seitenführung nach einer der Ausführungsformen 5.1 - 5.2,
**gekennzeichnet durch:**
mindestens ein Fußelement (510) zum Einleiten der wirkenden Kräfte in den Frachtraumboden (100), wobei das Führungselement (520) gelenkig an dem mindestens einen Fußelement (510) angeordnet ist, um das Führungselement (520) zwischen einer Führungsposition zum Führen der Frachtstücke und einer Aufbewahrungsposition zu verschwenken, wobei das Führungselement (520) und das Fußelement (510) in der Aufbewahrungsposition eine im Wesentlichen plane, begehbare und/oder befahrbare Fläche ausbilden.

### Ausführungsform 5.4

Seitenführung nach einer der Ausführungsformen 5.1 - 5.3, insbesondere nach Ausführungsform 5.3,
**dadurch gekennzeichnet**, dass
das Führungselement (520) eine Deckelfläche (526) und mindestens ein Stützelement (527, 527') umfasst, wobei das Stützelement (527, 527') derart ausgebildet ist, dass das Stützelement (527, 527') in der Aufbewahrungsposition die Deckelfläche (526) zum Bilden zumindest eines Abschnitts der begehbaren und/oder befahrbaren Fläche gegenüber dem Fußelement (510) und/oder dem Frachtraumboden abstützt.

### Ausführungsform 5.5

Seitenführung nach einer der Ausführungsformen 5.1 - 5.4, insbesondere nach Ausführungsform 5.4,
**dadurch gekennzeichnet**, dass
die Deckelfläche (526) mit der Vertikalführungsfläche (521) in Wirkverbindung steht und zum Einleiten der auf die Vertikalführungsfläche (521) wirkenden Kräfte in das Fußelement (510) und/oder in den Frachtraumboden (100) gegenüber der Vertikalführungsfläche (521) geneigt ist.

### Ausführungsform 5.6

Seitenführung nach einer der Ausführungsformen 5.1 - 5.5,
**gekennzeichnet durch**
mindestens ein Riegelelement (540) mit einer Riegelnase (541), das derart angeordnet und ausgebildet ist, dass die Riegelnase (541) aus einer Ruhestellung in eine Verriegelungsstellung zur Fixierung eines Frachtstücks im Führungselement (520) bringbar ist.

### Ausführungsform 5.7

Seitenführung nach einer der Ausführungsformen 5.1 - 5.6, insbesondere nach Ausführungsform 5.6,
**dadurch gekennzeichnet**, dass
das mindestens eine Riegelelement (540) im Halteabschnitt (528a) angeordnet ist.

### Ausführungsform 5.8

Seitenführung nach einer der Ausführungsformen 5.1 - 5.7, insbesondere nach einer der Ausführungsformen 5.6 oder 5.7,
**dadurch gekennzeichnet**, dass
das Riegelelement (540) derart am Führungselement (520) angeordnet und ausgebildet ist, dass die Riegelnase (541) in einer Ebene im Wesentlichen senkrecht zu einer Horizontalführungsfläche (522) zwischen Ruhestellung und Verriegelungsstellung verschwenkbar ist.

### Ausführungsform 5.9

Seitenführung nach einer der Ausführungsformen 5.1 - 5.8, insbesondere nach einer der Ausführungsformen 5.6 - 5.8,
**dadurch gekennzeichnet,** dass
die Riegelnase (541) zumindest zweiteilig mit einem ersten und einem zweiten Riegelnasenelement (542, 542') ausgebildet ist, die jeweils mit einer Anschlagfläche mit einem Anschlagrand einer Eingriffsausnehmung der Frachtstücke in Eingriff bringbar sind, wobei die Riegelnasenelemente (542, 542') derart bewegbar gelagert sind, dass sich beide Anschlagflächen beim Bewegen von der Verriegelungsstellung in die Ruhestellung von den Anschlagrändern entfernen.

### Ausführungsform 5.10

Seitenführung nach einer der Ausführungsformen 5.1 - 5.9, insbesondere nach Ausführungsform 5.9,
**dadurch gekennzeichnet**, dass
die Riegelnasenelemente (542, 542') derart gegenläufig miteinander verbunden sind, dass beim Bewegen des einen Riegelnasenelements (542, 542') das andere Riegelnasenelement (542, 542') mitgenommen wird.

### Ausführungsform 5.11

Seitenführung nach einer der Ausführungsformen 5.1 - 5.10, insbesondere nach Ausführungsform 5.9 oder 5.10,
**gekennzeichnet durch**
mindestens eine Feststellvorrichtung zum Feststellen der Riegelnasenelemente (542, 542') in der Verriegelungsstellung und/oder der Ruhestellung.

### Ausführungsform 5.12

Seitenführung nach einer der Ausführungsformen 5.1 - 5.11,
insbesondere nach Ausführungsform 5.11,
**dadurch gekennzeichnet**, dass
die Feststellvorrichtung mindestens ein Feststellfederelement zum Einrasten der Feststellvorrichtung in der Verriegelungsstellung und/oder Ruhestellung der Riegelnasenelemente (542, 542') umfasst.

### Ausführungsform 5.13

Seitenführung nach einer der Ausführungsformen 5.1 - 5.12,
insbesondere nach einer der Ausführungsformen 5.6 - 5.12,
**gekennzeichnet durch**
mindestens einen Bewegungshebel oder einen Anschluss (544) für einen Bewegungshebel zum Bewegen der Riegelnase (541) aus der Ruhestellung in die Verriegelungsstellung.

### Ausführungsform 5.14

Seitenführung nach einer der Ausführungsformen 5.1 - 5.13,
insbesondere nach einer der Ausführungsformen 5.6 - 5.13,
**gekennzeichnet durch**
einen elektrischen und/oder pneumatischen und/oder hydraulischen Antrieb zum Bewegen der Riegelnase (541) aus der Ruhestellung in die Verriegelungsstellung.

### Ausführungsform 5.15

Seitenführung nach einer der Ausführungsformen 5.1 - 5.14,
insbesondere nach einer der Ausführungsformen 5.6 - 5.14,
**dadurch gekennzeichnet**, dass
das Riegelelement (540) am Führungselement (520) mit diesem verschwenkbar angeordnet ist.

### Ausführungsform 5.16

Seitenführung nach einer der Ausführungsformen 5.15,
**dadurch gekennzeichnet**, dass
die Seitenführung zur Anbringung an der Seite des Frachtraumbodens (100) oder der Heckklappe ausgebildet ist.

### Ausführungsform 5.17

Frachtraumbodenelement mit mindestens einer Seitenführung gemäß einer der Ausführungsformen 5.1 - 5.16,
**dadurch gekennzeichnet**, dass
das Fußelement (510) als integraler Bestandteil des Frachtbodenelements (110a, 110b) ausgebildet ist.

### Ausführungsform 5.18

Heckklappe mit einem Frachtraumboden nach Ausführungsform 5.17,
**gekennzeichnet durch**
mindestens zwei Seitenführungen die jeweils an den Seiten der Heckklappe angeordnet sind.

Des Weiteren kann eine erfindungsgemäße Vorrichtung zum Abwerfen von Frachtstücken folgende Ausführungsformen haben:

### Ausführungsform 6.1

Vorrichtung zum Abwerfen von Frachtstücken (1,1',1") aus einem Frachtraum eines Flugzeuges aus der Luft, umfassend:
a. eine Steuerung (610) mit einer Vielzahl von Sensoreingängen (611), Steuerungseingängen und Betätigungsausgängen,
b. Sensoren, welche einen Flugzustand des Flugzeugs, z. B. Geschwindigkeit, Steigungswinkel, Flugweg, Flugrichtung und/oder Beschleunigung, der Steuerung (610) übermitteln,
c. Riegelelemente (540), welche durch Entriegelungssignale der Steuerung (610) von einer Verriegelungsstellung, in welcher die Frachtstücke (1,1',1") im Frachtraum befestigt sind in eine Auslösestellung bringbar sind, in welcher die Frachtstücke (1,1',1") aus dem Frachtraum heraus bewegbar sind.

### Ausführungsform 6.2

Vorrichtung nach Ausführungsform 6.1,
**gekennzeichnet durch**
eine Fallschirmauslösevorrichtung (640), die auf ein Abwurfsignal aus der Steuerung (610) hin Fallschirmvorrichtungen derart auslöst, dass diese die Frachtstücke (1,1',1") aus dem Frachtraum herausziehen.

### Ausführungsform 6.3

Vorrichtung nach Ausführungsform 6.1 oder 6.2,
**gekennzeichnet durch**
eine manuell betätigbare Schalteinrichtung (650),
insbesondere einen Totmannschalter, der mit der Steuerung (610) derart verbunden ist, dass nur bei Betätigung der Schalteinrichtung (650) die Riegelelemente (540) und/oder die Fallschirmauslösevorrichtung (645) betätigbar sind.

### Ausführungsform 6.4

Vorrichtung nach einer der Ausführungsformen 6.1 - 6.3,
**dadurch gekennzeichnet**, dass
die Sensoren mindestens einen Neigungswinkelsensor umfassen und die Steuerung (610) derart ausgebildet ist, dass die Fallschirmauslösevorrichtung (645) nur dann ausgelöst wird, wenn eine vorbestimmte Ausrichtung des Flugzeugs eingenommen wird.

### Ausführungsform 6.5

Vorrichtung nach einer der Ausführungsform 6.1 - 6.4,
**dadurch gekennzeichnet,** dass
die Sensoren einen Öffnungssensor umfassen, welcher der Steuerung (610) einen Öffnungszustand einer Frachtraumklappe (50) und/oder einen Neigungswinkel der Frachtraumklappe (50) gegenüber dem Frachtraum übermittelt.

### Ausführungsform 6.6

Vorrichtung nach einer der Ausführungsformen 6.1 - 6.5,
**dadurch gekennzeichnet**, dass
die Sensoren Riegelsensoren umfassen, welche mindestens einen Verriegelungszustand und/oder mindestens eine Position und/oder mindestens eine Federvorspannung eines Federelements und/oder mindestens eine Motorstromaufnahme und/oder mindestens eine Bremsentemperatur und/oder eine Platinentemperatur und/oder mindestens eine Phasenverschiebung der Eingangsspannung der Riegelelemente (540) erfassen.

### Ausführungsform 6.7

Vorrichtung nach einer der Ausführungsformen 6.1 - 6.6,
**dadurch gekennzeichnet**, dass
die Sensoren Kraftmesseinrichtungen umfassen, welche eine Kraft messen, mit der Fallschirmvorrichtungen (5) die Frachtstücke aus dem Frachtraum herausziehen, und dass Abtrennvorrichtungen (645) von der Steuerung derart ansteuerbar sind, dass die Fallschirmvorrichtungen (5) dann abgetrennt werden, wenn die Kraft einen vorbestimmten Wert überschreitet.

### Ausführungsform 6.8

Vorrichtung nach einer der Ausführungsformen 6.1 - 6.7,
**gekennzeichnet durch**
eine Vielzahl von im Flugzeug angeordneten Schalttafeln zum Anzeigen von Zuständen der Vorrichtung zum Abwerfen von Frachtstücken sowie zum Eingeben von Steuersignalen an die Steuerung (610).

### Ausführungsform 6.9

Vorrichtung nach einer der Ausführungsformen 6.1 - 6.8,
**dadurch gekennzeichnet,** dass
die Sensoren Sekundärsensoren zum Erfassen von Zuständen von Sekundärfunktionseinrichtungen, z.B. Fallschirmauswerfvorrichtung (640), Fallschirmabtrennvorrichtung (645), Fallschirmleinenrückholwinde, umfassen.

### Ausführungsform 6.10

Vorrichtung nach einer der Ausführungsformen 6.1 - 6.9,
**gekennzeichnet durch**
eine Testvorrichtung, welche dazu ausgebildet ist, mindestens ein Riegelelement (540) vor einem möglichen Abwurf zu betätigen und Sensorsignale bezüglich des Riegelelements (540) zu empfangen, um an Hand eines Vergleichs der empfangenen Sensorsignale mit Sollwerten festzustellen, ob das mindestens eine Riegelelement (540) funktionstüchtig ist.

### Ausführungsform 6.11

Vorrichtung nach einer der Ausführungsformen 6.1 - 6.10,
**gekennzeichnet durch**
eine Leseeinrichtung, insbesondere eine RFID-Tag-Leseeinrichtung, zum Lesen einer an den Frachtstücken befestigten Kennzeichnung, um die Ladereihenfolge der Frachtstücke zu kontrollieren.

### Ausführungsform 6.12

Vorrichtung nach einer der Ausführungsformen 6.1-6.11, insbesondere nach Ausführungsform 6.11,
**dadurch gekennzeichnet,** dass
die Leseeinrichtung nahe einer Frachtraumklappe (50) oder Frachtraumtür installiert ist, um eine Vielzahl von Kennzeichnungen beim Beladen des Frachtraums zu erfassen.

### Bezugszeichenliste

- A: Symmetrieebene
- 1, 1', 1": Frachtstück
- 5: Fallschirm
- 10, 10': Querriegel
- 20: Längsriegel
- 50: Heckklappe
- 100: Frachtraumboden
- 101, 101': Querträger
- 103: Frachtraumbodenverbindungsabschnitt
- 110a, 110b: Frachtraumbodenelement
- 120 bis 130, 120' bis 129': Schienen
- 140, 140': Ausnehmungsabschnitte
- 140a, 140a', 140a': Längsausnehmung
- 141b, 141b', 141b": Ellipsenausnehmung
- 150a, 150b: Vollsitzschienenabschnitt
- 155, 155b, 155a', 155b': Teilsitzschienenabschnitt
- 200, 200', 200": Multifunktionselement
- 210, 210': Wendekörperhalterung
- 215a, 215a' 215b, 215c,: Teilsitzschienenabschnitt
- 215b', 215c': Vollsitzschienenabschnitt
- 217: Wendekörperdrehachse
- 220: Wendekörper
- 221, 221', 221": Rollen
- 223: Öffnung
- 225: Lauffläche
- 226: Wendekörperriegel
- 227, 227': Wendekörperriegelaufnahme
- 300: Fixiervorrichtung
- 310: Lagerring
- 313: Außenmantelfläche
- 316: Innenprofil
- 317: Radialausnehmung
- 318: Drehachse
- 320: Fixierelement
- 321: Öse
- 330: Gegenlagerring
- 333: Innenmantelfläche
- 334: Spiralfeder
- 335: Dornfortsatz
- 336: Dornfortsatzaufnahme
- 338, 338': Schulterabschnitt
- 339, 339': Unterbrechungsabschnitt
- 400, 400': Seitenführung
- 401, 401b: Führungsrollen
- 402, 402b: Befestigungsschraube
- 410a, 410b: Fußelement
- 411a: vorderes Fixierelement
- 412a: hinteres Fixierelement
- 420: Führungselement
- 421: Vertikalführungsfläche
- 422: Horizontalführungsfläche
- 423: Führungsschiene
- 424: Führungsschienenfortsatz
- 500: Seitenführung
- 510, 510': Fußelement
- 512: Riegelaufnahmebereich
- 520: Führungselement
- 521: Vertikalführungsfläche
- 522: Horizontalführungsfläche
- 525: Führungsvorsprung
- 526: Deckelfläche
- 527, 527': Stützabschnitt
- 528a: Halteabschnitt
- 528b: Abwurfabschnitt
- 529: Endabschnitt
- 530: Drehgelenk
- 540: Riegelelement
- 541: Riegelnase
- 542, 542': Riegelnasenelement
- 544: Betätigungshebelanschluss
- 550: Abdeckklappe
- 552: Abdeckklappengelenk
- 600: Abwurfkontrollsystem
- 610: Steuerung
- 611: Sensorsignal
- 620: Flugdatencomputer
- 630: Positionsbestimmungseinrichtung
- 640: Fallschirmauslösevorrichtung
- 645: Fallschirmabkopplungsvorrichtung
- 650: Handsteuereinrichtung
- 660: RFID-Tag-Leseeinrichtung
- d_{L}: Lagerring-Außendurchmesser
- d_{H}: Gegenlager-Innendurchmesser
- d_{S}: Schulterabschnitt-Innendurchmesser
- d_{U}: Unterbrechungs-Innendurchmesser

## Patentansprüche

1. Frachtraumboden für einen Frachtraum eines Flugzeuges, umfassend eine Vielzahl von Paneelen (110a, 110b) zur Bildung des Frachtraumbodens, wobei die Paneele (110a, 110b) Schienenabschnitte zur Bildung von sich über mehrere Profilpaneele (110a, 110b) erstreckende Schienen (120-130, 120'-129') haben, die In einer Längsrichtung (X-Richtung) des Flugzeuges angeordnet sind, **dadurch gekennzeichnet, dass** die Schienenabschnitte (150a, 150b, 150a', 150b') Vollsitzschienenabschnitte (150a, 150b) und Teilsitzschienenabschnitte (155a, 155a', 155b, 155b') zur Befestigung von Frachtladekomponenten, insbesondere von Querriegeln (10) oder Seitenführungselementen (400, 500), umfassen.

2. Frachtraumboden nach Anspruch 1,
**dadurch gekennzeichnet, dass**
die Paneele (110a, 110b) als Strangpressprofilpaneele ausgebildet sind.

3. Frachtraumboden nach Anspruch 1 oder 2,
**dadurch gekennzeichnet, dass**
in Querrichtung (Y-Richtung) des Flugzeuges maximal zehn, insbesondere maximal acht, insbesondere maximal sechs, insbesondere maximal vier, Paneele (110a, 110b) zur Bildung des Frachtraumbodens angeordnet sind.

4. Frachtraumboden nach einem der vorhergehenden Ansprüche,
**dadurch gekennzeichnet, dass**
mindestens zwei Schienen (120-130, 120'-129') mit einem derart geringen Abstand, insbesondere kleiner als 30 cm oder 20 cm, zueinander angeordnet sind, dass sich in diesen mindestens eine Frachtladekomponente, insbesondere ein Querriegel (10) oder ein Seitenführungselement (400, 500), zur Aufnahme von in Querrichtung (Y-Richtung) des Flugzeugs wirkenden Kräften befestigen lässt.

5. Frachtraumboden nach einem der vorhergehenden Ansprüche,
**dadurch gekennzeichnet, dass**
eine Vielzahl der Schienen (120-130, 120'-129') paarweise derart voneinander beabstandet angeordnet sind, dass sich in diesen Frachtladekomponenten zur Fixierung von Frachtstücken mit normierter Breite, insbesondere mit einer Breite von ca. 223 cm oder 243 cm oder 274 cm oder 317 cm, befestigen lassen.

6. Frachtraumboden nach einem der vorhergehenden Ansprüche,
**dadurch gekennzeichnet, dass**
der Frachtraumboden
- mindestens ein Paar von Schienen (120-130, 120'-129') mit einem Abstand von ca. 317 cm; und/oder
- mindestens ein Paar von Schienen (120-130, 120'-129') mit einem Abstand von ca. 297 cm; und/oder
- mindestens ein Paar von Schienen (120-130, 120'-129') mit einem Abstand von ca. 223 cm; und/oder
- mindestens ein Paar von Schienen (120-130, 120'-129') mit einem Abstand von ca. 170 cm; und/oder
- mindestens ein Paar von Schienen (120-130, 120'-129') mit einem Abstand von ca. 150 cm; und/oder
- mindestens ein Paar von Schienen (120-130, 120'-129') mit einem Abstand von ca. 139 cm; und/oder
- mindestens ein Paar von Schienen (120-130, 120'-129') mit einem Abstand von ca. 109cm; und/oder
- mindestens ein Paar von Schienen (120-130, 120'-129') mit einem Abstand von ca. 94 cm; und/oder
- mindestens ein Paar von Schienen (120-130, 120'-129') mit einem Abstand von ca. 41 cm umfasst.

7. Frachtraumboden nach einem der vorhergehenden Ansprüche,
**gekennzeichnet durch**
zusätzliche Vollsitzschienenabschnitte (215b, 215c, 215b', 215c') und/oder Teilsitzschienenabschnitte (215a, 215a') zur Aufnahme von Frachtladekomponenten und zur Verwendung als Befestigungspunkte.

8. Frachtraumboden nach einem der vorhergehenden Ansprüche,
**dadurch gekennzeichnet, dass**
die zusätzlichen Vollsitzschienenabschnitte (215a, 215b, 215c, 215a', 215b', 215c') und/oder Teilsitzschienenabschnitte eine geringe Länge, insbesondere kleiner als 50 cm, insbesondere kleiner als 30 cm, insbesondere kleiner als 10 cm, haben.

9. Frachtraumboden nach einem der vorhergehenden Ansprüche,
**dadurch gekennzeichnet, dass**
die Paneele (110a, 110b) Ausnehmungen (140a, 140a', 140a") zur Aufnahme von Montageelementen, insbesondere mit zusätzlichen Sitzschienenabschnitten (215a, 215b, 215c, 215a', 215b', 215c'), umfassen.

10. Frachtraumboden nach einem der vorhergehenden Ansprüche, insbesondere nach Anspruch 9,
**dadurch gekennzeichnet, dass**
die Ausnehmungen (140a, 140a', 140a") zumindest teilweise über Querträgern des Frachtraumbodens ausgebildet sind.

11. Frachtraumboden nach einem der vorhergehenden Ansprüche,
**dadurch gekennzeichnet, dass**
die Paneele (110a, 110b) Ausnehmungen (140a, 140a', 140a") zur Aufnahme von versenkbaren und/oder verschwenkbaren Supportelementen, insbesondere Rolleneinheiten (221 - 221"), umfassen.

12. Frachtraumboden nach einem der vorhergehenden Ansprüche, insbesondere nach Anspruch 10 oder 11,
**dadurch gekennzeichnet, dass**
die Ausnehmungen (140a, 140a', 140a") zur Beförderung von Frachtstücken, insbesondere Container und/oder Paletten, mittels der Supportelemente in einem Raster angeordnet sind.

13. Frachtraumboden nach einem der vorhergehenden Ansprüche,
**dadurch gekennzeichnet, dass**
die Paneele (110a, 110b) als Hohlprofil mit mehreren Kammern ausgebildet ist, wobei die Kammern zur Bildung eines sich über mehrere Paneele (110a, 110b) erstreckenden Zu- und/oder Ableitungssystem in den Paneelen (110a, 110b) angeordnet sind.

14. Frachtraumboden nach einem der vorhergehenden Ansprüche, insbesondere nach Anspruch 13,
**dadurch gekennzeichnet, dass**
das Zuleitungssystem zum Anschluss an eine Warmluftquelle, insbesondere an eine Ausleitung einer Antriebsturbine des Flugzeugs, ausgebildet ist.

15. Frachtraumboden nach einem der vorhergehenden Ansprüche,
**dadurch gekennzeichnet, dass**
mindestens eine Schiene (120-130, 120'-129') zur Aufnahme einer Seitenführung (400, 500) am Rand des Frachtraumbodens angeordnet ist.

## Claims

1. Cargo hold floor for a cargo hold of an aircraft, comprising a multiplicity of panels (110a, 110b) for forming the cargo hold floor, wherein the panels (110a, 110b) have rail portions for forming rails (120-130, 120'-129') that extend over a plurality of profile panels (110a, 110b), which rails are arranged in a longitudinal direction (X direction) of the aircraft,
**characterised in that**
the rail portions (150a, 150b, 150a', 150b') comprise full-seat rail portions (150a, 150b) and part-seat rail portions (155a, 155a', 155b, 155b') for securing cargo loading components, especially cross-bars (10) or lateral guide elements (400, 500).

2. Cargo hold floor according to claim 1,
**characterised in that**
the panels (110a, 110b) are in the form of extruded profile panels.

3. Cargo hold floor according to claim 1 or 2,
**characterised in that**
a maximum of ten, especially a maximum of eight, especially a maximum of six, especially a maximum of four, panels (110a, 110b) are arranged in the transverse direction (Y direction) of the aircraft to form the cargo hold floor.

4. Cargo hold floor according to any one of the preceding claims,
**characterised in that**
at least two rails (120-130, 120'-129') are arranged a sufficiently small distance apart, especially less than 30 cm or 20 cm apart, that at least one cargo loading component, especially a cross-bar (10) or a lateral guide element (400, 500), can be secured therein to receive forces acting in the transverse direction (Y direction) of the aircraft.

5. Cargo hold floor according to any one of the preceding claims,
**characterised in that**
a multiplicity of the rails (120-130, 120'-129') are arranged in pairs spaced apart from one another in such a way that cargo loading components for fixing items of cargo of standardised width, especially having a width of about 223 cm or 243 cm or 274 cm or 317 cm, can be secured therein.

6. Cargo hold floor according to any one of the preceding claims,
**characterised in that**
the cargo hold floor comprises
- at least one pair of rails (120-130, 120'-129') having a spacing of about 317 cm; and/or
- at least one pair of rails (120-130, 120'-129') having a spacing of about 297 cm; and/or
- at least one pair of rails (120-130, 120'-129') having a spacing of about 223 cm; and/or
- at least one pair of rails (120-130, 120'-129') having a spacing of about 170 cm; and/or
- at least one pair of rails (120-130, 120'-129') having a spacing of about 150 cm; and/or
- at least one pair of rails (120-130, 120'-129') having a spacing of about 139 cm; and/or
- at least one pair of rails (120-130, 120'-129') having a spacing of about 109 cm; and/or
- at least one pair of rails (120-130, 120'-129') having a spacing of about 94 cm; and/or
- at least one pair of rails (120-130, 120'-129') having a spacing of about 41 cm.

7. Cargo hold floor according to any one of the preceding claims,
**characterised by**
additional full-seat rail portions (215b, 215c, 215b', 215c') and/or part-seat rail portions (215a, 215a') for receiving cargo loading components and for use as securing points.

8. Cargo hold floor according to any one of the preceding claims,
**characterised in that**
the additional full-seat rail portions (215a, 215b, 215c, 215a', 215b', 215c') and/or part-seat rail portions are of short length, especially less than 50 cm, especially less than 30 cm, especially less than 10 cm.

9. Cargo hold floor according to any one of the preceding claims,
**characterised in that**
the panels (110a, 110b) comprise recesses (140a, 140a', 140a") for receiving mounting elements, especially having additional seat rail portions (215a, 215b, 215c, 215a', 215b', 215c').

10. Cargo hold floor according to any one of the preceding claims, especially according to claim 9,
**characterised in that**
the recesses (140a, 140a', 140a") are at least in part formed above crossmembers of the cargo hold floor.

11. Cargo hold floor according to any one of the preceding claims,
**characterised in that**
the panels (110a, 110b) comprise recesses (140a, 140a', 140a") for receiving lowerable and/or pivotable support elements, especially roller units (221-221").

12. Cargo hold floor according to any one of the preceding claims, especially according to claim 10 or 11,
**characterised in that**
the recesses (140a, 140a', 140a") are arranged in a grid pattern to convey items of cargo, especially containers and/or pallets, by means of the support elements.

13. Cargo hold floor according to any one of the preceding claims,
**characterised in that**
the panels (110a, 110b) are in the form of hollow profiles having a plurality of chambers, the chambers being arranged in the panels (110a, 110b) to form a supply and/or discharge system that extends over a plurality of panels (110a, 110b).

14. Cargo hold floor according to any one of the preceding claims, especially according to claim 13,
**characterised in that**
the supply system is arranged for connection to a source of hot air, especially to an outlet from a drive turbine of the aircraft.

15. Cargo hold floor according to any one of the preceding claims,
**characterised in that**
at least one rail (120-130, 120'-129') is arranged at the edge of the cargo hold floor to receive a lateral guide means (400, 500).

## Revendications

1. Plancher de soute pour une soute d'avion, comprenant une multiplicité de panneaux (110a, 110b) pour la formation du plancher de soute, dans lequel les panneaux (110a, 110b) comportent des parties de rail pour la formation de rails (120-130, 120'-129') s'étendant sur plusieurs panneaux profilés (110a, 110b) et qui sont disposées dans une direction longitudinale (direction X) de l'avion, **caractérisé en ce que** les parties de rail (150a, 150b, 150a', 150b') comprennent des parties de rail d'appui complet (150a, 150b) et des parties de rail d'appui partiel (155a, 155a', 155b, 155b') pour la fixation de composants de chargement de fret, en particulier de verrous transversaux (10) ou d'éléments de guidage latéraux (400, 500).

2. Plancher de soute selon la revendication 1, **caractérisé en ce que** les panneaux (110a, 110b) sont formés par des panneaux profilés extrudés.

3. Plancher de soute selon la revendication 1 ou 2, **caractérisé en ce qu'**un maximum de dix, en particulier un maximum de huit, en particulier encore un maximum de six, et en particulier encore un maximum de quatre panneaux (110a, 110b) sont disposés dans la direction transversale (direction Y) de l'avion pour former le plancher de soute.

4. Plancher de soute selon l'une quelconque des revendications précédentes, **caractérisé en ce qu'**au moins deux rails (120-130, 120'-129') sont disposés l'un par rapport à l'autre avec un écartement tellement faible, en particulier inférieur à 30 cm ou 20 cm, qu'au moins un composant de chargement de fret, en particulier un verrou transversal (10) ou un élément de guidage latéral (400, 500), puisse être fixé dans celui-ci pour reprendre des forces agissant dans la direction transversale (direction Y) de l'avion.

5. Plancher de soute selon l'une quelconque des revendications précédentes, **caractérisé en ce qu'**une multiplicité des rails (120-130, 120'-129') sont disposés par paires avec un écartement l'un de l'autre tel que des composants de chargement de fret puissent être fixés dans celui-ci pour la fixation de pièces de fret de largeur normalisée, en particulier avec une largeur d'environ 223 cm ou 243 cm ou 274 cm ou 317 cm.

6. Plancher de soute selon l'une quelconque des revendications précédentes, **caractérisé en ce que** le plancher de soute comprend
- au moins une paire de rails (120-130, 120'-129') avec un écartement d'environ 317 cm; et/ou
- au moins une paire de rails (120-130, 120'-129') avec un écartement d'environ 297 cm; et/ou
- au moins une paire de rails (120-130, 120'-129') avec un écartement d'environ 223 cm; et/ou
- au moins une paire de rails (120-130, 120'-129') avec un écartement d'environ 170 cm; et/ou
- au moins une paire de rails (120-130, 120'-129') avec un écartement d'environ 150 cm; et/ou
- au moins une paire de rails (120-130, 120'-129') avec un écartement d'environ 139 cm; et/ou
- au moins une paire de rails (120-130, 120'-129') avec un écartement d'environ 109 cm; et/ou
- au moins une paire de rails (120-130, 120'-129') avec un écartement d'environ 94 cm; et/ou
- au moins une paire de rails (120-130, 120'-129') avec un écartement d'environ 41 cm.

7. Plancher de soute selon l'une quelconque des revendications précédentes, **caractérisé par** des parties supplémentaires de rail d'appui complet (215b, 215c, 215b', 215c') et/ou des parties supplémentaires de rail d'appui partiel (215a, 215a') destinées à recevoir des composants de chargement de fret et à être utilisées comme points de fixation.

8. Plancher de soute selon l'une quelconque des revendications précédentes, **caractérisé en ce que** les parties supplémentaires de rail d'appui complet (215a, 215b, 215c, 215a', 215b', 215c') et/ou les parties supplémentaires de rail d'appui partiel présentent une faible longueur, en particulier inférieure à 50 cm, en particulier encore inférieure à 30 cm, et en particulier encore inférieure à 10 cm.

9. Plancher de soute selon l'une quelconque des revendications précédentes, **caractérisé en ce que** les panneaux (110a, 110b) présentent des évidements (140a, 140a', 140a") destinés à recevoir des éléments de montage, en particulier avec des parties de rail d'appui supplémentaires (215a, 215b, 215c, 215a', 215b', 215c').

10. Plancher de soute selon l'une quelconque des revendications précédentes, en particulier la revendication 9, **caractérisé en ce que** les évidements (140a, 140a', 140a") sont formés au moins partiellement au-dessus de traverses du plancher de soute.

11. Plancher de soute selon l'une quelconque des revendications précédentes, **caractérisé en ce que** les panneaux (110a, 110b) présentent des évidements (140a, 140a', 140a") destinés à recevoir des éléments de support escamotables et/ou pivotants, en particulier des unités de galets (221-221").

12. Plancher de soute selon l'une quelconque des revendications précédentes, en particulier la revendication 10 ou 11, **caractérisé en ce que** les évidements (140a, 140a', 140a") destinés à transporter des pièces de fret, en particulier des conteneurs et/ou des palettes, au moyen des éléments de support sont disposés suivant une grille.

13. Plancher de soute selon l'une quelconque des revendications précédentes, **caractérisé en ce que** les panneaux (110a, 110b) sont réalisés sous forme de profilés creux à plusieurs chambres, dans lequel les chambres sont disposées de façon à former dans les panneaux (110a, 110b) un réseau de conduits d'arrivée et d'évacuation s'étendant sur plusieurs panneaux (110a, 110b).

14. Plancher de soute selon l'une quelconque des revendications précédentes, en particulier la revendication 13, **caractérisé en ce que** le réseau de conduits d'arrivée est conçu pour être raccordé à une source d'air chaud, en particulier à une conduite de sortie d'une turbine d'entraînement de l'avion.

15. Plancher de soute selon l'une quelconque des revendications précédentes, **caractérisé en ce qu'**au moins un rail (120-130, 120'-129') destiné à recevoir un guidage latéral (400, 500) est disposé sur le bord du plancher de soute.
